(19) **Europäisches Patentamt**
**European Patent Office**
**Office européen des brevets**

(11) **EP 3 706 544 B1**

(12) **EUROPEAN PATENT SPECIFICATION**

| | |
|---|---|
| (45) Date of publication and mention of the grant of the patent: **15.12.2021 Bulletin 2021/50** | (51) Int Cl.: **A01D 41/12** *(2006.01)* **A01B 79/00** *(2006.01)* |
| (21) Application number: **18818980.7** | (86) International application number: **PCT/DK2018/050295** |
| (22) Date of filing: **09.11.2018** | (87) International publication number: **WO 2019/091535 (16.05.2019 Gazette 2019/20)** |

(54) **A SYSTEM AND A METHOD FOR OPTIMIZING A HARVESTING OPERATION**

SYSTEM UND VERFAHREN ZUR OPTIMIERUNG EINES ERNTEVORGANGS

SYSTÈME ET PROCÉDÉ D'OPTIMISATION D'UNE OPÉRATION DE RÉCOLTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2017 DK PA201700637**

(43) Date of publication of application:
**16.09.2020 Bulletin 2020/38**

(73) Proprietor: **Agro Intelligence ApS**
**8200 Aarhus N (DK)**

(72) Inventors:
• **GREEN, Ole**
**6940 Lem St. (DK)**

• **EDWARDS, Gareth Thomas Charles**
**8000 Aarhus C (DK)**

(74) Representative: **Rasmussen, Martin Hoffgaard et al**
**Otello Law Firm**
**Dalgasgade 25, 8.**
**7400 Herning (DK)**

(56) References cited:
**WO-A1-00/35265        DE-A1-102008 021 785**
**US-A1- 2011 213 531        US-A1- 2012 265 412**

**Description**

**Field of the invention**

The present invention generally relates to the field of optimizing work trajectories of agricultural working vehicles for working a field.

More specifically the present invention relates in a first aspect to a support system for providing support in a harvesting operation in an agricultural field, wherein the harvesting operation involves a harvester and one or more transport vehicles for transporting harvested crops.

In a second aspect the present invention relates to a method for supporting a harvesting operation in an agricultural field, wherein the harvesting operation involves a harvester and one or more transport vehicles for transporting harvested crops.

In a third aspect the present invention relates to a computer program product, which when loaded or operating on a system according to the first aspect of the present invention, is being adapted to perform the method according to the second aspect of the present invention.

In a fourth aspect the present invention relates to a harvester for harvesting an agricultural crop which is being grown in an agricultural field, wherein the harvester is comprising a support system according to the first aspect of the present invention.

In a fifth aspect the present invention relates to a harvesting fleet comprising a harvester according to the fourth aspect in combination with one or more transport vehicles.

In a sixth aspect the present invention relates to a use of a support system according to the first aspect of the present invention; or of a harvester according to the fourth aspect of the present invention, or of a harvesting fleet according to the fifth aspect of the present invention for supporting a harvesting operation during harvesting an agricultural crop in an agricultural field.

**Background of the invention**

Within the field of agriculture relating to harvesting crops it is customary to utilize a harvester which is designed for cutting the crop plants and separating at least part of the crop from the rest of the plant and finally to store in an on-board container the crop harvested.

As the capacity of the on-board container in the harvester usually is not sufficiently large to contain the crops harvested from a whole agricultural field, a harvesting operation is typically performed by using a harvester for harvesting the crops in combination with one or more transport vehicles for transporting unloaded crops from the harvester to a storage area located outside the crop field. Some types of crops are very sensitive in respect of the optimum time of harvesting. Accordingly, in respect of some types of crops, the value of the harvested crops greatly depends on whether or not the crops have been harvested at the optimum time. In tempered climates the weather usually varies from one day to the other and therefore also periods with wet weather coinciding with the time at which the crops have ripened and ready for harvest may influence the value of the harvested crops. Hence, when harvesting crops the farmer aims at harvesting at a point in time where the crops have reached an optimum degree of ripening and at the same time he seeks to harvest at a point in time where the moisture content in it will be not too high. In case the moisture content of the crops is too high huge expensed need to be spend drying the crops, at least in respect of harvesting cereal types of crops.

Accordingly when seeking to harvest at an optimum time there are often only a quite small time window available for obtaining an optimum value of the crops and thus an optimum economy of the harvesting operation.

In order to avoid destroying unharvested crops by the transport vehicle it is preferred that these transport vehicles upon catching up with the harvester and on their return trip to the storage area for crops outside the agricultural field only drive in the parts of the field which have already been harvested. Furthermore, it is preferred that these transport vehicles only drive in the tracks that are already present in the field.

For this reason it may take some time for the transport vehicles to arrive at the harvester for performing the crop unloading operation of the harvester.

In case, during the harvesting operation itself, it happens that the transport vehicles fail to be present at the harvester when the load of crops of the harvester is full, the harvester needs to stop harvesting and will have to await the arrival of an available empty transport vehicle. Such lack of coordination between the harvester on the one hand and the one or more transport vehicle on the other hand obviously represents a non-optimum harvesting operation because of time spend waiting leading to an overall prolonged harvesting operation.

Moreover, non-coordinating the individual trajectories and positions at given times of the transport vehicles may lead to unnecessary long driving trajectories in respect of these vehicles which in turn leads to excessive fuel consumption and mechanical wear on these vehicles: A non-optimized harvesting scheme of a harvesting fleet may even involve more vehicles than what would otherwise actually be necessary.

In addition, a non-optimized harvesting scheme of a harvesting fleet may lead to excessive soil compaction which in turn may have an impact on subsequent year's crop yield.

Finally, in a situation where the operator of the harvester and the operators of the transport vehicle do not follow an optimally coordinated harvesting scheme, enhanced stress levels may result in the individually operators and hence this problem poses health concerns.

Document US 2011/213531 A1 discloses a support system according to the preamble of claim 1.

Accordingly a need persists for aiding in optimizing trajectories in an agricultural field to be followed by transport vehicles upon driving between a harvester and a storage area located outside that field for transporting the harvested crops.

It is an objective of the present invention to provide inter alia systems, uses and methods for optimizing trajectories in an agricultural field to be followed by transport vehicles upon driving between a harvester and a storage area located outside that field, thereby alleviating or even eliminating the problems set out above in respect of the prior art harvesting operations.

**Brief description of the invention**

This objective is achieved by the present invention in its first, second, third, fourth, fifth and sixth aspect respectively.

Accordingly, in a first aspect, the present invention relates to a support system for providing support in a harvesting operation in an agricultural field, said harvesting operation involving a harvester and one or more transport vehicles for transporting harvested crops; wherein said support system comprises:

a mapping unit configured for receiving information associated with coordinates relating to the geometry of said agricultural field; and for receiving information relating to an estimated crop yield distribution of said agricultural field;

a capacity parameter unit configured for i) receiving one or more capacity parameters relating to the capacity of said harvester; and for ii) receiving one or more capacity parameters relating to the capacity of each of said one or more transport vehicles;

a communication unit configured to receive information relating to the current position of each of said one or more transport vehicles;

a calculation unit configured for calculating, on the basis of the information received by said mapping unit, said capacity parameter unit and said communication unit:

A) the unload position of the harvester at a point where the crop tank of said harvester need to be emptied; and

B) in respect of such an unload position, and in relation to the current position of each available transport vehicle, an optimized route to be driven in respect of each of said one or more available transport vehicles; and

C) from the group of available transport vehicles, selecting that specific transport vehicle which will be able to arrive at said unload position in the least amount of time; and providing instructions relating to said optimized route to be followed by said specific transport vehicle.

In a second aspect the present invention relates to a method for supporting a harvesting operation in an agricultural field, said harvesting operation involving a harvester and one or more transport vehicles for transporting harvested crops;
wherein said method comprises:

providing information associated with coordinates relating to the geometry of said agricultural field;

and providing information associated with an estimated crop yield distribution of said agricultural field;

providing information associated with i) one or more capacity parameters relating to the capacity of said harvester; and ii) one or more capacity parameters relating to the capacity of each of said one or more transport vehicles;

providing information relating to the current position of each of said one or more transport vehicles;

calculating, on the basis of the information provided:

A) the unload position of the harvester at a point where the crop tank of said harvester need to be emptied; and

B) in respect of such an unload position, and in relation to the current position of each available transport vehicle, an optimized route to be driven in respect of each of said one or more available transport vehicles; and

C) in respect of each of said one or more available transport vehicles, selecting that specific transport vehicle which will be able to arrive at said unload position in the least amount of time.

In a third aspect the present invention relates to a computer program product, which when loaded or operating on a support system according to the first aspect of the present invention, being adapted to perform the method according to the second aspect of the present invention.

In a fourth aspect the present invention relates to a harvester for harvesting an agricultural crop being grown in an agricultural field, wherein said harvester is comprising a support system according to the first aspect of the present invention.

In a fifth aspect the present invention relates to a harvesting fleet comprising a harvester according to the fourth aspect of the present invention in combination with one or more transport vehicles.

In a sixth aspect the present invention relates to a use of a support system according to the first aspect of the present invention; or of a harvester according to the fourth aspect of the present invention; or a harvesting fleet according to the fifth aspect of the present invention for supporting a harvesting operation during harvesting an agricultural crop in an agricultural field.

The present invention in its various aspects provides for optimizing a harvesting operation when harvesting an agricultural crop field and by involving a harvester and one or more transport vehicles for transportation of harvested crops, thereby allowing the harvesting operation to be performed in time efficient manner with accompanying minimum fuel consumption, wear and tear of the harvester and the transport vehicles involved, and which also reduces excessive soil compaction and stress levels of the individuals operating the harvester and the transport vehicles.

## Brief description of the figures

Fig. 1 - 21d are illustrations relating to Example 2 and how to mathematically manage to create possible continuous driving paths in an agricultural field and how to find an optimum driving path amongst those possible continuous driving paths.

Fig. 22 is a flow diagram illustrating the steps to be taken in order to create possible continuous driving paths in an agricultural field and how to find an optimum driving path as illustrated in Example 2.

Fig. 23 is a plan view illustrating a crop field to be worked comprising headlands and working rows and being surrounded by public roads.

Fig. 24 is diagram illustrating one embodiment of the elements comprised in the support system according to the present invention.

Fig. 25a - 25d are plan views illustrating how to estimate a detailed crop yield density dissolved into individual working rows and headlands.

## Detailed description of the invention

In the following the present invention will be described with reference to the features set out in the claims.

The first aspect of the present invention

In a first aspect the present invention relates to a a support system for providing support in a harvesting operation in an agricultural field, said harvesting operation involving a harvester and one or more transport vehicles for transporting harvested crops;
wherein said support system comprises:

a mapping unit configured for receiving information associated with coordinates relating to the geometry of said agricultural field; and for receiving information relating to an estimated crop yield distribution of said agricultural field;

a capacity parameter unit configured for i) receiving one or more capacity parameters relating to the capacity of said harvester; and for ii) receiving one or more capacity parameters relating to the capacity of each of said one or more transport vehicles;

a communication unit configured to receive information relating to the current position of each of said one or more transport vehicles;

a calculation unit configured for calculating, on the basis of the information received by said mapping unit, said capacity parameter unit and said communication unit:

A) the unload position of the harvester at a point where the crop tank of said harvester need to be emptied; and

B) in respect of such an unload position, and in relation to the current position of each available transport vehicle, an optimized route to be driven in respect of each of said one or more available transport vehicles; and

C) from the group of available transport vehicles, selecting that specific transport vehicle which will be able to arrive at said unload position in the least amount of time; and providing instructions relating to said optimized route to be followed by said specific transport vehicle.

The support system of the first aspect of the present invention comprises a mapping unit and a capacity parameter unit which are configured for receiving information relating to the agricultural field to be harvested and relating to the the capacities of the harvester and each of the transport vehicle involved.

Based on this information being received, the calculation unit is configured to calculate which transport vehicle most optimally can be selected as the transport vehicle responsible for transporting unloaded crops from the harvester next time such an unload is necessary. Besides, the time at which such unload is needed and the location the specific transport vehicle needs to be at in an unload situation can be provided by the support system to that specific transport vehicle. Moreover, the support system is able to suggest to that specific transport vehicle the optimum route to be travelled through the field on its way to the harvester and on its return route to the storage area for crops outside the agricultural field.

In other embodiments the support system may even suggest to the harvester an optimum route to be followed during harvesting an agricultural field.

Further advantages appear from the specific embodiments disclosed below.

In one embodiment of the first aspect of the present invention said mapping unit is configured for receiving coordinates relating to one or more entrance/exit gates of said field.

Hereby, a more precise suggestion for optimum routes may be provided.

In one embodiment of the first aspect of the present invention said coordinates relating to the geometry of said agricultural field to be received by said mapping unit relates to coordinates of predetermined headland(s) and working rows.

Hereby the support system may provide optimum routes to be followed by the harvester and the transport vehicles confined to predetermined working rows and headlands.

In one embodiment of the first aspect of the present invention said coordinates relating to the geometry of said agricultural field to be received by said mapping unit relates to coordinates of the boundaries of said agricultural field and optionally also coordinates of the boundaries of any obstacles being present within said agricultural field.

Hereby the support system may itself calculate optimum routes to be followed by the harvester and the transport vehicles based only on coordinates of the boundaries of said agricultural field and optionally also coordinates of the boundaries of any obstacles being present within said agricultural field.

In one embodiment of the first aspect of the present invention said one or more capacity parameters relating to the capacity of said harvester to be received by said capacity parameter unit relate to one or more of the following:

- working speed of said harvester;

- non-working speed of said harvester;

- working width of said harvester;

- turning radius of said harvester;

- crop tank capacity of said harvester;

- possible position(s) of the unloading spout of said harvester, relative to said harvester;

- unload rate of said harvester.

These parameters provide sufficient information to the capacity parameter unit in order for the calculation unit to perform the necessary calculations in respect of parameters of the harvester.

In one embodiment of the first aspect of the present invention said one or more capacity parameters relating to the capacity of each of said transport vehicle to be received by said capacity parameter unit relate to one or more of the following:

- driving speed of said transport vehicle;

- turning radius of said transport vehicle;

- crop tank capacity of said transport vehicle;

- time needed to travel from one or more entrance/exit gates to the offload point at a crop storage area;

- time needed for unloading crops, by said transport vehicle, at the offload point at a crop storage area.

These parameters provide sufficient information to the capacity parameter unit in order for the calculation unit to perform the necessary calculations in respect of parameters of each of the transport vehicles.

In one embodiment of the first aspect of the present invention said calculation unit is being configured, on the basis of a trajectory to be followed by said harvester, to perform the following steps:

i) calculating the path to be followed by said harvester from its current position to the position at which the crop tank of said harvester has reach maximum capacity;

ii) calculating the unload position(s) at working vehicle would need to be at in order to receive the unloaded crops from said harvester;

iii) verify that the unload position(s) calculated in step ii) is/are valid position(s);

iv) in respect of each available transport vehicle, calculate the possible paths needed to be followed by said transport vehicle and the time necessary in order to arrive at the unload position(s) calculated in step ii);

v) select the available transport vehicle which is able to arrive at the unload position(s) calculated in step ii) in the least amount of time, as that the specific transport vehicle being responsible for emptying the crop tank of the harvester;

vi) upon loading the crops and departure of said specific transport vehicle selected in step v), repeat steps i) - v).

These calculation steps ensure continuously updating the calculations so as to provide reliable information relating to optimum routes to be followed by the harvester and the transport vehicles.

In one embodiment of the first aspect of the present invention said trajectory to be followed by said harvester comprises a number of predetermined working rows and a number of predetermined headlands confined within said agricultural field.

Hereby the support system may provide optimum routes to be followed by the harvester and the transport vehicles confined to predetermined working rows and headlands.

In one embodiment of the first aspect of the present invention said possible paths to be followed by said transport vehicles, optionally as calculated in step iv), within the agricultural field only comprises headlands and working rows, and arched segment connecting these.

Hereby a well-defined array of possible paths for making up the routes to be followed by the harvester and the transport vehicles is provided.

In one embodiment of the first aspect of the present invention an unload location of a transport vehicle is considered invalid in case said unload location implies that said transport vehicle needs to be located outside the field boundary during unloading; or in case said unload location implies that said transport vehicle needs drive through unharvested crops, with the optional exception that said transport vehicle is allowed to drive through unharvested crops, in case it will be impossible for any of the available transport vehicles to reach the unload location without driving through unharvested crops.

Hereby, as far as possible, unharvested crops are kept intact until the harvester initiates the harvesting thereof which ultimately leads to an optimum crop yield.

In one embodiment of the first aspect of the present invention, and in the event that in respect of each available transport vehicles, no valid unload locations are available, said support system is being configured to instruct the harvester to deviated from its desired trajectory by making a detour, prior to unload, into a nearby headland or working row, compared to the headland or working row corresponding to its current position, thereby allowing a transport vehicle to enter an unload location without the need to drive into unharvested crops.

Hereby, as far as possible, unharvested crops are kept intact until the harvester initiates the harvesting thereof which ultimately leads to an optimum crop yield.

In one embodiment of the first aspect of the present invention the trajectory to be followed by said harvester implies harvesting all headlands before any working rows; and/or optionally wherein the trajectory to be followed by said harvester implies harvesting outer headlands before inner headlands.

This mode of harvesting will lead to an optimum harvesting procedure.

In one embodiment of the first aspect of the present invention said information associated with coordinates relating to the geometry of said agricultural field relates to a predetermined trajectory to be followed by said harvester, and wherein said mapping unit is configured for receiving coordinates relating to said predetermined trajectory to be followed by said harvester.

Hereby the support system allows the harvester to follow a preferred and predetermined route in the agricultural field.

In one embodiment of the first aspect of the present invention said predetermined trajectory to be followed by said harvester is made up of a number of predetermined working rows and a number of predetermined headlands confined within said agricultural field, and wherein said mapping unit is being configured for receiving coordinates relating to the positions of the headlands and the positions of the working rows.

Hereby the support system allows the harvester to follow a preferred and predetermined route in the agricultural field.

In one embodiment of the first aspect of the present invention said calculation unit is being configured to perform the following steps:

a) approximating the coordinates relating to all predefined headland with a number of coherent entities of straight lines;

b) approximating the coordinates relating to all predefined working rows with a number of coherent entities of straight lines;

c) on the basis of a number of coherent entities of straight lines approximated in step a) and representing headlands; and in respect of coherent entities of straight lines approximated in step b) and representing working rows, define an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path is covering all headlands and all working rows;

d) in respect of each of more possible continuous driving paths defined in step c), calculate an associated cost parameter, said calculated cost parameter being representative of the efficiency by following that specific continuous driving path;

e) select as the trajectory to be followed by said harvester, that specific continuous driving path exhibiting the highest efficiency.

Hereby the support system may calculate an optimum route to be followed by said harvester based on predetermined working rows and headlands.

In one embodiment of the first aspect of the present invention said information associated with a trajectory to be followed by said harvester is not a predetermined trajectory, and wherein said mapping unit is being configured for receiving:

i) coordinates relating to boundaries of the field to be harvested; and

ii) coordinates relating to the boundaries of one or more obstacles to be avoided by said harvester and said one or more transport vehicles, if present, wherein said one or more obstacles is/are located within said field;

and wherein said calculation unit is being configured for calculating, on the basis of said coordinates relating to boundaries of the field to be harvested and on the basis of said coordinates relating to the boundaries of said one or more obstacles, an optimized trajectory to be followed by said harvester.

Hereby the support system may calculate an optimum route to be followed by said harvester based on non-predetermined working rows and headlands.

In one embodiment of the first aspect of the present invention said calculation unit is being configured to perform the following steps:

a) approximating the coordinates relating to the boundaries of said field to be harvested to a boundary polygon; and wherein said support system is being configured to determine the trajectory to be followed, based on that approximation;

b) approximating the coordinates relating to the boundaries of each said one or more obstacles, if present, to respective obstacle polygons; and wherein said support system is being configured to determine the trajectory to be followed, based on that approximation;

c) defining one or more headlands located immediately within said boundary polygon;

d) in respect of each obstacle polygon, if present, defining one or more headlands surrounding said obstacle polygon;

e) defining a work area which corresponds to the area within said boundary polygon with the exclusion of the area corresponding to any headlands and with the exclusion of the area corresponding to any obstacle polygon;

f) in respect of the orientation of one or more sides of headlands, define an array of parallel working rows located within said work area;

g) in respect of one or more arrays of parallel working rows defined in step f), define an array of possible continuous driving paths by connecting separate entities by arched segments, wherein said separate entities is being either headlands, or parts of a headland, and working rows, or parts of a working row; so as to define possible continuous driving paths, wherein each driving path is covering all headlands and all working rows;

h) in respect of each of more possible continuous driving paths defined in step g), calculate an associated cost parameter, said calculated cost parameter being representative of the efficiency by following that specific continuous driving path;

i) select as the trajectory to be followed, that specific continuous driving path exhibiting the highest efficiency.

Hereby the support system may in an efficient manner calculate an optimum route to be followed by said harvester based on non-predetermined working rows and headlands.

In one embodiment of the first aspect of the present invention said calculation unit is configured to only allows a transport vehicle, when located within the field, to travel along those headlands and working rows as defined in respect of the harvester, wherein said headlands comprising a number of coherent entities of straight lines; and wherein said working rows comprising a number of coherent entities of straight lines;

wherein said calculation unit, upon calculating the possible paths needed to be followed by said transport vehicle and the time necessary in order to arrive at the unload position(s) in respect of all said transport vehicles, are configured to, on the basis of said number of coherent entities of straight lines and representing headland; and in respect of said coherent entities of straight lines and representing working rows, define an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at the unload position(s) at the harvester;

wherein said calculation unit is being configured to, in respect of each of said more possible continuous driving paths, and in respect of each said available transport vehicles, to calculate an associated cost parameter, said calculated cost parameter being representative of the efficiency by following that specific continuous driving path by said specific transport vehicle;

wherein said calculation unit is being configured to, in respect of each of said more possible continuous driving paths, and its associated available transport vehicle, to select that specific continuous driving path and its associated available transport vehicle, as the trajectory and the transport vehicle to be used upon unloading crops from the harvester, that specific continuous driving path and its associated transport vehicle which exhibits the highest efficiency.

Hereby is ensured that the transport vehicles as far as possible only follows those working rows and headlands which are followed by the harvester, thereby avoiding the creation of an excessive number of tracks in the field.

In one embodiment of the first aspect of the present invention said highest efficiency relates to that specific continuous driving path and its associated transport vehicle which is able to arrive at the destination in the shortest time or relates to that specific continuous driving path and its associated transport vehicle which represents the shortest distance.

These are two criteria which can easily be calculated by the calculation unit of the support system.

In one embodiment of the first aspect of the present invention said calculation unit furthermore is being configured for calculating, in respect of that specific transport vehicle being selected to transport crops from said harvester, an optimized route to be followed by said transport vehicle upon driving from said harvester to a storage area for the transported crops.

Hereby an even more efficient harvesting operation may be provided.

In one embodiment of the first aspect of the present invention said calculation unit only allows a transport vehicle, when located within said field, to travel along those headlands and working rows as defined in respect of the harvester, wherein said headlands comprising a number of coherent entities of straight lines; and wherein said working rows comprising a number of coherent entities of straight lines;

wherein said calculation unit, upon calculating the possible paths needed to be followed by said transport vehicle upon returning to said storage area for the crops are configured to, on the basis of said number of coherent entities of straight lines and representing headland; and in respect of said coherent entities of straight lines and representing working rows, define an array of possible continuous driving paths to said storage area for the crops by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at storage area for the crops;

wherein said calculation unit is being configured to, in respect of each of said more possible continuous driving paths, to calculate an associated cost parameter, said calculated cost parameter being representative of the efficiency by following that specific continuous driving path by the specific transport vehicle;

wherein said calculation unit is being configured to, in respect of each of said more possible continuous driving paths, to select as the trajectory to be followed by said specific transport vehicle, that continuous driving path exhibiting the highest efficiency.

Hereby, also the route to be driven by a transport vehicle on its trip to the storage area for crops may be optimized.

In one embodiment of the first aspect of the present invention said support system further comprising a number of communication stations, wherein the number of communication stations corresponds to the number of transport vehicles and wherein said communication unit and each of said communication stations are configured to send and receive, wirelessly, information between said communication unit and each of said communication stations.

Hereby, each transport vehicle may be provided with instructions to be followed in order to contribute to an optimum harvesting operation.

In one embodiment of the first aspect of the present invention said support system is being configured to send information to that specific transport vehicle which has been selected to be responsible for an unloading of crops from said harvester, wherein said information relates to one or more of the following: time at which unloading of crops from said harvester is desired; unload position(s) at which unloading of crops from said harvester is desired; optimized route to be followed by said transport vehicle in order to arrive at the unload position(s).

Hereby, each transport vehicle may be provided with instructions to be followed in order to contribute to an optimum harvesting operation.

In one embodiment of the first aspect of the present invention said mapping unit being configured for receiving information relating to a current position of said harvester, and wherein in respect of each of said communication stations, said communication station being configured to communicate, to said communication unit, a current position of the corresponding transport vehicle.

Hereby the support system may continuously be provided with information relating to the exact position of each transport vehicles.

In one embodiment of the first aspect of the present invention the number of transport vehicles is 1 - 20, such as 2 - 19, for example 3 - 18, such as 4 - 17, e.g. 5 - 16, such as 6 - 15, for example 7 - 14, such as 8 - 13, e.g. 9 - 12 or 10 - 11.

In one embodiment of the first aspect of the present invention said mapping unit is configured for receiving information of a desired direction of movement of said harvester.

Hereby one or two initial opposite directions of movement may be selected by the operator.

In one embodiment of the first aspect of the present invention said support system furthermore comprises a display unit for displaying information to an operator, wherein said information optionally relates to the status of said support system, the settings of said support system and/or the operation of said support system; and/or wherein said support system furthermore comprises an input unit, such as an alphanumerical keyboard configured for providing input, by an operator, to said support system.

Hereby, the operator of the support system may monitor and program the support system according to a desired mode of operation.

In one embodiment of the first aspect of the present invention said calculation unit is configured for calculating said optimized route to be driven in respect of each of said one or more transport vehicles; and optionally also an optimized trajectory to be driven by said harvester by means of a heuristic method, such as a greedy heuristic method, or a stepwise greedy method, a tabu search solver, an ant colony solver, a genetic algorithm.

The methods have proven beneficial in use with the support system according to the first aspect of the present invention.

In one embodiment of the first aspect of the present invention said calculation unit is configured for calculating said optimized route to be driven in respect of each of said one or more transport vehicles and optionally also an optimized trajectory to be driven by said harvester, by creating a number N of possible continuous driven paths with an associated assigned cost parameter, and wherein said number N being an integer in the range 1,000 - 700,000 or more, for example 2,000 - 600,000, such as 5,000 - 500,000, e.g. 10,000 - 400,000, such as 50,000 -300,000 or 100,000 - 200,000 possible continuous driven paths with an associated assigned cost parameter.

The second aspect of the present invention

In a second aspect the present invention relates to a method for supporting a harvesting operation in an agricultural field, said harvesting operation involving a harvester and one or more transport vehicles for transporting harvested crops;

wherein said method comprises:

providing information associated with coordinates relating to the geometry of said agricultural field;

and providing information associated with an estimated crop yield distribution of said agricultural field;

providing information associated with i) one or more capacity parameters relating to the capacity of said harvester; and ii) one or more capacity parameters relating to the capacity of each of said one or more transport vehicles;

providing information relating to the current position of each of said one or more transport vehicles;

calculating, on the basis of the information provided:

A) the unload position of the harvester at a point where the crop tank of said harvester need to be emptied; and

B) in respect of such an unload position, and in relation to the current position of each available transport vehicle, an optimized route to be driven in respect of each of said one or more available transport vehicles; and

C) in respect of each of said one or more available transport vehicles, selecting that specific transport vehicle which will be able to arrive at said unload position in the least amount of time.

In one embodiment of the second aspect of the present invention said method furthermore comprising providing information relating to one or more entrance/exit gates of said field.

Hereby, a more precise suggestion for optimum routes may be provided.

In one embodiment of the second aspect of the present invention said coordinates relating to the geometry of said agricultural field relates to coordinates of predetermined headland(s) and working rows.

Hereby the method may provide optimum routes to be followed by the harvester and the transport vehicles confined to predetermined working rows and headlands.

In one embodiment of the second aspect of the present invention said coordinates relating to the geometry of said agricultural field relates to coordinates of the boundaries of said agricultural field and optionally also coordinates of the boundaries of any obstacles being present within said agricultural field.

Hereby, in the method may be calculated optimum routes to be followed by the harvester and the transport vehicles based only on coordinates of the boundaries of said agricultural field and optionally also coordinates of the boundaries of any obstacles being present within said agricultural field

In one embodiment of the second aspect of the present invention said one or more capacity parameters relating to the capacity of said harvester relates to one or more of the following:

- working speed of said harvester;

- non-working speed of said harvester;

- working width of said harvester;

- turning radius of said harvester;

- crop tank capacity of said harvester;

- possible position(s) of the unloading spout of said harvester, relative to said harvester;

- unload rate of said harvester.

These parameters provide sufficient information in order to perform the necessary calculations in respect of parameters of the harvester.

In one embodiment of the second aspect of the present invention said one or more capacity parameters relating to the capacity of each of said transport vehicle relates to one or more of the following:

- driving speed of said transport vehicle;

- turning radius of said transport vehicle;

- crop tank capacity of said transport vehicle;

- time needed to travel from one or more entrance/exit gates to the offload point at a crop storage area;

- time needed for unloading crops, by said transport vehicle, at the offload point at a crop storage area.

These parameters provide sufficient information in order to perform the necessary calculations in respect of parameters of each of the transport vehicles.

In one embodiment of the second aspect of the present invention said method on the basis of a trajectory to be followed by said harvester, comprises performing the following steps:

i) calculating the path to be followed by said harvester from its current position to the position at which the crop tank of said harvester has reach maximum capacity;

ii) calculating the unload position(s) at working vehicle would need to be at in order to receive the unloaded crops from said harvester;

iii) verify that the unload position(s) calculated in step ii) is/are valid position(s);

iv) in respect of each available transport vehicle, calculate the possible paths needed to be followed by said transport vehicle and the time necessary in order to arrive at the unload position(s) calculated in step ii);

v) select the available transport vehicle which is able to arrive at the unload position(s) calculated in step ii) in the least amount of time, as that the specific transport vehicle being responsible for emptying the crop tank of the harvester;

vi) upon loading the crops and departure of said specific transport vehicle selected in step v), repeat steps i) - v).

These calculation steps ensure continuously updating the calculations so as to provide reliable information relating to optimum routes to be followed by the harvester and the transport vehicles.
In one embodiment of the second aspect of the present invention said trajectory to be followed by said harvester comprises a number of predetermined working rows and a number of predetermined headlands confined within said agricultural field.
Hereby the support system may provide optimum routes to be followed by the harvester and the transport vehicles confined to predetermined working rows and headlands.
In one embodiment of the second aspect of the present invention said possible paths to be followed by said transport vehicles, optionally as calculated in step iv), within the agricultural field only comprises headlands and working rows, and arched segments connecting these.
Hereby a well-defined array of possible paths for making up the routes to be followed by the harvester and the transport vehicles is provided.
In one embodiment of the second aspect of the present invention an unload location of a transport vehicle is considered invalid in case said unload location implies that said transport vehicle needs to be located outside the field boundary during unloading; or in case said unload location implies that said transport vehicle needs drive through unharvested crops, with the optional exception that said transport vehicle is allowed to drive through unharvested crops, in case it will be impossible for any of the available transport vehicles to reach the unload position without driving through unharvested crops.
Hereby, as far as possible, unharvested crops are kept intact until the harvester initiates the harvesting thereof which ultimately leads to an optimum crop yield.
In one embodiment of the second aspect of the present invention, in the event that in respect of each available transport vehicles, no valid unload locations are available, said method involves instructing the harvester to deviated from its desired trajectory by making a detour, prior to unload, into a nearby headland or working row, compared to the headland or working row corresponding to its current position, thereby allowing a transport vehicle to enter an unload position without the need to drive into unharvested crops.
Hereby, as far as possible, unharvested crops are kept intact until the harvester initiates the harvesting thereof which ultimately leads to an optimum crop yield.
In one embodiment of the second aspect of the present invention the trajectory to be followed by said harvester implies harvesting all headlands before any working rows; and optionally wherein the trajectory to be followed by said harvester implies harvesting outer headlands before inner headlands.
This mode of harvesting will lead to an optimum harvesting procedure.
In one embodiment of the second aspect of the present invention said information associated with coordinates relating to the geometry of said agricultural field relates to a predetermined trajectory to be followed by said harvester, and wherein said method involves receiving coordinates relating to said predetermined trajectory to be followed by said harvester.
Hereby the harvester is allowed to follow a preferred and predetermined route in the agricultural field.
In one embodiment of the second aspect of the present invention said predetermined trajectory to be followed by said harvester is made up of a number of predetermined working rows and a number of predetermined headlands confined within said agricultural field, and wherein said method involves providing: coordinates relating to the positions of the headlands and the positions of the working rows.
Hereby the harvester is allowed to follow a preferred and predetermined route in the agricultural field.
In one embodiment of the second aspect of the present invention said method involves performing the following steps:

a) approximating the coordinates relating to all predefined headland with a number of coherent entities of straight lines;

b) approximating the coordinates relating to all predefined working rows with a number of coherent entities of straight lines;

c) on the basis of a number of coherent entities of straight lines approximated in step a) and representing headlands; and in respect of coherent entities of straight lines approximated in step b) and representing working rows, define an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path is covering all headlands and all working rows;

d) in respect of each of more possible continuous driving paths defined in step c), calculate an associated cost parameter, said calculated cost parameter being representative of the efficiency by following that specific continuous driving path;

e) select as the trajectory to be followed by said harvester, that specific continuous driving path exhibiting the highest efficiency.

Hereby the support system may calculate an optimum route to be followed by said harvester based on predetermined working rows and headlands.
In one embodiment of the second aspect of the present invention said information associated with a trajectory to be followed by said harvester is not a predetermined trajectory, and wherein said method involves providing:

i) coordinates relating to boundaries of the field to be harvested; and
ii) coordinates relating to the boundaries of one or more obstacles to be avoided by said harvester and said one or more transport vehicles, if present, wherein said one or more obstacles is/are located within said field;

and wherein said method involves calculating, on the basis of said coordinates relating to boundaries of the field to be harvested and on the basis of said coordinates relating to the boundaries of said one or more obstacles, an optimized trajectory to be followed by said harvester.
Hereby the support system may calculate an optimum route to be followed by said harvester based on non-predetermined working rows and headlands.
In one embodiment of the second aspect of the present invention said method involves performing the following steps:

a) approximating the coordinates relating to the boundaries of said field to be harvested to a boundary polygon; and wherein said method involves determining the trajectory to be followed, based on that approximation;

b) approximating the coordinates relating to the boundaries of each said one or more obstacles, if present, to respective obstacle polygons; and wherein said method involves determining the trajectory to be followed, based on that approximation;

c) defining one or more headlands located immediately within said boundary polygon;

d) in respect of each obstacle polygon, if present, defining one or more headlands surrounding said obstacle polygon;

e) defining a work area which corresponds to the area within said boundary polygon with the exclusion of the area corresponding to any headlands and with the exclusion of the area corresponding to any obstacle polygon;

f) in respect of the orientation of one or more sides of headlands, define an array of parallel working rows located within said work area;

g) in respect of one or more arrays of parallel working rows defined in step f), define an array of possible continuous driving paths by connecting separate entities by arched segments, wherein said separate entities is being either headlands, or parts of a headland, and working rows, or parts of a working row; so as to define possible continuous driving paths, wherein each driving path is covering all headlands and all working rows;

h) in respect of each of more possible continuous driving paths defined in step g), calculate an associated cost parameter, said calculated cost parameter being representative of the efficiency by following that specific continuous driving path;

i) select as the trajectory to be followed, that specific continuous driving path exhibiting the highest efficiency.

13

Hereby the support system may calculate an optimum route to be followed by said harvester based on predetermined working rows and headlands.

In one embodiment of the second aspect of the present invention said method involves only allowing a transport vehicle, when located within the field, to travel along those headlands and working rows as defined in respect of the harvester, wherein said headlands comprising a number of coherent entities of straight lines; and wherein said working rows comprising a number of coherent entities of straight lines;

wherein said method, upon calculating the possible paths needed to be followed by said transport vehicle and the time necessary in order to arrive at the unload position(s) in respect of all said transport vehicles, on the basis of said number of coherent entities of straight lines and representing headland; and in respect of said coherent entities of straight lines and representing working rows, involves defining an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at the unload position(s) at the harvester;

wherein said method, in respect of each of said more possible continuous driving paths, ands in respect of all said available transport vehicles, involves calculation of an associated cost parameter, said calculated cost parameter being representative of the efficiency by following that specific continuous driving path by said specific transport vehicle;

wherein said method, in respect of each of said more possible continuous driving paths, and in respect of all said available transport vehicles, involves selecting that specific continuous driving path and its associated available transport vehicle, as the trajectory and the transport vehicle to be used upon unloading crops from the harvester, that specific continuous driving path and its associated transport vehicle which exhibits the highest efficiency.

Hereby, also the route to be driven by a transport vehicle on its trip to the storage area for crops may be optimized.

In one embodiment of the second aspect of the present invention said highest efficiency relates to that specific continuous driving path and its associated transport vehicle which is able to arrive at the destination in the shortest time or relates to that specific continuous driving path and its associated transport vehicle which represents the shortest distance.

These are two criteria which can easily be calculated by method.

In one embodiment of the second aspect of the present invention said method furthermore involves calculating, in respect of that specific transport vehicle being selected to transport crops from said harvester, an optimized route to be followed by said transport vehicle upon driving from said harvester to a storage area for the transported crops.

Hereby an even more efficient harvesting operation may be provided.

In one embodiment of the second aspect of the present invention said method involves only allowing a transport vehicle, when located within said field, to travel along those headlands and working rows as defined in respect of the harvester, wherein said headlands comprising a number of coherent entities of straight lines; and wherein said working rows comprising a number of coherent entities of straight lines;

wherein said method, upon calculating the possible paths needed to be followed by said transport vehicle upon returning to said storage area for the crops, on the basis of said number of coherent entities of straight lines and representing headland; and in respect of said coherent entities of straight lines approximated and representing working rows, involves defining an array of possible continuous driving paths to said storage area for the crops by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at storage area for the crops;

wherein said method, in respect of each of said more possible continuous driving paths, involves calculating an associated cost parameter, said calculated cost parameter being representative of the efficiency by following that specific continuous driving path by the specific transport vehicle;

wherein said method, in respect of each of said more possible continuous driving paths, involves selecting as the trajectory to be followed by said specific transport vehicle, that continuous driving path exhibiting the highest efficiency.

Hereby, also the route to be driven by a transport vehicle on its trip to the storage area for crops may be optimized.

In one embodiment of the second aspect of the present invention said method further comprising communicating to a number of communication stations, wherein the number of communication stations corresponds to the number of transport vehicles, wirelessly, information between said harvester and each of said communication stations, wherein each transport vehicle comprises a communication station.

Hereby, each transport vehicle may be provided with instructions to be followed in order to contribute to an optimum harvesting operation.

In one embodiment of the second aspect of the present invention said method involves sending information to that specific transport vehicle which has been selected to be responsible for an unloading of crops from said harvester, wherein said information relates to one or more of the following: time at which unloading of crops from said harvester is desired; unload position(s) at which unloading of crops from said harvester is desired; optimized route to be followed by said transport vehicle in order to arrive at the unload position(s)

Hereby, each transport vehicle may be provided with instructions to be followed in order to contribute to an optimum harvesting operation.

In one embodiment of the second aspect of the present invention said method involves providing information relating to a current position of said harvester, and wherein in respect of each of said communication stations, said method involves communicating, to said harvester, a current position of the transport vehicle corresponding to said communication station.

Hereby the support system may continuously be provided with information relating to the exact position of each transport vehicles. In one embodiment of the second aspect of the present invention the number of transport vehicles is 1 - 20, such as 2 - 19, for example 3 - 18, such as 4 - 17, e.g. 5 - 16, such as 6 - 15, for example 7 - 14, such as 8 - 13, e.g. 9 - 12 or 10 - 11.

In one embodiment of the second aspect of the present invention said method involves calculating said optimized route to be driven in respect of each of said one or more transport vehicles; and optionally also an optimized trajectory to be driven by said harvester, by means of a heuristic method, such as a greedy heuristic method, or a stepwise greedy method, a tabu search solver, an ant colony solver, a genetic algorithm.

These methods have proven beneficial in use with the support system according to the first aspect of the present invention.

In one embodiment of the second aspect of the present invention said method involves calculating said optimized route to be driven in respect of each of said one or more transport vehicles, and optionally also an optimized trajectory to be driven by said harvester, by creating a number N of possible continuous driven paths with an associated assigned cost parameter, and wherein said number N being an integer in the range 1,000 - 700,000 or more, for example 2,000 - 600,000, such as 5,000 - 500,000, e.g. 10,000 - 400,000, such as 50,000 -300,000 or 100,000 - 200,000 possible continuous driven paths with an associated assigned cost parameter.

The third aspect of the present invention

In a third aspect the present invention relates to a computer program product, which when loaded or operating on a computer, being adapted to perform the method according to the second aspect of the present invention.

In the present description and in the appended claims it shall be understood that a computer program product may be presented in the form of a piece of software which is storable or stored on a piece of hardware. Hereby, the computer program product may be embodied in one or more computer readable storage media as a computer readable program code embodied thereon.

Accordingly, the computer program product may be presented as a computer-readable storage medium having a computer program product embodied therein.

The computer program code is configured for carrying out the operations of the method according to the first aspect of the present invention and it may be written in any combination of one or more programming languages.

The fourth aspect of the present invention

In a fourth aspect the present invention relates to a harvester for harvesting an agricultural crop being grown in an agricultural field, wherein said harvester is comprising a support system according to the first aspect of the present invention.

The fifth aspect of the present invention

In a fifth aspect the present invention relates to a harvesting fleet comprising a harvester according to the fourth aspect of the present invention in combination with one or more transport vehicles.

In one embodiment of the fifth aspect of the present invention the number of transport vehicles in the harvesting fleet is 1 - 20, such as 2 - 19, for example 3 - 18, such as 4 - 17, e.g. 5 - 16, such as 6 - 15, for example 7 - 14, such as 8 - 13, e.g. 9 - 12 or 10 - 11.

The sixth aspect of the present invention

In a sixth aspect the present invention relates to a use of a support system according to the first aspect of the present invention; or of a computer program product according to the third aspect of the present invention; or of a harvester according to the fourth aspect of the present invention; or a harvesting fleet according to the fifth aspect of the present invention for supporting a harvesting operation during harvesting an agricultural crop in an agricultural field.
- 0 -
**[0147]** In should be noted that the present invention in its various aspects and embodiments is well-suited for use in harvesting of a wide variety of types of crops.
In particular the present invention in its various aspects and embodiments is well-suited for use in harvesting of the following types of crops:

Poaceae, such as: grass seeds, durra (sorghum or milo), barley, rye, wheat, oat, corn/maize, grass for use as silage, maize for use as silage, whole crop barley for use as silage, whole crop wheat for use as silage, sugarcane.

Brassicaceae, such as: rape seed, cabbage, canola.

Fabaceae, such as: soya been, peas, lucerne, faba bean, clover.

Asteraceae, such as: sunflower.

Alliaceae, such as: onions.

Apiaceae, such as: carrot.

Solanaceae, such as: potatoes, tomatoes, tobacco.

Amaranthaceae, such as: beets (fodder beets or sugar beets), beet roots.

**Examples**

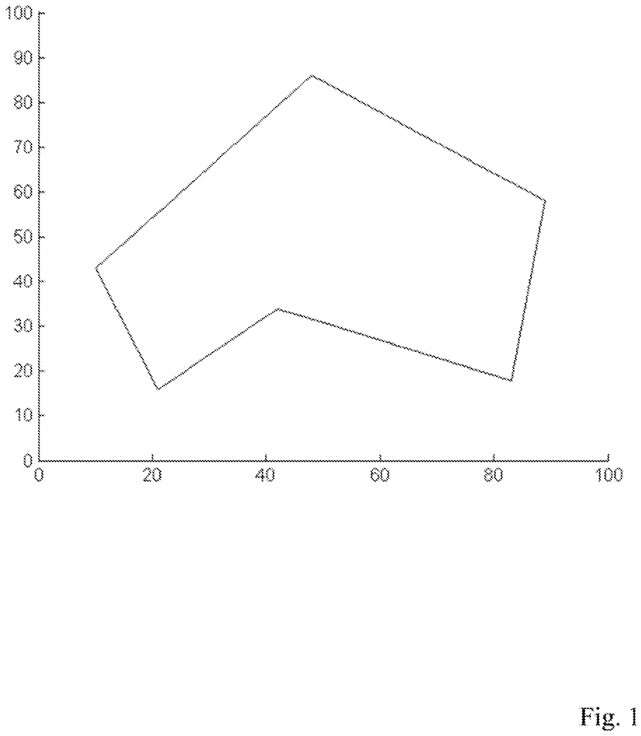

Now referring to the drawings for better illustrating the present invention, fig. 1 - 22 relate to a mathematical method for creating, in an agricultural field, possible continuous driving paths for the harvester and how to find an optimum driving path amongst those possible continuous driving paths. This method is further described in Example 2 below.

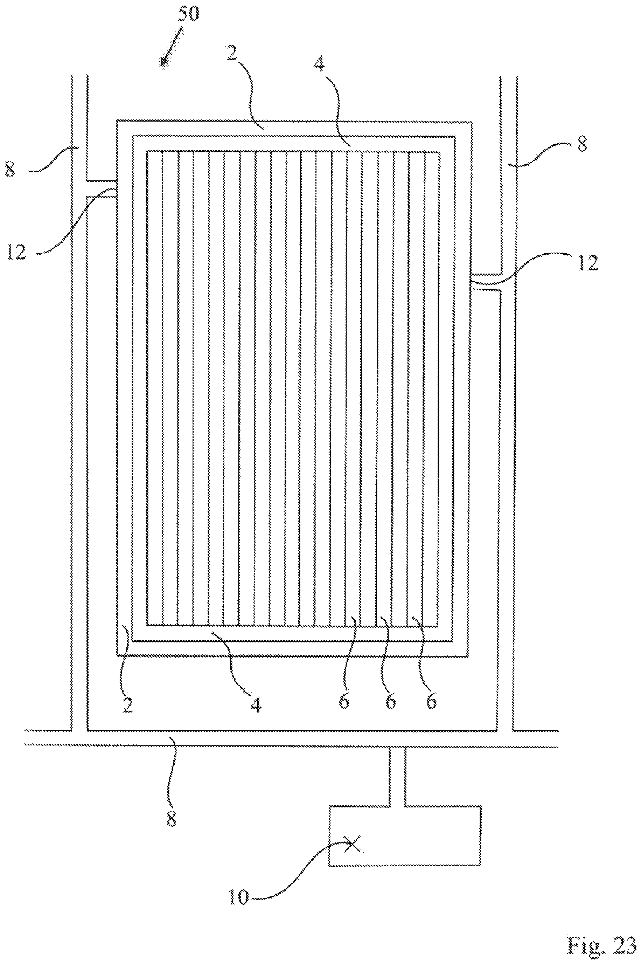

Fig. 23 - 25d illustrates the principle of the working mode of the support system according to the first aspect of the present invention. This further described in Example 1 below.

**Example 1**

Fig. 23 is a plan view illustrating a crop field to be worked comprising headlands and working rows and being surrounded by public roads.
Fig. 23 shows the agricultural field 50 which has been divided into a number headlands and a number of working rows.
The agricultural filed 50 comprises an outer headland 2 and an inner headland 4. Within the inner headland the agricultural field has been dived into 19 working rows 6 (illustrated as the 19 vertical rows in fig. 23).
At two positions of the outer headlands 2 entrance/exit gates 12 are located. The entrance/exit gates 12 provide access to and from the public road 8.
Outside the agricultural field 50 a storage area 10 for crops is located and this storage area is accessible via the public road 8.
Due to the size of the agricultural field the capacity for harvested crops in the harvester is not large enough to store the crops of the whole filed.
For this reason, in most harvesting operations harvesting of an agricultural field involves a fleet comprising a harvester and one or more transport vehicles, the latter being responsible for continuously transportation of unloaded crops from the harvester to the storage area 10 for crops located outside the agricultural field.

In a harvesting operation involving a fleet of a harvester and one or more transport vehicles for transporting harvested crops it is preferred that each vehicle as far as possible does not move transverse to the working rows 6 and the headlands 2,4 because this will detrimentally affect the crop yield (this years's crop yield or subsequent year's crop yield).

Accordingly, it is clearly seen that in a harvesting operation involving a harvester and one or more transport vehicles which each as far as possible aims at not moving transverse to the headlands and the working rows, the transport vehicles may have a not insignificant distance to travel in their transportation of harvested crops from the harvester to the storage area 10 located outside the agricultural field, and also when they return from that storage area 10 when catching up with the harvester on their return route.

This also means that without any technological aids it will be almost impossible to determine the most optimum driving pattern of each of the transport vehicles in their transportation of harvested crops from the harvester to the storage area 10 and on the return route.

Furthermore, in case more than one transport vehicle is used in the harvesting fleet, and without any technological aids it will also be almost impossible, at a given time, to select that specific transport vehicle which most optimally should be selected as the transport vehicle responsible for transportation of crops to the storage area next time the harvester needs unloading of harvested crops.

In case a transport vehicle does not follow an optimum path along the direction of working rows 6 and headlands 2,4 such transport vehicle may not arrive at the location of the harvester at a time when unloading of harvested crops from the harvester is needed. In such a situation the harvester may have to await the arrival of such transport vehicle.

Moreover, the same waiting situation may result when, in a non-optimum way, a specific transport vehicle is selected as the transport vehicle responsible for transportation of crops to the storage area next time the harvester needs unloading of harvested crops.

The present invention presents in its various aspects solutions to these problems.

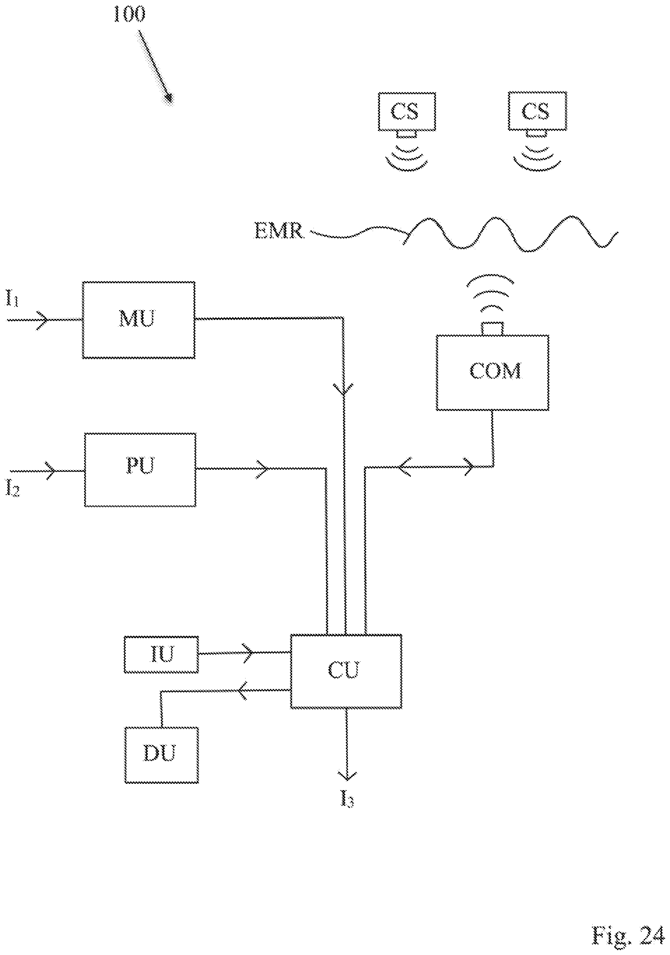

Fig. 24 is a diagram illustrating an embodiment of a support system according to the first aspect of the present application. The support system in fig. 24 is intended for being used with a harvesting fleet comprising a single harvester and two transport vehicles for transporting harvested crops to a storage area outside the agricultural field to be harvested.

The support system comprises a mapping unit MU which is configured for receiving information $I_1$ associated with the geometry of the agricultural field to be harvested; and for receiving information relating to an estimated crop yield distribution of the agricultural field which is to be harvested.

The support system further comprises a capacity parameter unit PU configured for i) receiving information $I_2$ in the form of one or more capacity parameters relating to the capacity of said harvester; and for ii) receiving one or more capacity parameters relating to the capacity of each of said one or more transport vehicles.

Moreover, the support system 100 comprises a communication unit COM configured to receive information relating to the current position of each of said one or more transport vehicles.

In the embodiment illustrated in fig. 23 information relating to the current position of each of said one or more transport vehicles is provided to the communication unit COM by means of a communication station CS which is located in each of the two transport vehicles and which is being configured to receive and transmit information to the communication unit COM via electromagnetic radiation EMR. The information transmitted from the communication stations CS to the communication unit COM may hence encompass information provided by a satellite position indicating unit, such as a GPS located on each transport unit.

The communication unit CU may also itself contain or being connected to a satellite position indicating unit, such as a GPS located on the harvester, thereby providing information to the support system as to the location of the harvester.

The information received by the mapping unit MU, the capacity parameter unit PU and the communication unit COM, respectively is being sent to a calculation unit which is being configured for calculating, on the basis of the information received by said mapping unit, said capacity parameter unit and said communication unit:

A) the unload position of the harvester at a point where the crop tank of said harvester need to be emptied; and

B) in respect of such an unload position, and in relation to the current position of each available transport vehicle, an optimized route to be driven in respect of each of said one or more available transport vehicles; and

C) in respect of each of said one or more available transport vehicles, selecting that specific transport vehicle which will be able to arrive at said unload position in the least amount of time.

In this way, the system illustrated in fig. 23 provides for optimizing a harvesting operation involving a harvester and two transport vehicles.

The information $I_1$ provided to the mapping unit MU may relate to coordinates of predefined working rows and headlands located within the agricultural filed. Alternatively, the information $I_1$ provided to the mapping unit MU may relate to coordinates of boundaries of the agricultural field and coordinates of boundaries relating to one or more obstacles to be avoided which are located within the agricultural field to be harvested.

In the latter case, the calculation unit may be configured also to suggest an optimum trajectory to be followed by the harvester itself.

The information $I_1$ provided to the mapping unit MU may also relate to coordinates relating to one or more entrance/exit gates of the agricultural field.

The information $I_2$ provided to the capacity parameter unit PU may further relate to one or more of the following: working speed of the harvester, non-working speed of the harvester, working width of the harvester, turning radius of the harvester,-crop tank capacity of the harvester, possible position(s) of the unloading spout of the harvester relative to said harvester itself, unload rate of the harvester.

The information $I_2$ provided to the capacity parameter unit PU may relate to one or more of the following in respect of each transport vehicle: driving speed of the transport vehicle, turning radius of the transport vehicle; crop tank capacity of the transport vehicle, time needed to travel from one or more entrance/exit gates to the offload point at a crop storage area; time needed for unloading crops.

The calculation unit CU may provide information $I_3$ relating to details of the whole operation of the support system, and this information may be stored on a a computer storage medium.

As mentioned above it is preferred in a harvesting operation that neither of the harvester itself or any of the employed transport vehicles as far as possible avoids movement in a transverse direction of the working rows and the headlands.

Accordingly, it is preferred in a harvesting operation that the harvester itself and the transport vehicles used, as far as possible, moves along the direction of the working rows and the headlands.

In general, the calculation unit CU is being configured, on the basis of a predetermined trajectory to be followed by said harvester, to perform the following steps:

i) calculating the path to be followed by said harvester from its current position to the position at which the crop tank of said harvester has reach maximum capacity;

ii) calculating the unload position(s) at working vehicle would need to be at in order to receive the unloaded crops from said harvester;

iii) verify that the unload position(s) calculated in step ii) is/are valid position(s);

iv) in respect of each available transport vehicle, calculate the possible paths needed to be followed by said transport vehicle and the time necessary in order to arrive at the unload position(s) calculated in step ii);

v) select the available transport vehicle which is able to arrive at the unload position(s) calculated in step ii) in the least amount of time, as that the specific transport vehicle being responsible for emptying the crop tank of the harvester;

vi) upon loading the crops and departure of said specific transport vehicle selected in step v), repeat steps i) - v).

Hereby an iterative process is conducted in which the support system continuously after each unload of harvested crops from the harvester calculates the position of the harvester at the time when the harvester need unloading and furthermore, the system also suggests the optimum selection of the specific transport vehicle and the path to be followed by that transport vehicle in order to arrive at the harvester for unloading and transportation of harvested crops.

An input unit IU in the form of a alphanumerical keyboard and a display unit in the form of a monitor allows an operator to program the support unit and to monitor the operation thereof.

Thereby, the harvesting operation itself involving a harvester and a number of transport vehicles is optimized.

The support system according to a first aspect of the present invention involves a mapping unit which is configured for receiving information relating to an estimated crop yield distribution of said agricultural field.

As the agricultural field may comprise areas of soil which present unequal crop growth conditions the crop yield will vary depending on which specific area the crop is growing in. Such different crop growth conditions may be assigned to and caused by different soil quality and different drainage ability at the various areas of the agricultural field.

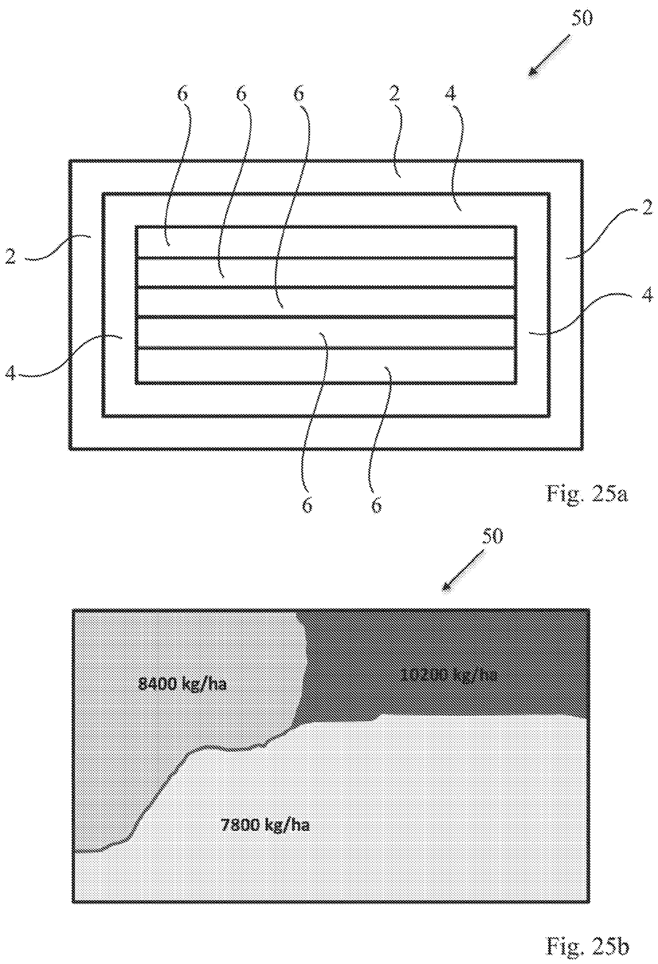

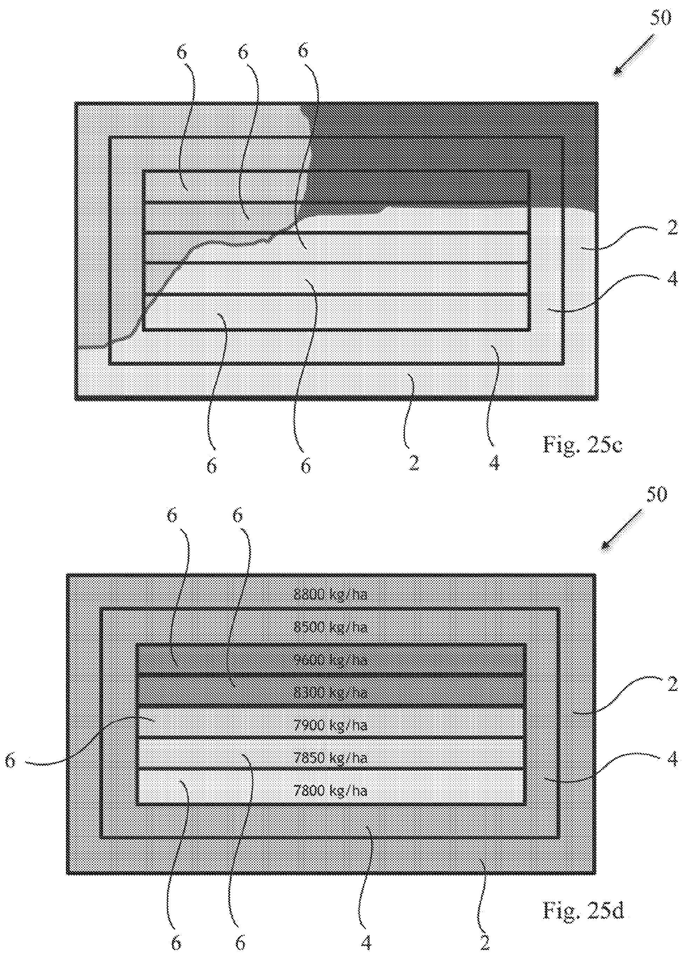

As a simplified example Fig. 25 b illustrates an estimated crop yield distribution of the area of the agricultural field 50. This crop yield distribution may be based on previous year's crop yield and/or may be based on aerial images captured during growth of the crops on the field.

Fig. 25b illustrates the agricultural field 50 comprising three areas exhibiting three different estimated crop yields. These estimated crop yields vary from 7800 kg/ha in the least fertile area over 8400 kg/ha in a medium fertile area to 10200 kg/ha in the most fertile area of the agricultural field.

The mapping unit which is configured for receiving information relating to an estimated crop yield distribution of said agricultural field may be provided with the kind of information which is illustrated in fig. 25b.

Alternatively, the mapping unit which is configured for receiving information relating to an estimated crop yield distribution of said agricultural field may be provided with more detailed information. This embodiment is illustrated in Fig. 25d.

Fig. 25a illustrates in a simplified way the crop field shown in fig. 25b which has been dived into two headlands 2, 4 and five working rows 6.

Now, overlaying the estimated crop distribution illustrated in fig. 25b with the outline of headlands and working rows as illustrated in fig. 25a results in fig. 25c.

From fig. 25c the crop yield distribution may be estimated in respect of each path of a headland and each path of a working row. This is illustrated in fig. 25d.

Fig. 25d illustrates that the crops yield distribution resolved into individual headlands and working rows are as follows: 8800 kg/ha and 8500 kg/ha in respect of the headlands 2 and 4, and 7800 kg/ha, 7850 kg/ha, 7900 kg/ha 8300 kg/ha, and 9600 kg/ha, respectively in respect of the working rows 6.

Providing the information relating to the estimated crop yield distribution in respect of each path of a headland and each path of a working row allows the support system according to the first aspect of the present invention to calculate the position of the harvester on the agricultural field at which the harvester needs to be unloaded with respect to harvested crops. From this position on the agricultural field the necessary location of a transport vehicle at an unload situation may be calculated and hence also the trajectory to be followed by each of the transport vehicles may be calculated.

From the array of possible trajectories to be followed by each of the transport vehicles to be followed in order for a specific transport vehicle to arrive to a suitable unload position for unloading harvested crops from the harvester, the most optimum path and specific transport vehicle is being determined by the support system.

The optimum path to be followed by a specific transport vehicle may be based on smallest necessary distance to be travelled by any of the transport vehicles or based on which vehicle is able to travel the necessary distance in the least amount of time.

Subsequently, the support system may provide instructions as to which transport vehicle is to be responsible for the following transportation of crops from the harvester to the storage area and also as to which trajectory to be followed by that specific transport vehicle.

This ensures to a high extent that the harvester does not need to await the arrival of a transport vehicle when the harvester needs unloading crops and hence the harvesting operation performed by the fleet comprising a harvester and a number of transport vehicles can be performed with optimum efficiency.

If the transport vehicle is able to arrive at the offload position before the harvester then it must wait at its current position until it is necessary to start moving towards the offload location. Conversely if it is unable to reach the offload location in time then the harvester must wait at the offload position until the transport vehicle is able to arrive. If the harvester is defined to be moving during the offload the path that the offload position takes is calculated by first calculating the path that the harvester will take along the current field path and then offsetting this by the offset of the offload spout, relative to the harvester.

The path the transport vehicle must take to return to a gate is also calculated, from the transports position when the offload is complete to a field gate. If more than one gate is available the shortest distance is calculated. Once the transport has left the field it must travel to the storage facility to unload and then return to the field. Since the out of field routes are not calculated, only the time the transport will be out of the field is required to be known.

The optimization of a route to be followed may be conducted by finding a route for the harvester and then calculating the routes for the transport vehicle such that the process is executed in an efficient manner. To create a route for the harvester an initial route is first proposed. This initial route is then modified using heuristic methods to produce an optimised route.

An example of how the initial route is created is to use a stepwise greedy method. The harvester and the transports all start at know positions (normally at gates or entrances to the field but they could also be in any other known position), with a known current load (this is normally 0, but it could also be between 0 and the maximum capacity) and at a known available time (this is normally the current time for the harvester, but it may be the case for a transport that it is not available at the beginning of an operation and may only become available after a given period of time e.g. if it has to travel to the field.)

In the example, all of the field paths are prioritised with the outer headlands having the highest priority, followed by inner headlands and finally the working rows. The route, which is a series of field paths, is initiated as the current position of harvester, it is the amended by adding additional paths and checking the result.

A set of the highest priority paths is constructed as candidates to be added to the route. A set temporary routes is constructed by adding each of the highest priority paths to the route in turn and then calculating if the load of the route requires the transport to offload the harvester. If an offload is required the offload point is calculated as well as the time require for the transport to travel to the offload point. If the addition of a specific path results in an invalid offload position, a penalty is added to the overall time so as to make this addition unfavourable in the subsequent assessment. The addition of each path is assessed and the addition which provides the lowest harvested material to operation time ratio is chosen as the best route. Once a path is selected as the best to be added to the route, it, and any other paths that cover the same area (such as a path that cover the same working row but in the opposite direction) are also removed from the set of available paths. This process continues, always constructing a set of the remaining highest priority paths as candidates until all areas of the field have been covered and there are no more paths to be added. The route is then concluded by directing the harvester to a field gate. This route is referred to as the initial route.

An example of a heuristic method to produce an optimised solution is a tabu search method. This method is started with an initial solution. It then applies a number of moves on solution to produce a neighbourhood of local solution. From this neighbourhood the best local solution is chosen as a temporary solution. The specific move, and how it was applied, used to create the solution is made tabu, meaning that it is not allowed to be used to create new local solutions for a set number of iterations. This helps to stop local optimal from stopping the search. If the temporary solution is better than the global solution then the global solution is set as the local solution. The method is then restarted which with the temporary solution becoming the initial solution. Once a better solution has not been found for a number of iteration the method is either concluded or the moves are modified.

An example of the moves used to produce a better route are to switch two neighbouring paths, of equal prioritisation level, in the route. Another move is two insert a forced offloading point between two paths so that the harvester must unload before it is full. Both of these moves made be attempted to be applied to each path in the route, first and the last paths which are the gates of the field. Therefore, for a route containing N+2 paths it would be possible to produce a neighbourhood of 2N solutions.

Further details as to how to mathematically construct possible trajectories to be followed by the harvester and the transport vehicles are set out in Example 2 below.

It should be noted that in the present invention in its various aspects and all their embodiments it is understood that it preferred that the trajectory to be followed by each transport vehicle does not involve paths that includes areas of soil which has not yet been harvested, and hence still comprises unharvested crops.

**Example 2**

This example is intended for illustrating one way of mathematically processing situation of having a boundary of a field having located there in a number of obstacles in order to create an array of possible working rows and headlands within that field which may be connected in various ways in order to create an array of possible continuous working paths to be followed.

This example is illustrated by a harvester comprising a tractor towing a harvesting implement. However, a person skilled in the art will be able to adapt the method disclosed below to a situation in which the harvester is a self-propelled vehicle comprising a harvesting tool.

Likewise, a person skilled in the art will be able to adapt the method illustrating in this example to a situation in which a possible and/or an optimized route to be followed by a transport vehicle to and from the position of the harvester which needs crop unload is needed.

In the method of the present example an efficiency parameter may be assigned and calculated in respect of possible continuous working path and the most efficient continuous working path can be selected among the array of possible continuous working paths.

The principle set out in this example relies on the following steps:

1. Define the boundary of the field.

2. Define the boundary of any obstacle.

3. Approximate the boundary of the field to a boundary polygon.

4. Approximate the boundary of any obstacle to an obstacle polygon.

5. Define one or more headlands arranged immediately within the boundary polygon.

6. Define one or more headlands surrounding any obstacle polygon.

7. Define a work area which comprises parts of the field which does not belong to a headland or an obstacle.

8. Within the work area, define different arrays of parallel working rows, wherein in respect of each array of parallel working rows, these working rows are being parallel to one of the headlands.

9. In respect of each array of parallel working rows, connect in various ways working rows and headlands so as to create an array of possible continuous working paths.

10. Define a cost parameter and calculate in respect of all possible continuous working paths the total cost of following that specific continuous working path.

11. Present as the most optimum working path, that specific continuous working path exhibiting the lowest overall total cost.

Field Definition

In the calculation of the present example the following inputs are needed.

- Defined Field Boundary
- Defined Obstacle Boundary
- Defined Field Gates
- Vehicle working width
- Vehicle turning radius
- Specified number of headlands

**Processing steps**

Field Definition

The field is described by the field boundary which is a polygon consisting of n points. In Fig. 1 the polygon P consists of 6 point ($P_1,...,P_6$). The points of P are ordered such that they are in a clockwise orientation. P = ([10,43],[48,86],[89,58],[83,18],[42,34],[21,16])

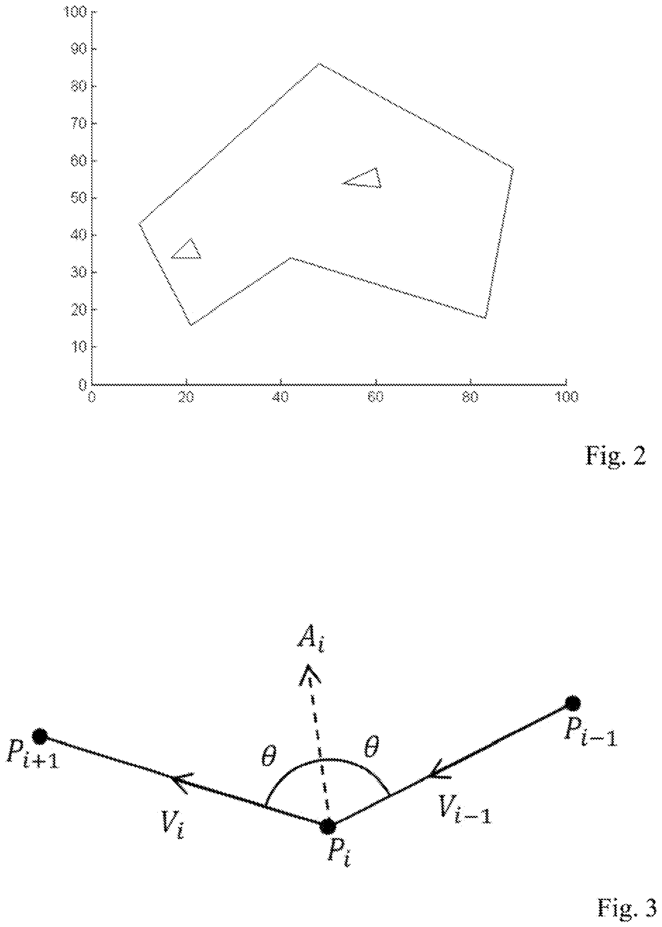

Within the boundary there are a number of obstacles. The obstacles the obstacles are described by a boundary. This may be the physical edge of the obstacle or it may also include a "safety offset" to ensure working vehicles remain a safe distance away. In Fig. 2 the obstacles are described as polygons ($O^1,O^2$) with points ($O^1_1, ...,O^1_3$) and ($O^2_1,...,O^2_3$). The points of the obstacles are ordered such they are in an anti-clockwise orientation. $O^1$ = ([23,34],[21,39],[17,34]), and $O^2$ = ([60,58],[53,54],[61,53])

A number of gates are defined for the field. These are entry/exit point for the field and are located on the field boundary. In the example there is one gate $G^1$ =[83,18].

The working width is the effective working width of the agricultural machine or implement. The turning radius is minimum radius the vehicle can turn. For a standard two axle vehicle with one axle steering it can be calculated by dividing the distance between the front and rear axles of the vehicle by the tangent of the maximum angle of the steering axle.

Creating the headlands

The headlands are areas which encompass the field boundary and the surround the obstacle. These areas are used by the vehicle to more easily manoeuvre in the field. The number of headlands required to safely operate in a field is the integer greater than 2*turning radius divided working width. The headlands have an outer boundary and an inner boundary. For the first headland areas the outer boundary is the boundary of the field or the obstacle and the inner boundary plotted such that the area between the outer boundary and inner boundary has a width equal to the working width. For subsequent headlands, the outer boundary is the inner boundary of the previous headland.

To calculate the headland areas the boundary of the field and the boundary of each obstacle are expressed as a set consisting of 3 arrays {*P,V,A*}, where P is the array of corner points of the boundary, V is the array of vertices linking the corners of the boundary and A is the array of vectors at the apex of each boundary point.

$$V_i = P_{i+1} - P_i : i = 1 ... p - 1$$

$$V_p = P_1 - P_p$$

$$\frac{A_i \cdot -V_{i-1}}{|A_i||V_{i-1}|} = \cos\theta = \frac{A_i \cdot V_i}{|A_i||V_i|}, \quad \frac{A_i \cdot [V_{i,y} \quad -V_{i,x}]}{|A_i||V_i|} < \frac{A_i \cdot [-V_{i,y} \quad V_{i,x}]}{|A_i||V_i|}$$

$$|A_i| = \frac{1}{\sin\theta}$$

This is illustrated in Fig. 3.

The constrain on $A_i$ ensures that the $A_i$ vector always points to the right of the $V_i$ vector. See <fig. 3.

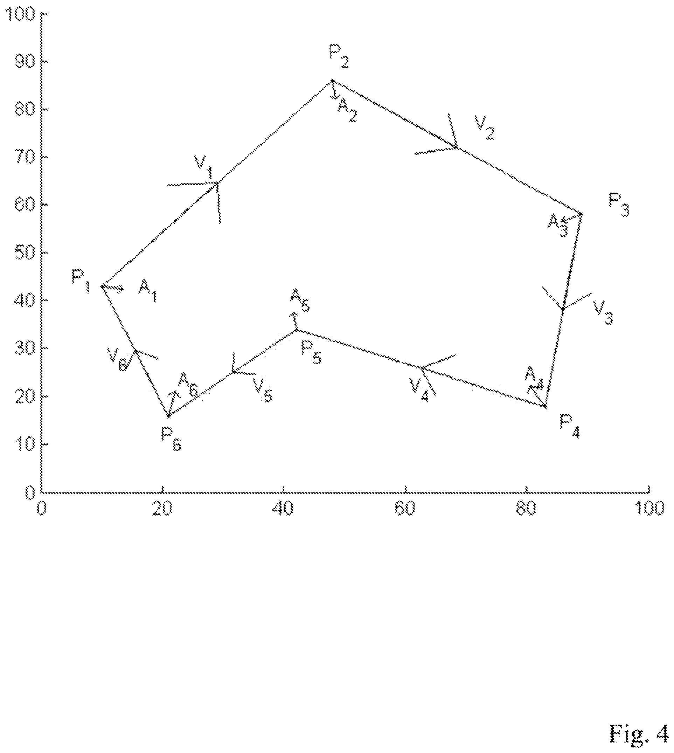

In Fig. 4 the P,V, and A arrays are labelled for the field boundary. In the example for the field boundary V = ([38,43],[41,-28],[-6,-40],[-41,16],[-21,-18],[-11,27]) and A = ([1.16,-0.20],[0.16,-1.32],[-1.08,-0.47],[-0.80,1.39],[-0.2,1.15],[0.40,1.66]).

To create the inner boundary, the corners of the outer boundary are projected along the apex vector, so that they maintain an equal perpendicular distance from the two vectors creating the corner. Therefore for a distance $\lambda$ a new boundary can be created as a new set of point *P'*.

$$P_i' = P_i + \lambda * A_i \; : \; i = 1, \dots, p$$

V' and A' can then be created using the above equations.

There are 3 cases which must be monitored when creating the new boundary. The 3 cases are a self-corner interception, a self-edge interception and a 2 polygon interception.

Case 1:

The self-corner interception occurs when two adjacent apex vectors intersect, resulting in *V* to have a zero length and $P_i = P_{i+1}$. Therefore for each *P* there is a value, $\alpha$, where this happens.

$$P_i' = P_i + \alpha_i * A_i = P_{i+1} + \alpha_i * A_{i+1} = P_{i+1}' \; : \; i = 1 \dots p-1$$

$$P_1' = P_1 + \alpha_p * A_1 = P_p + \alpha_p * A_p = P_p'$$

$$\alpha_i = \frac{P_{i+1} - P_i}{A_i - A_{i+1}} : \; i = 1 \dots p-1$$

$$\alpha_p = \frac{P_1 - P_p}{A_p - A_1}$$

$$\alpha_n = min\{\alpha_i\}: \; \alpha_i > 0, \quad i = 1 \dots p$$

If a self-corner interception occurs $P_i'$ is removed from *P'*, and *V* and *A'* are recalculated.

For the example of the field boundary the $\alpha$ = [38.34,36.76,40.9,36.89,160.54,14.89]. Therefore $\alpha_n$ = 14.89. Since O1 and O2 are both triangles with the points arrange in an anti-clockwise orientation it is impossible a self-corner interception to occur.

Case 2:

The self-edge interception occurs when an apex vector intersects a vertex between two points.

$$P_i' = P_j' + b * V_j' : \; i,j = 1, \dots p; i \neq j, 0 < b < 1$$

Therefore for each pair of point $P_i$ and $P_j$ there is a value, $\beta_{ij}$, where this occurs.

$$\beta_{ij} = \frac{P_{j+1} - P_j - P_i}{A_i + A_j - A_{j+1}} : i = 1 \dots p, j = 1 \dots p - 1, i \neq j, i \neq j + 1$$

$$\beta_{ip} = \frac{P_1 - P_p - P_i}{A_i + A_p - A_1} : i = 1 \dots p - 1$$

$$\beta_{nm} = min \left\{ min\{\beta_{ij}\}_j \right\}_i : \; i = 1 \dots p, j = 1 \dots p, \beta_{ij} > 0$$

If a self-edge interaction occurs then P' is split into two subsets, $^1P'$ and $^2P'$ and $V'$ and $A'$ are recalculated.

$$P_i' = P_i + \beta_{nm} * A_i : \; i = 1 \dots p$$

$$^1P' = \left\{ P'_1, \dots, P'_n, P'_{m+1}, \dots, P'_p \right\}, \; ^2P' = \left\{ P'_n, \dots, P'_m \right\} \quad if \;\; n < m$$

$$^1P' = \left\{ P'_1, \dots, P'_m, P'_n, \dots, P'_p \right\}, \; ^2P' = \left\{ P'_{m+1}, \dots, P'_n \right\} \quad if \;\; n > m$$

For the example field $\beta_{ij}$ is describing in the Table 1 below.

**Table 1**

| j\i | 1 | 2 | 3 | 4 | 5 | 6 |
|---|---|---|---|---|---|---|
| 1 | - | 38.24 | 32.79 | -4.22 | 16.76 | - |
| 2 | - | - | 29.96 | 23.26 | 19.23 | 38.18 |
| 3 | 23.21 | - | - | 41.13 | 39.04 | 43.31 |
| 4 | 28.25 | 21.46 | - | - | 46.61 | 47.95 |
| 5 | 18.55 | 22.46 | 36.84 | - | - | 69.48 |
| 6 | 14.50 | 28.13 | 47.40 | 35.48 | - | - |

Therefore $\beta_{nm}$ = 14.50, n = 1, m = 6. Again since O1 and O2 are both triangles and therefore only have 3 points it is impossible a self-edge interception to occur.

Case 3:

The 2 polygon interception occurs when two polygon sets, such as a field boundary and an obstacle boundary intercept. NB if two polygons are created due to case 2 these two polygon it is impossible that these two polygons can intercept.

$$^{gh}\gamma_{ij} = \frac{^hP_j - {}^hP_{j+1} - {}^gP_i}{^gA_i + {}^hA_j - {}^hA_{j+1}} : \quad i = 1 \dots {}^gp, j = 1 \dots {}^hp - 1, \quad g, h = 1, \dots N, g \neq h$$

Where N, is the number of active sets describing polygons.

$$^{kl}\gamma_{nm} = min\left\{min\left\{min\left\{min\{^{gh}\gamma_{ij}\}_j\right\}_i\right\}_h\right\}_g$$

If a 2 polygon interception occurs the two polygons become merged together to form a new polygon, with the original two polygons being removed.

$$^g P_i' = {^g P_i} + {^{kl}\gamma_{nm}} * {^g A_i}: \ i = 1 \ldots {^g p}, g = 1, \ldots N$$

$$P = \left\{ {^k P_1}, \ldots, {^k P_n}, {^l P_{m+1}}, \ldots {^l P_{h_p}}, {^l P_1}, \ldots, {^l P_m}, \ldots, {^k P_n}, \ldots, {^k P_{g_p}} \right\}$$

For the example with the field with the field boundary being $^1P$, and the obstacles $O_1$ and $O_2$ being $^2P$ and $^3P$ respectivly then $^{gh}\gamma_{ij}$ is described by Table 2

**Table 2**

| h\g | | 1 | | | | | | 2 | | | 3 | | |
|---|---|---|---|---|---|---|---|---|---|---|---|---|---|
| | j\i | 1 | 2 | 3 | 4 | 5 | 6 | 1 | 2 | 3 | 1 | 2 | 3 |
| 1 | 1 | | | | | | | 2219 | 5.46 | - | - | 17.13 | 525.1 |
| | 2 | | | | | | | 31.77 | - | 160 | 13.56 | 106.3 | - |
| | 3 | | | | | | | 32.19 | - | - | - | - | 13.20 |
| | 4 | | | | | | | 40.43 | 124.6 | - | 76.56 | 14.05 | - |
| | 5 | | | | | | | 23.38 | - | - | 125.2 | 10.02 | - |
| | 6 | | | | | | | - | - | 6.76 | 70.31 | 15.43 | - |
| 2 | 1 | - | - | - | - | 4.54 | - | | | | - | 123.4 | 162.5 |
| | 2 | 5.22 | - | - | - | - | - | | | | - | - | - |
| | 3 | - | - | - | - | - | 0.93 | | | | - | - | - |
| 3 | 1 | - | 6.09 | - | - | - | - | - | - | - | | | |
| | 2 | 8.56 | - | - | - | - | - | 8.58 | 15.10 | - | | | |
| | 3 | - | - | 11.17 | - | - | - | - | - | - | | | |

Therefore $^{kl}\gamma_{nm}$ = 0.93, k = 1, l = 2, n = 6, m = 3.

To create the inner boundary of the headlands for a field boundary, with or without in field objects, an iterative algorithm is used. The algorithm limits the accumatled distance moved to be no larger than the sort after working width.
W = working width
*While (W>0)*
Calculate $\alpha_n$, $\beta_{ij}$, and $^{gh}\gamma_{ij}$ where approirate

$$\lambda = min\{\alpha_n, \beta_{nm}, {^{kl}\gamma_{nm}}, W\}$$

Calculate P',V',A' using $\lambda$

$$W = W - \lambda$$

*End while*

For the example, if a working width of 3 is used, the iteration of the loop is,

$$\lambda = min\{\alpha_n, \beta_{nm}, {}^{kl}\gamma_{nm}, W\} = min\{14.89, 14.50, 0.93, 3\} = 0.93$$

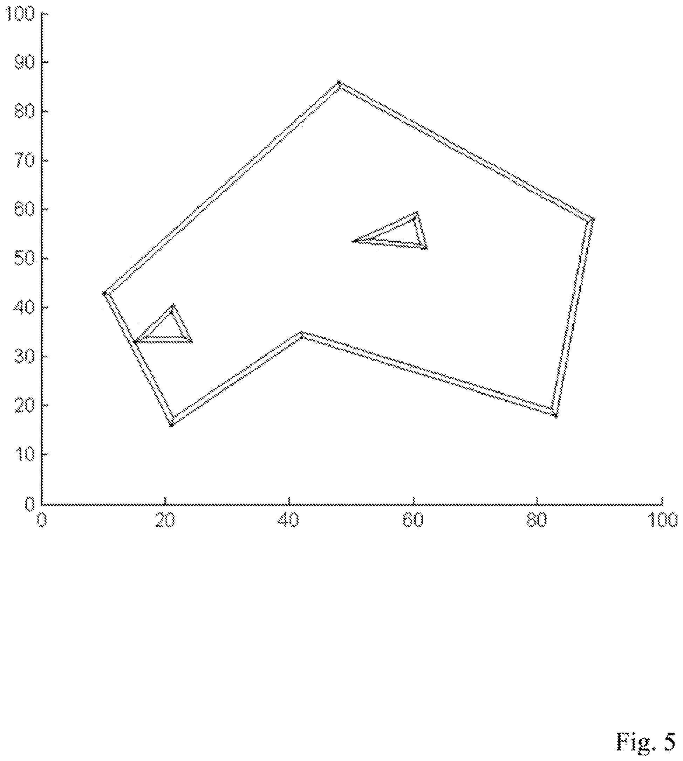

This means that the first interception to occur is the 2 polygon interception between the field boundary and the first obstacle. The field boundary and the first obstacle then become merged together and the process continues. See Fig. 5

At the next iteration of the loop, P is now ([24.38,33.07],[ 21.27,40.84],[ 15.06,33.07],[ 11.08,42.82],[ 48.15,84.76],[ 87.99,57.56],[ 82.25,19.30],[ 41.82,35.07],[ 21.38,17.55],[ 15.06,33.07]) and $O_2$ is now ([60.66,59.45],[ 50.10,53.42],[ 62.17,51.91]).

The new interceptions are as follows

$\alpha$ = [-,-,4.53,37.25,20.58,66.52,34.19,5.83,915.86]. Therefore $\alpha_n$ = 4.53

$\beta_{ij}$

| j\i | 1 | 2 | 3 | 4 | 5 | 6 | 7 | 8 | 9 | 10 |
|---|---|---|---|---|---|---|---|---|---|---|
| 1 | - | - | - | - | - | - | - | 3.61 | - | - |
| 2 | - | - | - | 4.29 | - | - | - | - | - | - |
| 3 | - | - | - | - | - | - | - | - | - | - |
| 4 | 2219 | - | - | - | - | - | - | - | - | - |
| 5 | 30.84 | - | - | - | - | - | 22.36 | - | 37.25 | - |
| 6 | 31.27 | - | 35.22 | - | - | - | - | - | 35.22 | - |
| 7 | 39.51 | - | 46.73 | - | - | - | - | - | 46.73 | - |
| 8 | 22.45 | - | 34.19 | 14.76 | - | - | - | - | - | - |
| 9 | - | - | - | - | - | - | - | - | - | - |
| 10 | - | - | - | - | - | - | - | - | - | - |

${}^{gh}\gamma_{ij}$

| h\g | | 1 | | | 2 | | | | | | | | | |
|---|---|---|---|---|---|---|---|---|---|---|---|---|---|---|
| | j\i | 1 | 2 | 3 | 1 | 2 | 3 | 4 | 5 | 6 | 7 | 8 | 9 | 10 |
| 1 | 1 | | | | - | - | - | - | 5.16 | - | - | - | - | - |
| | 2 | | | | 7.65 | - | 9.78 | 7.63 | - | - | - | - | - | - |
| | 3 | | | | - | - | - | - | - | 10.24 | - | - | - | - |

(continued)

| h\g | | 1 | | | 2 | | | | | | | | | |
|---|---|---|---|---|---|---|---|---|---|---|---|---|---|---|
| | j\i | 1 | 2 | 3 | 1 | 2 | 3 | 4 | 5 | 6 | 7 | 8 | 9 | 10 |
| 2 | 1 | - | 122.50 | 161.5 | | | | | | | | | | |
| | 2 | - | - | - | | | | | | | | | | |
| | 3 | - | - | - | | | | | | | | | | |
| | 4 | - | 16.20 | 524.2 | | | | | | | | | | |
| | 5 | 12.63 | 105.3 | - | | | | | | | | | | |
| | 6 | - | - | 12.27 | | | | | | | | | | |
| | 7 | 75.63 | 13.12 | - | | | | | | | | | | |
| | 8 | 124.2 | 9.09 | - | | | | | | | | | | |
| | 9 | 69.38 | 14.51 | - | | | | | | | | | | |
| | 10 | - | 127.7 | 190.2 | | | | | | | | | | |

$$\lambda = min\{\alpha_n, \beta_{nm}, {}^{kl}\gamma_{nm}, W\} = min\{4.53, 4.29, 5.16, 2.07\} = 2.07$$

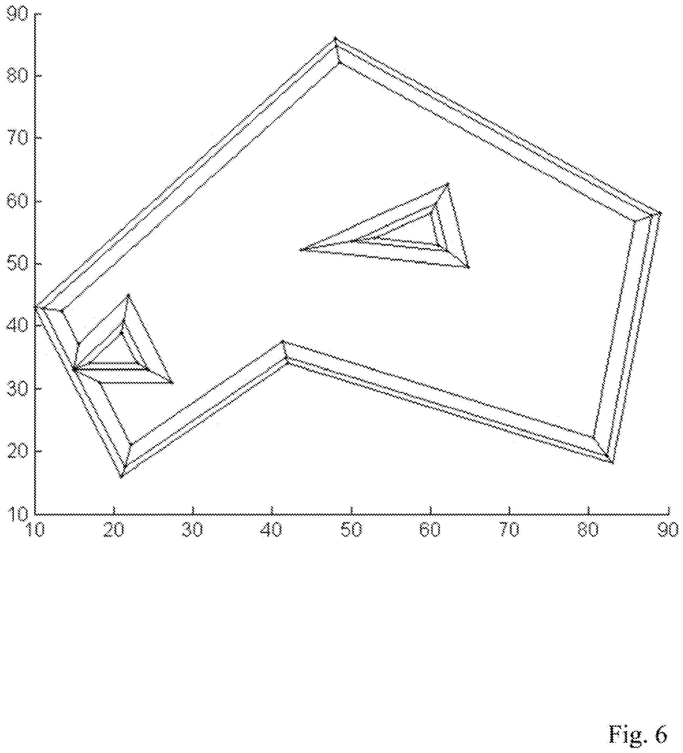

Since W is now smaller than the other parameters there is no need to do a third iteration, as W = 0 in the next iteration. Therefore the resultant polygons are {[27.43,31], [21.87,44.89], [15.64,37.1], [13.48,42.41], [48.49,82.03], [85.75,56.58], [80.59,22.16], [41.41,37.45], [22.21,20.99], [18.13,31], [62.12,62.67], [43.70,52.14], [64.76,49.51] }}. See Fig. 6.

If multiple headland passes are required then the resultant polygons are used as the outer boundaries of the next set of headlands. This method will be know as *movePolygonSet* and it will need a set of polygons and a distance to generate a new set of polygons, such that.

$$movePolygonSet\left(\{\ {}^{1}P, ..., \ {}^{N}P\}, W\right) \Rightarrow \{\ {}^{1}P', ..., \ {}^{M}P'\}$$

It shoud be noted that in case any obstacle is not from the outset defined by a boundary being a polygon, that obstacle is approximated to an obstacle polygon and the headland around that obstacle is defined relative to that obstacle polygon.

Working rows

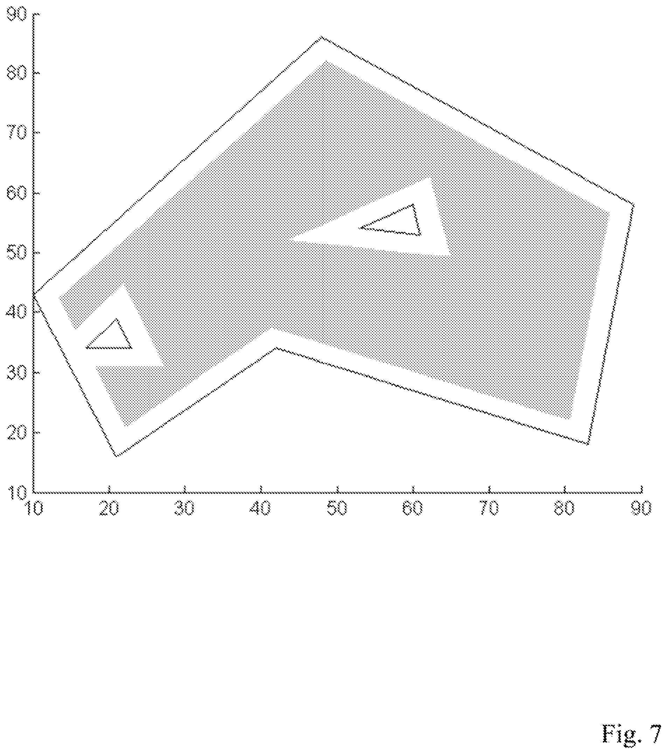

After all of the headlands have been calculated the area remaining inside of the field boundary and outside of any remaining obstacles is considered the working area. See Fig. 7.

For the example one of the obstacles became integrated with the headland while the other remained separate. The outer boundary of the working area is P = {[27.43,31],[21.87,44.89],[15.64,37.1],[13.48,42.41],[48.49,82.03],[85.75,56.58],[80.59,22.16] ,[41.41,37.45],[22.21,20.99],[18.13,31]} and the hole created by the remaining obstacle is $H^1$ = {[62.12,62.67],[43.70,52.14],[64.76,49.51]}

The working rows are plotted as parallel rectangles across the working area, which have a width equal to the working width of the vehicle. The working rows are parallel to the driving direction of the field. Theoretically this could be any direction, which would give an infinite set of possible directions. However to simplify the calculation a limited set of directions parallel to all the edges of the remaining work area (both from the inside and outside) is used.

For the example the set of possible driving direction D ={[-0.38,0.93], [-0.62,-0.78], [-0.37,0.93], [0.66,0.75], [0.83,-0.56], [-0.15,-0.99], [-0.93,0.36], [-0.76,-0.65], [-0.38,0.93], [1,0], [-0.87,-0.5], [0.99,-0.12], [-0.2,0.98]}.

The working rows are calculated between two parallel lines, $L^i$ and $R^i$. These are the bounding left and right sides, respectively, of the working row. $L^i$ is defined as a straight line between the points $L_1^i$ and $L_2^i$, and $R^i$ is defined as a straight line between $R_1^i$ and $R_2^i$. The first left side $L^1$ starts at the furthest most left point of the boundary, with respect to the driving direction, and extends from the furthest most back point, $L_1^1$, to the furthest most forward point, ,

$L_2^1$ ,with respect to the driving direction, of the boundary. The first right side R$^1$ is the transposition of L$^1$ a distance equal to the working width to the right, with respect to the driving direction.

$$\alpha_1 = min\{DD \circ P_j\}_j$$

$$\alpha_2 = max\{DD \circ P_j\}_j$$

$$\beta = min\{DD^\perp \circ P_j\}_j$$

$$L_1^1 = \alpha_1 * DD + \beta * DD^\perp$$

$$L_2^1 = \alpha_2 * DD + \beta * DD^\perp$$

$$R_1^1 = \alpha_1 * DD + (\beta + W) * DD^\perp$$

$$R_2^1 = \alpha_2 * DD + (\beta + W) * DD^\perp$$

$$L_1^i = \alpha_1 * DD + ((i-1) * W + \beta) * DD^\perp$$

$$L_2^i = \alpha_2 * DD + ((i-1) * W + \beta) * DD^\perp$$

$$R_1^i = \alpha_1 * DD + (\beta + i * W) * DD^\perp$$

$$R_2^i = \alpha_2 * DD + (\beta + i * W) * DD^\perp, \ \ 1 \leq i \leq \left\lceil \frac{max\{DD^\perp \circ P_j\}_j}{W} \right\rceil$$

The maximum area of the each working row, *MWR,* is then defined as a polygon such that $MWR^i = \left[L_1^i, L_2^i, R_2^i, R_1^i\right]$ . The area covered by each row, *RCA,* is then intersection between the maximum area of each working row, *MWR,* and the complement of any holes in the work area, H, and the outer boundary of the work area, P. If P is not convex and there are no holes in the work area then the intersection will result in only one polygon. However if these conditions are not met then it may be the case that the intersection produces more than more polygon.

$$(P/H) \cap MWR = RCA$$

For each resultant intersection the working row, WR, is then plotted as such;

$$\gamma_1 = min\{DD \circ (\ ^iRCA_j^k - L_1^i)\}_j$$

$$\gamma_2 = max\{DD \circ (\ ^iRCA_j^k - L_1^i)\}_j$$

$$^iWR_1^k = L_1^i + \gamma_1 * DD$$

$$^iWR_2^k = L_1^i + \gamma_2 * DD$$

$$^iWR_3^k = L_1^i + \gamma_2 * DD + W * DD^\perp$$

$$^iWR_4^k = L_1^i + \gamma_1 * DD + W * DD^\perp$$

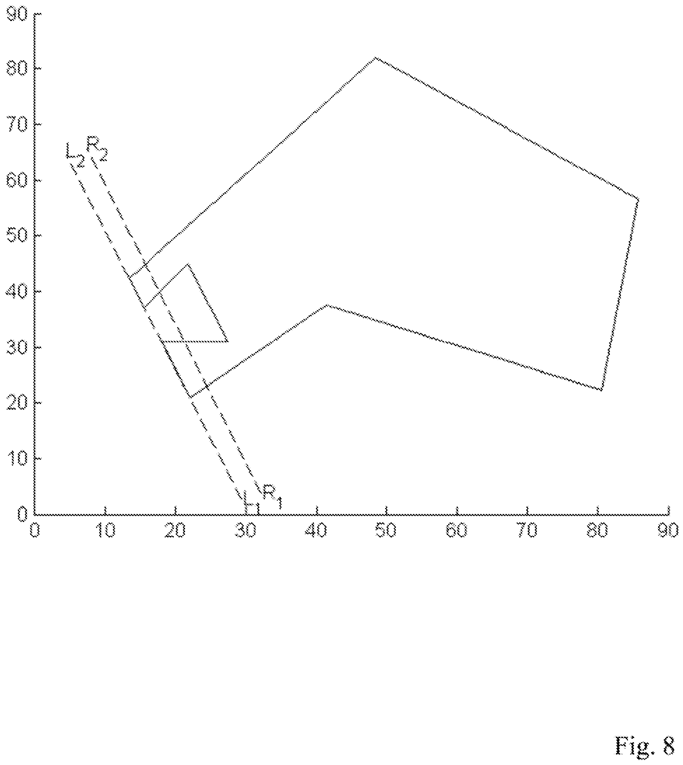

In the example, for the first driving direction, DD = $D_1$ = [-0.38, 0.93], therefore $\alpha_1$ = -9.35, $\alpha_2$ = 58.15, and $\beta$ = 28.26. The four points of MWR[1] as follows, and shown in Fig. 8.

$$L_1^1 = -9.35 * [-0.38,0.93] + 28.26 * [0.93,0.38] = [29.72,1.81]$$

$$L_2^1 = 58.15 * [-0.38,0.93] + 28.26 * [0.93,0.38] = [4.65,64.49]$$

$$R_1^1 = -9.35 * [-0.38,0.93] + (28.26 + 3) * [0.93,0.38] = [32.5,2.93]$$

$$R_2^1 = 58.15 * [-0.38,0.93] + (28.26 + 3) * [0.93,0.38] = [7.43,65.5]$$

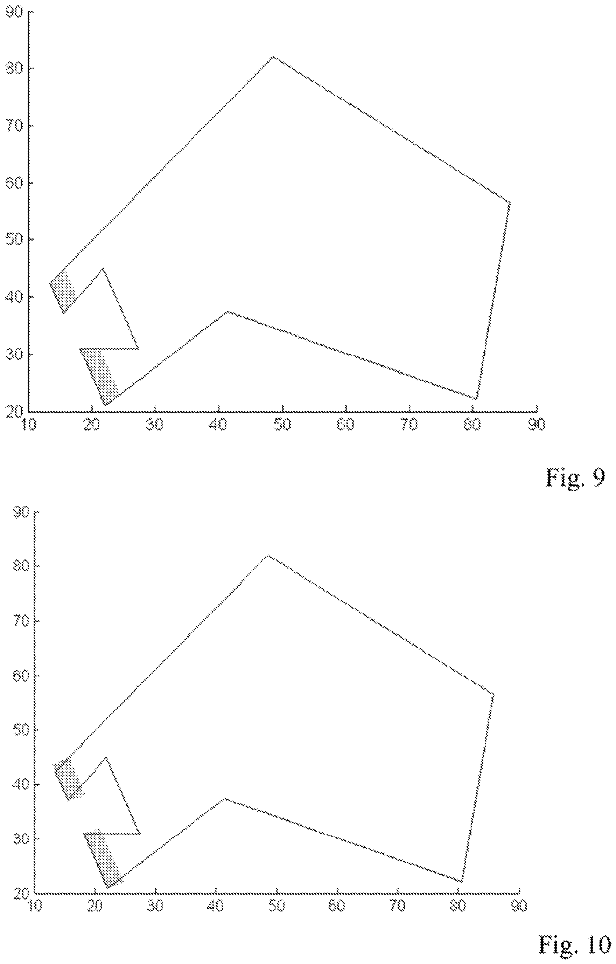

Therefore MWR[1] = {[29.72, 1.81], [4.65,64.49], [7.43,65.5], [32.5,2.93]}. The intersection results in two polygons, see Fig. 9, [1]RCA[1] = {[17.77, 39.76], [15.64, 37.1], [13.48, 42.41], [15.71, 44.93]}, [1]RCA[2] = {[24.49, 22.95], [22.21, 20.98], [18.13, 31], [21.27, 31]}.
Finally the two working rows are, [1]WR[1] = {[15.61, 37.09], [12.92, 43.81], [15.7, 44.93], [18.39, 38.2]} and [1]WR[2] = {[22.07, 20.93], [18.06, 30.97], [20.84, 32.09], [24.86, 22.05]}, see Fig. 10.

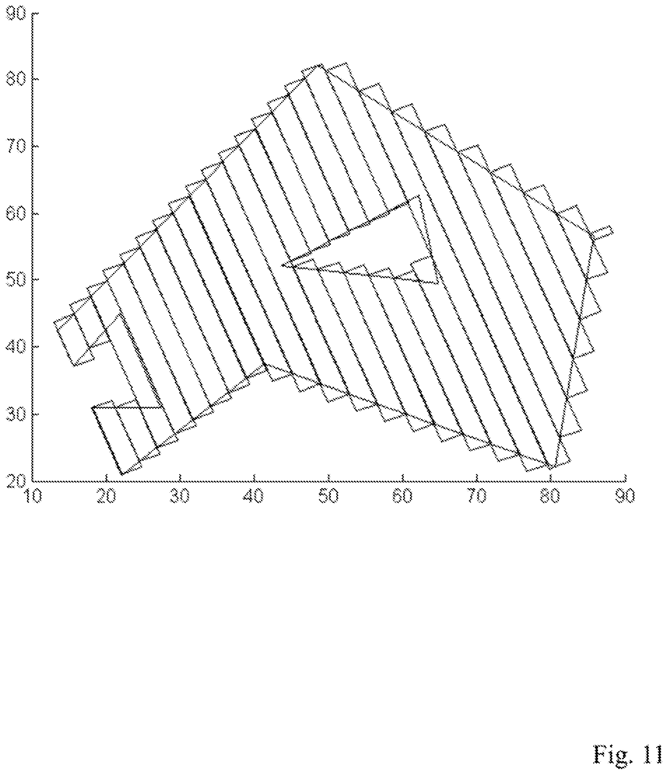

Fig. 11 shows all of the working rows generated across the field in respect of one possible orientation of working rows.

Creation of possible driving paths

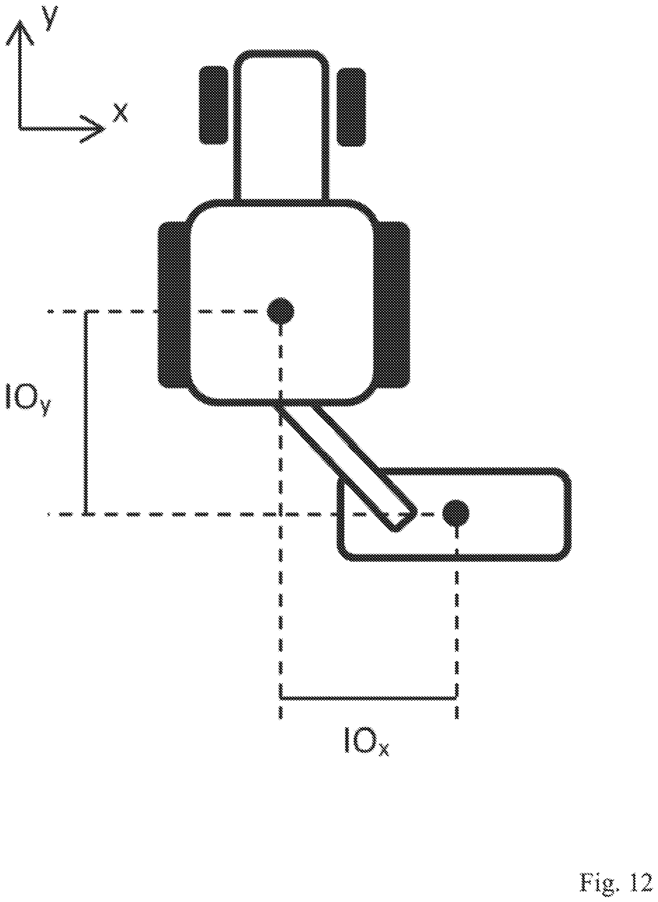

So that a vehicle can navigate the rows and the headlands, driven paths need to be generated for both the headlands and the working rows. The driven paths are plotted down the middle of the defined working rows and headlands. However an offset, IO = [$IO_x$,$IO_y$], can also be included between the vehicle centre and the implement centre in order for the implements centre to maintain a central position on the working row, see Fig. 12.
For each working row WR there are two, DR$_+$ and DR$_-$, one in same direction as the driving direction and one in the opposite direction as the driving direction. Each DR starts at SDR and ends at EDR.

$$\theta = \left(\frac{DD_x}{|DD_x|}\right) * \cos^{-1}\left(\frac{DD_y}{||DD||}\right)$$

$$^iSDR_+^k = L_1^i + \gamma_1 * DD + 0.5 * W * DD^\perp - IO * \begin{bmatrix} \cos(\theta) & -\sin(\theta) \\ \sin(\theta) & \cos(\theta) \end{bmatrix}$$

$$^iEDR_+^k = L_1^i + \gamma_2 * DD + 0.5 * W * DD^\perp - IO * \begin{bmatrix} \cos(\theta) & -\sin(\theta) \\ \sin(\theta) & \cos(\theta) \end{bmatrix}$$

$$^iDR_+^k = \begin{bmatrix} ^iSDR_+^k, & ^iEDR_+^k \end{bmatrix}$$

$$^{i}SDR_{-}^{k} = L_{1}^{i} + \gamma_{2} * DD + 0.5 * W * DD^{\perp} - IO * \begin{bmatrix} \cos(\theta + \pi) & -\sin(\theta + \pi) \\ \sin(\theta + \pi) & \cos(\theta + \pi) \end{bmatrix}$$

$$^{i}EDR_{-}^{k} = L_{1}^{i} + \gamma_{1} * DD + 0.5 * W * DD^{\perp} - IO * \begin{bmatrix} \cos(\theta + \pi) & -\sin(\theta + \pi) \\ \sin(\theta + \pi) & \cos(\theta + \pi) \end{bmatrix}$$

$$^{i}DR_{-}^{k} = \begin{bmatrix} ^{i}SDR_{-}^{k}, & ^{i}EDR_{-}^{k} \end{bmatrix}$$

In the example the vehicle has an offset IO = [1, -1], and taking the example of the first WR, $^{1}WR^{1}$, the two DR can be found as;

$$\theta = \left(\frac{-0.38}{0.38}\right) * \cos^{-1}\left(\frac{0.93}{1}\right) = -0.376$$

$$^{1}SDR_{+}^{1} = [29.72 \quad 1.81] + 37.99 * [-0.38 \quad 0.93] + 0.5 * 3 * [0.93 \quad 0.38] + [1 \quad -1] * \begin{bmatrix} 0.93 & 0.37 \\ -0.37 & 0.93 \end{bmatrix}$$
$$= [15.70 \quad 38.21]$$

$$^{1}EDR_{+}^{1} = [29.72 \quad 1.81] + 45.23 * [-0.38 \quad 0.93] + 0.5 * 3 * [0.93 \quad 0.38] + [1 \quad -1] * \begin{bmatrix} 0.93 & 0.37 \\ -0.37 & 0.93 \end{bmatrix}$$
$$= [13.01 \quad 44.93]$$

$$^{1}SDR_{-}^{1} = [29.72 \quad 1.81] + 45.23 * [-0.38 \quad 0.93] + 0.5 * 3 * [0.93 \quad 0.38] + [1 \quad -1] * \begin{bmatrix} -0.93 & -0.37 \\ 0.37 & -0.93 \end{bmatrix}$$
$$= [15.61 \quad 43.81]$$

$$^{1}EDR_{-}^{1} = [29.72 \quad 1.81] + 37.99 * [-0.38 \quad 0.93] + 0.5 * 3 * [0.93 \quad 0.38] + [1 \quad -1] * \begin{bmatrix} -0.93 & -0.37 \\ 0.37 & -0.93 \end{bmatrix}$$
$$= [18.30 \quad 37.09]$$

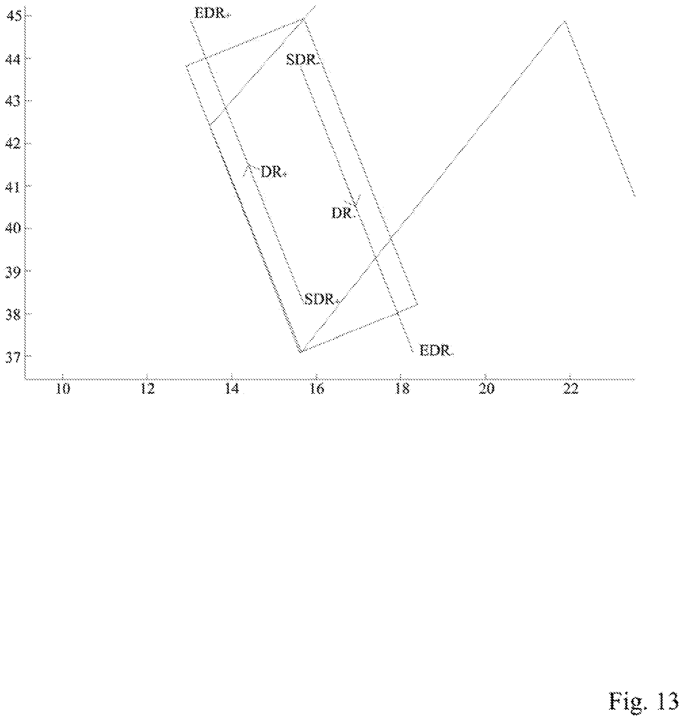

See Fig. 13.

Driven paths are also calculated for the headlands, each headland has two driven paths with one in a clockwise orientation and the other in an anti-clockwise orientation. The headland driven paths must also account for any implement offset are described above. The driven paths of the headlands are calculated using the centre of each headland which is in turn calculated from the inner boundaries. To find the centre of a headland the simplified version of the *movePolygonSet* method is used. The method if called movePolygonSetBack, the method requires a single polygon and a distance to move. As in the movePolygonSet method the polygon, P, is defined as a number of points and V and A can be derived from P, however the constraint placed on A is different such that $A_i$ is always to the left of $V_i$.

$$V_i = P_{i+1} - P_i : i = 1 \dots p - 1$$

$$V_p = P_1 - P_p$$

$$\frac{A_i \cdot -V_{i-1}}{|A_i||V_{i-1}|} = \cos\theta = \frac{A_i \cdot V_i}{|A_i||V_i|}, \quad \frac{A_i \cdot [V_{i,y} \quad -V_{i,x}]}{|A_i||V_i|} > \frac{A_i \cdot [-V_{i,y} \quad V_{i,x}]}{|A_i||V_i|}$$

$$|A_i| = \frac{1}{\sin\theta}$$

$$P'_i = P_i + \lambda * A_i \; : \; i = 1, \dots, p$$

The iterative process it also simplified as there is only one polygon, such that.
*While (W>0)*
Calculate $\alpha_n$, where approirate

$$\lambda = min\{\alpha_n, W\}$$

Calculate P',V',A' using $\lambda$

$$W = W - \lambda$$

*End while*

For the example of the first headland where P = {[27.43,31], [21.87,44.89], [15.64,37.1], [13.48,42.41], [48.49,82.03], [85.75,56.58], [80.59,22.16], [41.41,37.45], [22.21,20.99], [18.13,31]} and W = 1.5. This creates $\alpha$ = [-,-,2.46,35.17,29.88,18.52,64.45,32.12,3.76,913.79], and since $\lambda = min\{\alpha_n,W\}$, therefore $\lambda$ = 1.5 and resultant polygon is P = {[25.22,32.5], [21.44,41.95], [15.22,3417], [11.74,42.70], [48.24,84.01], [87.38,57.29], [81.79,20.08], [41.71,35.72], [21.60,18.49], [15.90,32.50]}.

Since the headlands need two driven paths, one in each direction, these can be derived from P1, the resultant of the *movePolgonSetBack* method, and P2, which is the reversal P1. The offset, IO, is again used to create the straight driven path, SDj, for each direction around the headland. SDj has twice as many points as the polygon, Pj, it is derived from such that.

$$P^j = \{P_1^j, \dots, P_p^j\}, \qquad SD^j = \{SD_1^j, \dots, SD_{2*p}^j\}$$

$$V_i = P_{i+1} - P_i : i = 1 \dots p - 1$$

$$V_p = P_1 - P_p$$

$$\theta_i = \left(\frac{V_{i,x}}{|V_{i,x}|}\right) * \cos^{-1}\left(\frac{V_{i,y}}{\|V_i\|}\right)$$

$$SD_{2*i-1}^j = P_i^j - IO * \begin{bmatrix} \cos(\theta_i) & -\sin(\theta_i) \\ \sin(\theta_i) & \cos(\theta_i) \end{bmatrix} : i = 1, \dots, p$$

$$SD_{2*i}^j = P_{i+1}^j - IO * \begin{bmatrix} \cos(\theta_i) & -\sin(\theta_i) \\ \sin(\theta_i) & \cos(\theta_i) \end{bmatrix} : i = 1, \dots, p - 1$$

$$SD_{2*p}^j = P_1^j - IO * \begin{bmatrix} \cos(\theta_p) & -\sin(\theta_p) \\ \sin(\theta_p) & \cos(\theta_p) \end{bmatrix}$$

For the example for P1, $\theta$ = [-0.38,-2.47,-0.39,0.72,2.17,-2.99,-1.2,-2.28,-0.39,1.57] and SD1 = {[23.92,33.06],[20.14,42.5],[21.59,40.54],[15.37,32.77],[13.91,34.72],[10.44,43.25],[11.65,44. 12],[48.16,85.43],[49.64,84.28],[88.77,57.55],[88.22,56.15],[82.64,18.94],[80.5,19.51],[40.41, 35.16],[41.6,34.31],[21.5,17.08],[20.3,19.04],[14.59,33.05],[16.9,33.5],[26.22,33.5]}.

A third method is now introduced called the *movePolygonSetForward* method. This is exactly the same as the *movePolygonSetBack* method taking in a polygon and a distance and returning another polygon, however the constraint on A is such that $A_i$ is always to the right of $V_i$.

$$\frac{A_i \cdot -V_{i-1}}{|A_i||V_{i-1}|} = \cos\theta = \frac{A_i \cdot V_i}{|A_i||V_i|}, \quad \frac{A_i \cdot [V_{i,y} \quad -V_{i,x}]}{|A_i||V_i|} < \frac{A_i \cdot [-V_{i,y} \quad V_{i,x}]}{|A_i||V_i|}$$

In order to make the straight driven line drivable by the vehicle, the vehicles minimum turning radius must be taken into account. Firstly the SD must be simplified to remove any corners too sharp for the vehicle. This is done by applying the *movePolygonSetBack method* and then the *movePolygonSetForward* method using the minimum turning radius (mtr) in succession until the methods create changes.
P = *movePolygonSetBack(SD,mtr)*

```
While (true)
         P' = movePolygonSetForward(P,2*mtr)
         P" = movePolygonSetBack(P',2*mtr)
         if (P==P")
         then Break while
         else P=P"
         End while
```

CS$^1$ = P
CS$^2$ = *movePolygonSetForward(P,2*mtr)*
CS$^3$ = P'

For the example the vehicles minimum turning radius (mtr) is 2 and as previously stated SD$^1$ = {[23.92,33.06], [20.14,42.5], [21.59,40.54], [15.37,32.77], [13.91,34.72], [10.44,43.25], [11.65,44.12], [48.16,85.43], [49.64,84.28], [88.77,57.55], [88.22,56.15], [82.64,18.94], [80.5,19.51], [40.41,35.16], [41.6,34.31], [21.5,17.08], [20.3,19.04], [14.59,33.05], [16.9,33.5], [26.22,33.5]}. Using the *movePolygonSetBack(SD$^1$,2)* generates P = {[26.69,31.50], [21.72,43.91], [15.49,36.12], [12.88,42.53], [12.99,42.61], [48.41,82.69], [48.45,82.66], [86.32,56.80], [86.27,56.67], [80.99,21.46], [26.00,42.92], [38.35,34.16], [22.00,20.15], [17.38,31.50]} and then using *movePolygonSetForward(P,4),* P' = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]} . Finally using *movePolygonSetBack(P',4)* generates P" = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}.

As can be seen P" is not the same as P so the loop must be restated with P=P", d *movePolygonSetForward(P",4)* generates P' = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]} and *movePolygonSetBack(P',4)* generates P" = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}.

Now it can be seen that P" = P so the loop can be broken and CS$^1$ = {[26.69,31.5], [21.73,43.91], [15.5,36.13], [12.89,42.54], [13,42.62], [48.41,82.69], [48.46,82.66], [86.32,56.8], [86.27,56.67], [80.99,21.47], [41.51,36.87], [22.01,20.16], [17.38,31.5]}, CS$^2$ = {[23.74,33.5], [21.15,39.98], [14.93,32.22], [10.44,43.25], [11.65,44.12], [48.16,85.43], [49.64,84.28], [88.77,57.55], [88.22,56.15], [82.6,18.69], [41.9,34.57], [21.2,16.83], [14.41,33.5]} and CS$^3$ = {[20.78,35.5], [20.56,36.05], [14.37,28.31], [7.99,43.97], [10.31,45.61], [47.91,88.16], [50.82,85.89], [91.21,58.31], [90.16,55.63], [84.2,15.92], [42.29,32.28], [20.4,13.51], [11.44,35.5]}.

The driven path of the headland is built as a sequence of straight lines and of arced lines. The straight lines are defined by a start point, spi, a start direction, sdi, a and length, l$_i$, whereas the arced lines have a define centre of rotation, cr$_i$. The centre of rotation of the straight line can also be considered as infinitely far away from the start point in a direction perpendicular to the start direction.

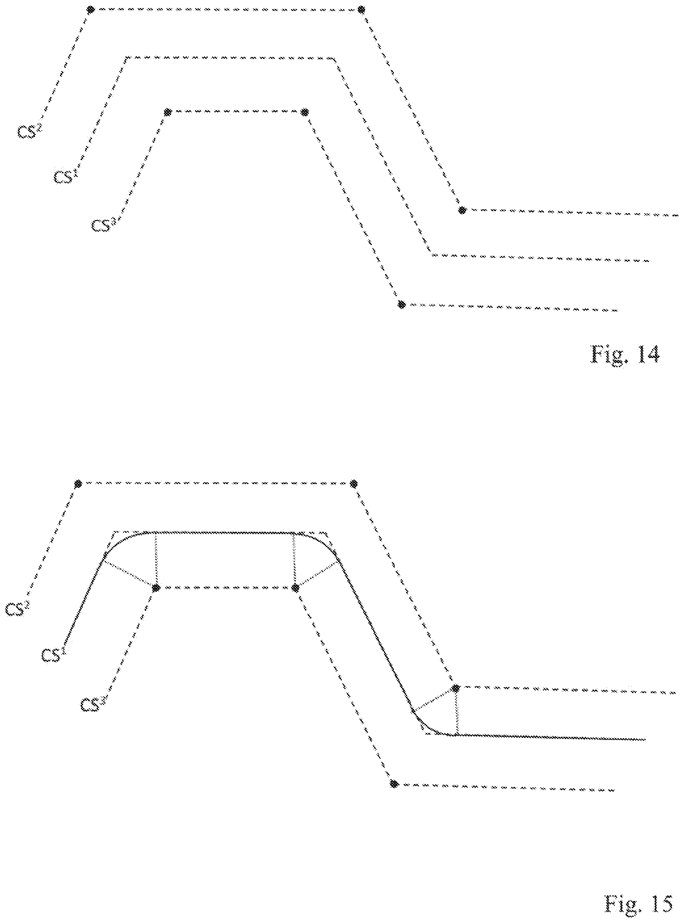

Fig. 14 shows an example of CS$^1$, CS$^2$, and CS$^3$ to define their relationship. The straight lines of the driven path are defined as parallel to the lines in CS$^1$. The corners of CS$^2$ and CS$^3$ are then used as the centres of the arced lines to link together the straight lines.

Fig. 15 shows an example of how the driven path is constructed.

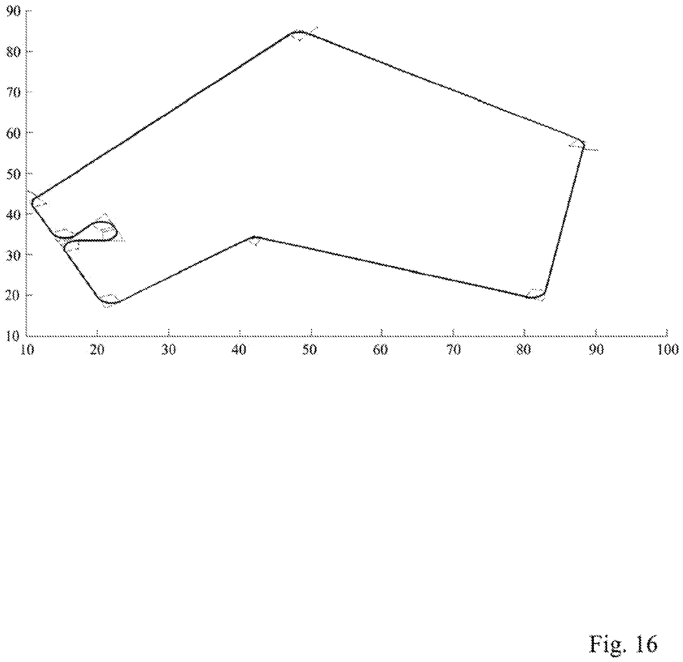

For the example field CS$^1$, CS$^2$, and CS$^3$ have already been calculated, therefore Table 3 below describes the sequence of straight lines and arced lines, the example of the driven path is shown in Fig. 16.

**Table 3**

| i | Start point (sp$_i$) | Start direction (sdi) | Length (l$_i$) | Centre of Rotation (cr$_i$) |
|---|---|---|---|---|
| 1 | [22.64,36.24] | [-0.37,0.93] | 0.60 | ~ |
| 2 | [22.42,36.80] | [-0.37,0.93] | 4.17 | [20.56,36.05] |
| 3 | [19.00,37.30] | [-0.62,-0.78] | 3.11 | ~ |
| 4 | [17.06,34.88] | [-0.62,-0.78] | 4.16 | [15.50,36.13] |
| 5 | [13.65,35.37] | [-0.38,0.93] | 6.92 | ~ |
| 6 | [11.04,41.78] | [-0.38,0.93] | 2.36 | [12.89,42.54] |
| 7 | [11.48,43.96] | [0.71,0.70] | 0.33 | ~ |
| 8 | [11.71,44.19] | [0.71,0.70] | 0.14 | [10.31,45.61] |
| 9 | [11.81,44.29] | [0.66,0.75] | 53.02 | ~ |
| 10 | [46.92,84.02] | [0.66,0.75] | 2.95 | [48.41,82.69] |
| 11 | [49.59,84.31] | [0.81,-0.59] | 0.07 | ~ |
| 12 | [49.64,84.27] | [0.81,-0.59] | 0.05 | [50.82,85.89] |
| 13 | [49.69,84.24] | [0.83,-0.56] | 45.73 | ~ |
| 14 | [87.45,58.45] | [0.83,-0.56] | 2.38 | [86.32,56.80] |
| 15 | [88.28,56.37] | [-0.21,-0.98] | 0.32 | ~ |
| 16 | [88.21,56.06] | [0.21,-0.98] | 0.13 | [90.16,55.63] |
| 17 | [88.18,55.93] | [-0.15,-0.99] | 35.15 | ~ |
| 18 | [82.97,21.17] | [0.15,-0.99] | 3.59 | [80.99,21.47] |
| 19 | [80.27,19.60] | [-0.93,0.36] | 39.98 | ~ |
| 20 | [43.02,34.14] | [-0.93,0.36] | 2.16 | [42.29,32.28] |
| 21 | [40.99,33.79] | [-0.76,-0.65] | 23.29 | ~ |
| 22 | [23.31,18.64] | [-0.76,-0.65] | 3.79 | [22.01,20.16] |
| 23 | [20.15,19.40] | [-0.38,0.93] | 12.25 | ~ |
| 24 | [15.53,30.75] | [-0.38,0.93] | 3.92 | [17.38,31.50] |
| 25 | [17.38,33.50] | [1.00,0.00] | 3.40 | ~ |
| 26 | [20.78,33.50] | [1.00,0.00] | 3.90 | [20.78,35.50] |

Joining Driving Paths

To be able to plot a continual path for a vehicle to negotiate all of the headlands and working rows, connections are needed between the separate entities. Connections are created from working row driven path ends (EDR) to the driven paths of the headlands, and from the driven paths to the headland to working row driven path starts (SDR).

There are three types of connections which are used to connect a point to a path, and each connection type depends on whether it is connecting to a part of the driven path that is either: a straight line, an arced line in the same direction as the turn from the point, or an arced line in the opposite direction to the turn from the point.

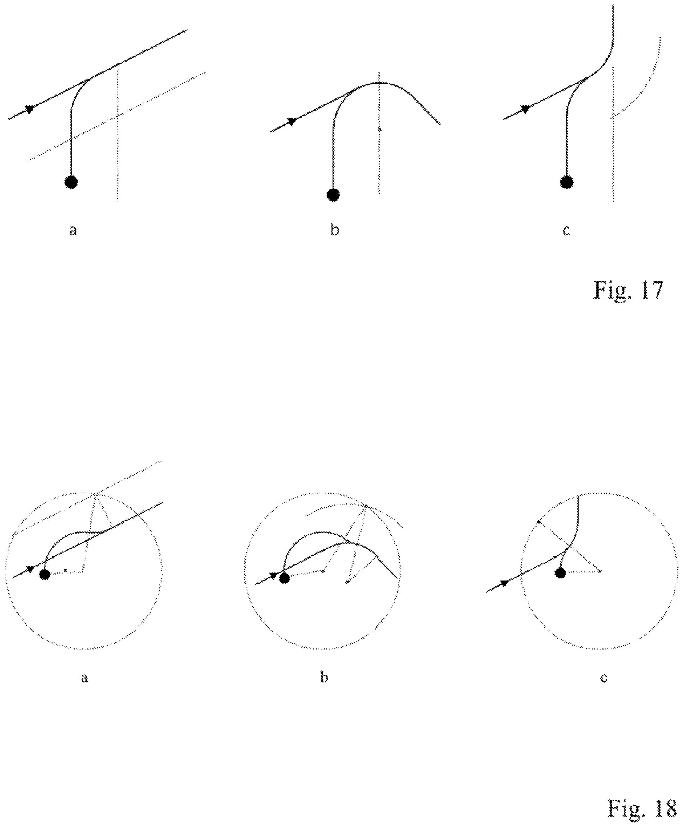

The first type of connection involves moving forward from the point in the specified direction and then making a single turn to join the other driven path, see Fig. 17.

To calculate the centre of the single turn a line is plotted parallel to the specified direction at an offset of the turning radius perpendicular to the specified direction in the direction of the turn. The centre of the single turn is defined as the intercept between this and a second line relating to the driven path. When joining the part of the path that is straight, see Fig. 17(a)) second line is plotted parallel to the driven path at an offset of the turning radius perpendicular to the driven path in the direction of the turn. When joining the part of the path that is an arced line in the same direction (Fig. 17(b)) the second line is in fact a point corresponding to the centre of rotation of the arced line. When joining the part of the path that is an arced line in the opposite direction (Fig. 17(c)) the second line is an arced line with the same centre as the driven path arced line, but with a radius which is twice as large.

The second type of connection involves calculating two turns, in opposite directions, to join a point to the other driven path, see Fig. 18.

The centre of the first is set at a distance of equal to the turning radius away from the point perpendicular to the specified direction in the direction of the first turn. The second turn is then in the opposite direction as the direction of the first turn and it's centre is calculated as the intercept of a circle with the same centre as the first turn but twice the radius and a second line.

When joining the part of the path that is straight (see Fig. 18(a)) the second line is a line plotted parallel to the driven path at an offset of the turning radius perpendicular to the driven path in the direction of the second turn. When joining the part of the path that is an arced line in the same direction as the first turn (Fig. 18(b)) the second line is an arced line with the same centre as the driven path arced line, but with a radius which is twice as large. When joining the part of the path that is an arced line in the opposite direction as the first turn (Fig. 18(c)) the second line is in fact a point corresponding to the centre of rotation of the arced line.

The third type of connection is very similar to the first type of connection however the first straight line is allow to go in the opposite direction of the specified direction, i.e. the vehicle reverses.

The third type of connection is deprioritised, as reversing in the field can cause additional problems, such as taking more time or causing damage, therefore if a type 1 connection or type 2 connection can be made between a working row driven path and a headland then a type 3 connection is not attempted.

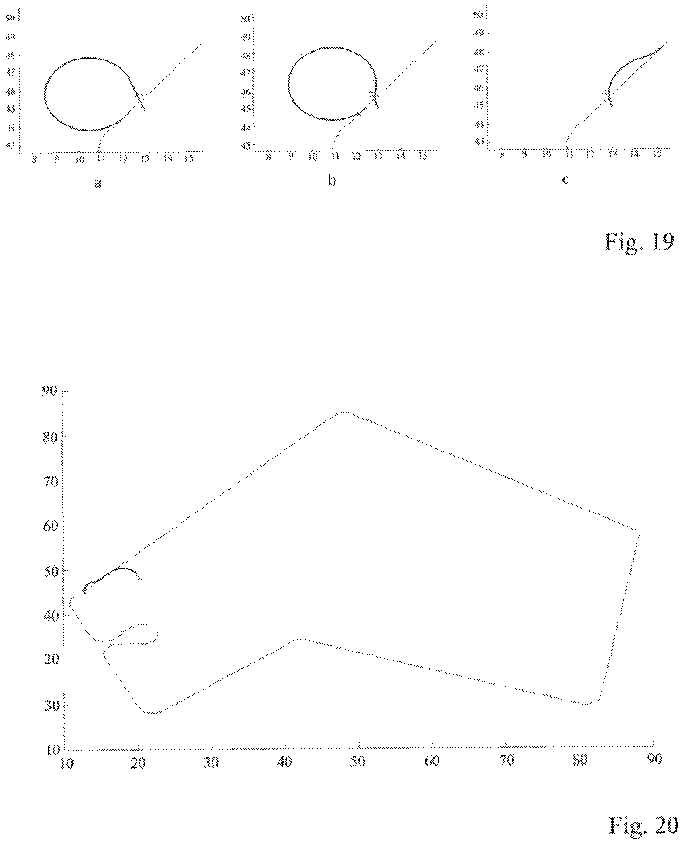

Described earlier, $^{1}EDR^{1}_{+} = [13.01 \quad 44.93]$, is an exit from a working row driven path which needs to join a headland driven path. Using the headland driven path also described earlier it is possible to make three connections between the working row driven path and the headland driven path, see Fig. 19(a)-(c). Fig. 19(a) is a type 1 connection, while Fig. 19(b) and Fig. 19(c) are type 2 connections.

The three paths are full described in the Table 4 below.

**Table 4**

| i | Start point (sp$_i$) | Start direction (sdi) | Length (l$_i$) | Centre of Rotation (cr$_i$) |
|---|---|---|---|---|
| A | | | | |
| 1 | [13.01,44.93] | [-0.37,0.93] | 1.77 | ~ |
| 2 | [12.36,46.57] | [-0.37,0.93] | 10.36 | [10.50,45.83] |
| B | | | | |
| 1 | [13.01,44.93] | [-0.37,0.93] | 1.08 | [14.87,45.67] |
| 2 | [12.90,45.99] | [0.16,0.99] | 11.44 | [10.92,46.31] |
| c | | | | |
| 1 | [13.01,44.93] | [-0.37,0.93] | 3.34 | [14.87,45.67] |
| 2 | [14.31,47.59] | [0.96,0.28] | 1.02 | [13.76,49.51] |

The connections from the headland driven paths to the working row driven paths starts are calculated in exactly the same way however the specified direction and the headland driven paths are first reversed, the connections are then calculated and finally the connections are reversed.

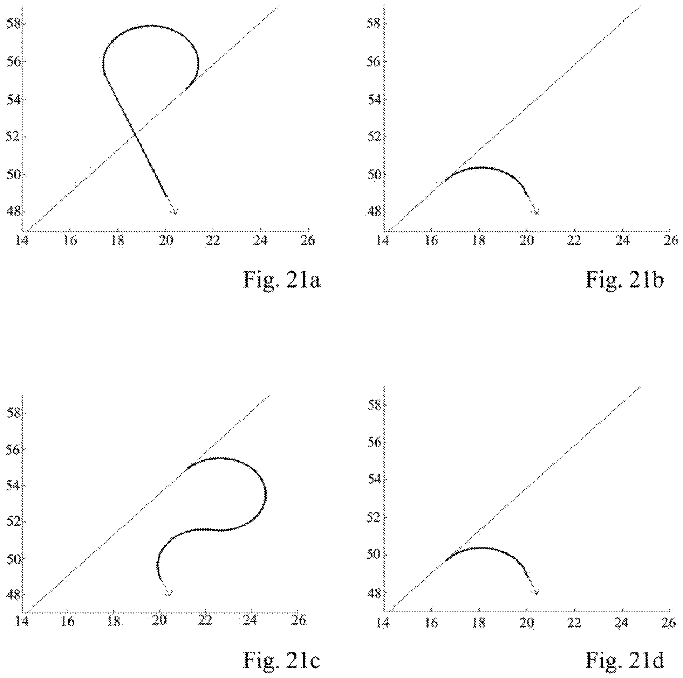

Another working row is defined at a distance of two times the working width, in the direction perpendicular the driving direction, from the originally defined working row. It has two driven paths, as explained earlier, with one of its driven paths beginning at $^{3}SDR^{1}_{-} = [20.06 \quad 48.84]$. There are 4 possible connections between the headland driven path and the working row driven path, see Fig. 21 a-d. In Fig. 21 a and b are type 1 connections while c and d are type 2 connections.

The paths are also described in the Table 5 below.

**Table 5**

| i | Start point (sp$_i$) | Start direction (sdi) | Length (l$_i$) | Centre of Rotation (cr$_i$) |
|---|---|---|---|---|
| A | | | | |

(continued)

| i | Start point (sp$_i$) | Start direction (sdi) | Length (l$_i$) | Centre of Rotation (cr$_i$) |
|---|---|---|---|---|
| 1 | [20.89,54.57] | [0.66,0.75] | 8.5 | [19.39,55.89] |
| 2 | [17.53,55.15] | [0.37,-0.93] | 6.8 | ~ |
| B | | | | |
| 1 | [16.59,49.70] | [0.66,0.75] | 4.08 | [18.09,48.38] |
| 2 | [19.95,49.12] | [0.37,-0.93] | 0.6 | ~ |
| C | | | | |
| 1 | [21.13,54.84] | [0.66,0.75] | 8.34 | [22.63,53.52] |
| 2 | [22.27,51.55] | [0.98,-0.18] | 4.26 | [21.92,49.58] |
| D | | | | |
| 1 | [16.60,49.71] | [0.66,0.75] | 4.22 | [18.10,48.39] |
| 2 | [20.01,48.99] | [0.30,0.95] | 0.16 | [21.92,49.58] |

The field gates are also connected to, and from, the headland driven paths in the same way.

Cost Matrix

The connection from one working row driven path to another can be found if the first working row driven path connects to a specified headland driven path and the specified headland driven path also connects to the second working row driven path. In this way, upon leaving the first working row driven path the vehicle can follow the specified headland driven path until it is able to enter the second working row driven path. Since there are multiple ways for each working row driven path to connect to, and to be connected to from, each headland driven path and since there is the possible of multiple headland driven paths, there are many ways in which two working row driven paths can be connected.
A cost matrix is built up of the minimal distance to connect two working row driven path, the field gates are also included in this cost matrix. The ends of the working row driven paths are not able to connect to themselves therefore the minimal distance between them is set to infinity, also two working row driven paths that cover the same working row are not able to be connected (this would not make sense are it would mean the working row was worked twice), therefore their connection in the cost matrix is also set to infinity

The two working row driven path ends, who's connections were described earlier, are $^1EDR_+^1$ and $^3SDR_-^1$. Both of these ends connect to and from, resp., the same headland driven path therefore they can be connected. Fitting the turns together, going from one working row driven path end along the headland driven path and the into another working row driven path can be done a number of ways. Since there are 3 connectionsfrom $^1EDR_+^1$ to the headland driven path and there are 4 connection from the headland driven path to $^3SDR_-^1$, then in are 12 possible connection between the two working row driven paths. The table 6 below describes the lengths of all of the possible connections.

**Table 6**

| | | $^1EDR_+^1$ | | |
|---|---|---|---|---|
| | | a | B | c |
| $^3SDR_-^1$ | a | 40.84 | 40.60 | 28.26 |
| | b | 23.44 | 23.19 | 10.86 |
| | c | 38.52 | 38.27 | 25.94 |
| | d | 23.46 | 23.21 | 10.88 |

As can be seen from the Table 6 the shortest connection from $^1EDR_+^1$ to $^3SDR_-^1$ is by using connection c and then connection b. The path of the connection is shown in Fig. 20 and described in the Table 7 below.

**Table 7**

| i | Start point ($sp_i$) | Start direction (sdi) | Length ($l_i$) | Centre of Rotation ($cr_i$) |
|---|---|---|---|---|
| 1 | [13.01,44.93] | [-0.37,0.93] | 1.08 | [14.87,45.67] |
| 2 | [12.90,45.99] | [0.16,0.99] | 11.44 | [10.92,46.31] |
| 3 | [15.25,48.19] | [0.66,0.75] | 2.02 | ~ |
| 4 | [16.59,49.70] | [0.66,0.75] | 4.08 | [18.09,48.38] |
| 5 | [19.95,49.12] | [0.37,-0.93] | 0.6 | ~ |

The cost matrix for a portion of the field is chosen below.

| | $^1DR^1_+$ | $^1DR^1_-$ | $^3DR^1_+$ | $^3DR^1_-$ | $^5DR^1_+$ | $^5DR^1_-$ | $G^1$ |
|---|---|---|---|---|---|---|---|
| $^1DR^1_+$ | ~ | ~ | 50.59 | 10.86 | 43.62 | 17.59 | 18.98 |
| $^1DR^1_-$ | ~ | ~ | 28.57 | 27.12 | 25.94 | 33.84 | 19.54 |
| $^3DR^1_+$ | 26.08 | 18.43 | ~ | ~ | 36.90 | 10.87 | 32.05 |
| $^3DR^1_-$ | 45.72 | 45.41 | ~ | ~ | 17.98 | 44.95 | 199.93 |
| $^5DR^1_+$ | 32.79 | 18.02 | 46.91 | 18.43 | ~ | ~ | 54.24 |
| $^5DR^1_-$ | 52.06 | 51.75 | 11.09 | 46.09 | ~ | ~ | 75.76 |
| $G^1$ | 18.72 | 18.41 | 235.60 | 28.25 | 76.01 | 49.97 | ~ |

The cost matrix can be used to determine a feasible route to navigate the field. Since the problem to find the optimal route to navigate the field can be consider an NP-hard problem (i.e. it may not be possible to find a solution in a nominal time frame) the heuristic solvers can be used to find a near optimal route. The solver must also account for the fact working row driven paths are associated to one another by the working row they cover.

In this example a greedy heuristic method is used to find a route to navigate the field. This method provides a simple estimate of what the optimal solution might be. However different solvers could be used, such as a tabu search solver, ant colony solver, genetic algorithms, etc., to give similar results.

Firstly a starting gate is chosen. The gate is chosen by considering all the connections from gates to the working row driven paths. The connections to the working row driven paths are in the rows labelled for each gate. The gate which has the shortest connection to any working row driven path is chosen as the starting gate and the working row driven path is chosen as the first working row driven path in the route. Since this working row driven path has been chosen as a "destination" it cannot be chosen as a destination from another working row driven path again, therefore all the values in the column associated with it are set to infinity. Also the other working row driven path associated with the same working row cannot be chosen as either as destination or a start so all of the values in both the column and the row associated with the other working row driven path are also set to infinity.

The first working row driven path is now considered the start point and shortest connection from it to another working row driven path is now sought after. The shortest connection is that in the row associated with the first working row driven path with the lowest value. The working row driven path with the lowest value is considered the second working row driven path in the route. Again all of the values in the column associated with the second working row driven path and that of the working row driven path associated with the same working row are set to infinity as is the row of values of the working row driven path associated with the same working row. This method continues until only the gates remain as possible destinations. The sum of all of the chosen connections is the estimation of the non-working distance needed to navigate the field.

Additionally a further heuristic solver could be used to improve upon the solution offered by the greedy solution and to find a solution nearer to the optimal solution. The tabu search method takes and initial solution and manipulates it with the aim to find better global solutions without becoming "locked in" to locally optimal solutions.

The tabu search is setup by setting an initial solution to the current local solution and the global solution. The iterative process then begins and a number of "moves" are used to determine a local neighbourhood of solutions around the local solution. The moves used could be switching the direction of a row, or changing the entrance or exit, or switching the order of two rows adjacent in the solution.

From the generated neighbourhood of solutions the best new, non-tabu, solutions is chosen. This new solution now becomes the local solution for the next iteration. The move used to generate the new solution is set to be tabu for a number of iterations, meaning the same move will not be used again for some time. This stops the local solution from becoming stagnant and increases the diversity of the algorithm while also helping to find a globally optimal solution. If the new solution is better than the current global solution then the new solution is also set as the global solution. If the new solution is not better than the global solution for a number of iterations the moves are intensified to find different solutions. The intensification alter the moves differently such that small groups of rows adjacent in the solution have the move expressed upon rather than one row at a time. Due to this there is a limit to the amount of intensification that can be applied to the moves, i.e. if the small group of rows is over half of the available rows. As such when the limit of the intensification is reached the tabu search is finished and an improved solution is returned.

Objective Function Parameterisation

To relate the estimation of the non-working distance, ENWD, to basic properties of the field a simplified model was developed.

The set of generated working rows are calculated using the previously defined methods. For each possible driving direction of the field, where $DD = D_d$, the produced set of working rows are assessed on the following criteria;

Area of the working area, as shown in Fig. 7 = WA

Number of rows = $NR_d$ = number of WR for $D_d$

Total area of rows = $TWRA_d = \sum_{i=0}^{n}$ area of $WR^i$

Width of the area if the direction perpendicular to the driving direction = $OW_d = max\{DD^\perp \circ P_j\}_j - min\{DD^\perp \circ P_j\}_j$.

Average row length = $AR_d = \frac{1}{NR}\sum_{i=0}^{n} max\{DD \circ ({}^iRCA_j^k - L_1^i)\}_j - min\{DD \circ ({}^iRCA_j^k - L_1^i)\}_j$

Longest row length = $LR_d = max\left\{max\{DD \circ ({}^iRCA_j^k - L_1^i)\}_j - min\{DD \circ ({}^iRCA_j^k - L_1^i)\}_j\right\}_i$

Shortest row length = $SR_d = min\left\{max\{DD \circ ({}^iRCA_j^k - L_1^i)\}_j - min\{DD \circ ({}^iRCA_j^k - L_1^i)\}_j\right\}_i$

The number of rows produced by each driving direction ($NR_d$) are ranked, $NRR_d$, so that for the set with the least number of rows $NRR_d = 0$, and for the set with the most number of rows $NRR_d$ = number of possible driving directions. NRR is then normalised by dividing each number by the number of possible driving directions so that $0 \leq NRR_d \leq 1$.

Therefore the basic model for predicting ENWD is as follows;

$$ENWD_d = \lambda_1 WA + \lambda_2 NR_d + \lambda_3 TWRA_d + \lambda_4 OW + \lambda_5 AR_d + \lambda_6 LR_d + \lambda_7 SR_d + \lambda_8 NRR_d$$

$$Optimal\ DD = min\{ENWD_d\}_d$$

Parameterisation of the Objective function

The parameters of the objective function are set empirically by testing numerous driving directions on a large set of real fields. The real fields were taken from the set of Danish fields registered with the government. For each field and driving direction an estimation of the optimal non-working distance was made using the described methods, the parameter of the objective function area also calculated. Finally a regression algorithm is used to determine the parameterisation of the objective function.

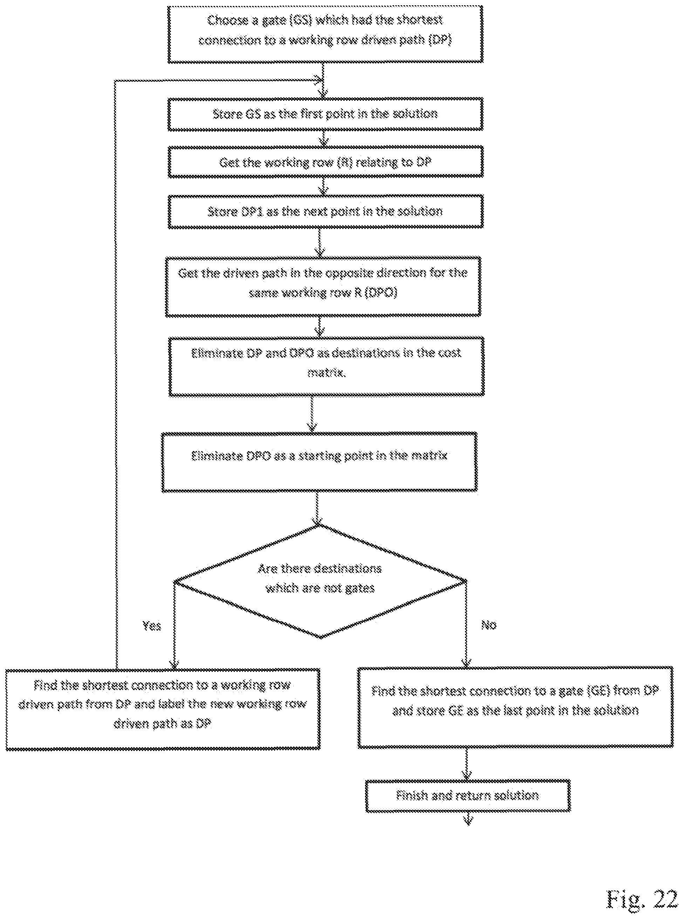

The flow diagram shown in fig. 22 illustrates one example of the individual process steps to be followed in finding an optimized trajectory for a harvester when performing a harvesting operation in a field of crops.

In analogy, these process steps or variations thereof may be used in the finding of an optimized trajectory to be followed by a transport vehicle to be used along with one or more further transport vehicles as part of a harvesting fleet when performing a harvesting operation in a field of crops.

It should be understood that all features and achievements discussed above and in the appended claims in relation to one aspect of the present invention and embodiments thereof apply equally well to the other aspects of the present invention and embodiments thereof.

**List of reference numerals**

| | |
|---|---|
| 2 | Outer headland |
| 4 | Inner headland |
| 6 | Working row |
| 8 | Public road |
| 10 | Storage site for crops |
| 12 | Entrance/exit gate in agricultural field |
| 50 | Agricultural field |
| 100 | Support system |
| MU | Mapping unit |
| PU | Capacity parameter unit |
| COM | Communication unit |
| CU | Calculation unit |
| CS | Communication station |
| EMR | Electromagnetic radiation |
| IU | Input unit |
| DU | Display unit |
| $I_1$ | Information |
| $I_2$ | Information |
| $I_3$ | Information |

**Claims**

1. A support system (100) for providing support in a harvesting operation in an agricultural field, said harvesting operation involving a harvester and two or more transport vehicles for transporting harvested crops; wherein said support system comprises:

   a mapping unit (MU) configured for receiving information associated with coordinates relating to the geometry of said agricultural field;
   a capacity parameter unit (PU) configured for i) receiving one or more capacity parameters relating to the capacity of said harvester; and for ii) receiving one or more capacity parameters relating to the capacity of each of said two or more transport vehicles;
   a communication unit (COM) configured to receive information relating to the current position of each of said two or more transport vehicles;
   a calculation unit (CU) configured for calculating, on the basis of the information received by said mapping unit, said capacity parameter unit and said communication unit:

   A) the unload position of the harvester at a point where the crop tank of said harvester need to be emptied; and
   B) in respect of such an unload position, and in relation to the current position of each available transport vehicle, an optimized route to be driven in respect of each of said two or more available transport vehicles in order to arrive at an unload location for unload of crops from said harvester; and
   C) providing instructions relating to said optimized route to be followed by said specific transport vehicle;

**characterized in that**

the mapping unit (MU) is configured for receiving information relating to an estimated crop yield distribution of said agricultural field; and

the calculation unit (CU) is configured for selecting from the group of available transport vehicles a specific transport vehicle which will be able to arrive at said unload location in the least amount of time.

2. A support system according to claim 1, wherein said mapping unit is configured for receiving coordinates relating to one or more entrance/exit gates of said field;

and/or

wherein said coordinates relating to the geometry of said agricultural field to be received by said mapping unit relates to coordinates of predetermined headland(s) and working rows;

and/or

wherein said coordinates relating to the geometry of said agricultural field to be received by said mapping unit relates to coordinates of the boundaries of said agricultural field and optionally also coordinates of the boundaries of any obstacles being present within said agricultural field;

and/or

wherein said one or more capacity parameters relating to the capacity of said harvester to be received by said capacity parameter unit relates to one or more of the following:

- working speed of said harvester;
- non-working speed of said harvester;
- working width of said harvester;
- turning radius of said harvester;
- crop tank capacity of said harvester;
- possible position(s) of the unloading spout of said harvester, relative to said harvester;
- unload rate of said harvester;

and/or

wherein said one or more capacity parameters relating to the capacity of each of said transport vehicle to be received by said capacity parameter unit relates to one or more of the following:

- driving speed of said transport vehicle;
- turning radius of said transport vehicle;
- crop tank capacity of said transport vehicle;
- time needed to travel from one or more entrance/exit gates to the offload point at a crop storage area;
- time needed for unloading crops, by said transport vehicle, at the offload point at a crop storage area.

3. A support system according to any of the preceding claims wherein said calculation unit is being configured, on the basis of a trajectory to be followed by said harvester, to perform the following steps:

i) calculating the path to be followed by said harvester from its current position to the position at which the crop tank of said harvester has reach maximum capacity;

ii) calculating the unload position(s) at working vehicle would need to be at in order to receive the unloaded crops from said harvester;

iii) verify that the unload position(s) calculated in step ii) is/are valid position(s);

iv) in respect of each available transport vehicle, calculate the possible paths needed to be followed by said transport vehicle and the time necessary in order to arrive at the unload position(s) calculated in step ii);

v) select the available transport vehicle which is able to arrive at the unload position(s) calculated in step ii) in the least amount of time, as that the specific transport vehicle being responsible for emptying the crop tank of the harvester;

vi) upon loading the crops and departure of said specific transport vehicle selected in step v), repeat steps i) - v).

4. A support system according to any of the preceding claims, wherein said information associated with coordinates relating to the geometry of said agricultural field relates to a predetermined trajectory to be followed by said harvester, and wherein said mapping unit is configured for receiving coordinates relating to said predetermined trajectory to be followed by said harvester; wherein optionally said predetermined trajectory to be followed by said harvester is made up of a number of predetermined working rows and a number of predetermined headlands confined within said agricultural field, and wherein said mapping unit is being configured for receiving coordinates relating to the positions of the headlands and the positions of the working rows; said calculation unit optionally is being configured to perform the following steps:

a) approximating the coordinates relating to all predefined headland with a number of coherent entities of straight lines;

b) approximating the coordinates relating to all predefined working rows with a number of coherent entities of straight lines;

c) on the basis of a number of coherent entities of straight lines approximated in step a) and representing headlands; and in respect of coherent entities of straight lines approximated in step b) and representing working rows, define an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path is covering all headlands and all working rows;

d) in respect of each of more possible continuous driving paths defined in step c), calculate an associated cost parameter, said calculated cost parameter being representative of the efficiency by following that specific continuous driving path;

e) select as the trajectory to be followed by said harvester, that specific continuous driving path exhibiting the highest efficiency.

5. A support system according to any of the preceding claims, wherein said information associated with a trajectory to be followed by said harvester is not a predetermined trajectory, and wherein said mapping unit is being configured for receiving:

i) coordinates relating to boundaries of the field to be harvested; and

ii) coordinates relating to the boundaries of one or more obstacles to be avoided by said harvester and said two or more transport vehicles, if present, wherein said one or more obstacles is/are located within said field;

and wherein said calculation unit is being configured for calculating, on the basis of said coordinates relating to boundaries of the field to be harvested and on the basis of said coordinates relating to the boundaries of said one or more obstacles, an optimized trajectory to be followed by said harvester;

wherein optionally said calculation unit is being configured to perform the following steps:

a) approximating the coordinates relating to the boundaries of said field to be harvested to a boundary polygon; and wherein said support system is being configured to determine the trajectory to be followed, based on that approximation;

b) approximating the coordinates relating to the boundaries of each said one or more obstacles, if present, to respective obstacle polygons; and wherein said support system is being configured to determine the trajectory to be followed, based on that approximation;

c) defining one or more headlands located immediately within said boundary polygon;

d) in respect of each obstacle polygon, if present, defining one or more headlands surrounding said obstacle polygon;

e) defining a work area which corresponds to the area within said boundary polygon with the exclusion of the area corresponding to any headlands and with the exclusion of the area corresponding to any obstacle polygon;

f) in respect of the orientation of one or more sides of headlands, define an array of parallel working rows located within said work area;

g) in respect of one or more arrays of parallel working rows defined in step f), define an array of possible continuous driving paths by connecting separate entities by arched segments, wherein said separate entities is being either headlands, or parts of a headland, and working rows, or parts of a working row; so as to define possible continuous driving paths, wherein each driving path is covering all headlands and all working rows;

h) in respect of each of more possible continuous driving paths defined in step g), calculate an associated cost parameter, said calculated cost parameter being representative of the efficiency by following that specific continuous driving path;

i) select as the trajectory to be followed, that specific continuous driving path exhibiting the highest efficiency.

6. A support system according to any of the preceding claims, wherein said calculation unit furthermore is being configured for calculating, in respect of that specific transport vehicle being selected to transport crops from said harvester, an optimized route to be followed by said transport vehicle upon driving from said harvester to a storage area for the transported crops;

wherein optionally said calculation unit only allows a transport vehicle, when located within said field, to travel along those headlands and working rows as defined in respect of the harvester, wherein said headlands comprising a number of coherent entities of straight lines; and wherein said working rows comprising a number of coherent entities of straight lines;

wherein said calculation unit, upon calculating the possible paths needed to be followed by said transport vehicle upon returning to said storage area for the crops are configured to, on the basis of said number of coherent entities of straight lines and representing headland; and in respect of said coherent entities of straight lines and representing working rows, define an array of possible continuous driving paths to said storage area for the crops by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at storage area for the crops;

wherein said calculation unit is being configured to, in respect of each of said more possible continuous driving paths, to calculate an associated cost parameter, said calculated cost parameter being representative of the efficiency by following that specific continuous driving path by the specific transport vehicle;

wherein said calculation unit is being configured to, in respect of each of said more possible continuous driving paths, to select as the trajectory to be followed by said specific transport vehicle, that continuous driving path exhibiting the highest efficiency.

7.  A method for supporting a harvesting operation in an agricultural field, said harvesting operation involving a harvester and two or more transport vehicles for transporting harvested crops; wherein said method comprises:

providing information associated with coordinates relating to the geometry of said agricultural field; and providing information associated with an estimated crop yield distribution of said agricultural field; providing information associated with i) one or more capacity parameters relating to the capacity of said harvester; and ii) one or more capacity parameters relating to the capacity of each of said two or more transport vehicles; providing information relating to the current position of each of said two or more transport vehicles; calculating, on the basis of the information provided:

A) the unload position of the harvester at a point where the crop tank of said harvester need to be emptied; and B) in respect of such an unload position, and in relation to the current position of each available transport vehicle, an optimized route to be driven in respect of each of said two or more available transport vehicles in order to arrive at an unload location for unload of crops from the harvester; and C) in respect of each of said one or more available transport vehicles, selecting that specific transport vehicle which will be able to arrive at said unload location in the least amount of time.

8.  A method according to claim 7, wherein said method on the basis of a trajectory to be followed by said harvester, comprises performing the following steps:

i) calculating the path to be followed by said harvester from its current position to the position at which the crop tank of said harvester has reach maximum capacity;
ii) calculating the unload position(s) at working vehicle would need to be at in order to receive the unloaded crops from said harvester;
iii) verify that the unload position(s) calculated in step ii) is/are valid position(s);
iv) in respect of each available transport vehicle, calculate the possible paths needed to be followed by said transport vehicle and the time necessary in order to arrive at the unload position(s) calculated in step ii);
v) select the available transport vehicle which is able to arrive at the unload position(s) calculated in step ii) in the least amount of time, as that the specific transport vehicle being responsible for emptying the crop tank of the harvester;
vi) upon loading the crops and departure of said specific transport vehicle selected in step v), repeat steps i) - v).

9.  A method according to any of the claims 7 or 8, wherein said information associated with coordinates relating to the geometry of said agricultural field relates to a predetermined trajectory to be followed by said harvester, and wherein said method involves receiving coordinates relating to said predetermined trajectory to be followed by said harvester; wherein said predetermined trajectory to be followed by said harvester optionally is made up of a number of predetermined working rows and a number of predetermined headlands confined within said agricultural field, and wherein said method involves providing: coordinates relating to the positions of the headlands and the positions of the working rows; said method optionally involves performing the following steps:

a) approximating the coordinates relating to all predefined headland with a number of coherent entities of straight lines;

b) approximating the coordinates relating to all predefined working rows with a number of coherent entities of straight lines;

c) on the basis of a number of coherent entities of straight lines approximated in step a) and representing headlands; and in respect of coherent entities of straight lines approximated in step b) and representing working rows, define an array of possible continuous driving paths by connecting separate coherent entities of straight lines by arched segments, wherein said separate coherent entities of straight lines is being either headlands, or parts of a headland, and working rows, or parts of a working row; so as to define possible continuous driving paths, wherein each driving path is covering all headlands and all working rows;

d) in respect of each of more possible continuous driving paths defined in step c), calculate an associated cost parameter, said calculated cost parameter being representative of the efficiency by following that specific continuous driving path;

e) select as the trajectory to be followed by said harvester, that specific continuous driving path exhibiting the highest efficiency.

10. A method according to any of the claims 7 - 9, wherein said information associated with a trajectory to be followed by said harvester is not a predetermined trajectory, and wherein said method involves providing:

i) coordinates relating to boundaries of the field to be harvested; and

ii) coordinates relating to the boundaries of one or more obstacles to be avoided by said harvester and said two or more transport vehicles, if present, wherein said one or more obstacles is/are located within said field;

and wherein said method involves calculating, on the basis of said coordinates relating to boundaries of the field to be harvested and on the basis of said coordinates relating to the boundaries of said one or more obstacles, an optimized trajectory to be followed by said harvester;

wherein said method optionally involves performing the following steps:

a) approximating the coordinates relating to the boundaries of said field to be harvested to a boundary polygon; and wherein said method involves determining the trajectory to be followed, based on that approximation;

b) approximating the coordinates relating to the boundaries of each said one or more obstacles, if present, to respective obstacle polygons; and wherein said method involves determining the trajectory to be followed, based on that approximation;

c) defining one or more headlands located immediately within said boundary polygon;

d) in respect of each obstacle polygon, if present, defining one or more headlands surrounding said obstacle polygon;

e) defining a work area which corresponds to the area within said boundary polygon with the exclusion of the area corresponding to any headlands and with the exclusion of the area corresponding to any obstacle polygon;

f) in respect of the orientation of one or more sides of headlands, define an array of parallel working rows located within said work area;

g) in respect of one or more arrays of parallel working rows defined in step f), define an array of possible continuous driving paths by connecting separate entities by arched segments, wherein said separate entities is being either headlands, or parts of a headland, and working rows, or parts of a working row; so as to define possible continuous driving paths, wherein each driving path is covering all headlands and all working rows;

h) in respect of each of more possible continuous driving paths defined in step g), calculate an associated cost parameter, said calculated cost parameter being representative of the efficiency by following that specific continuous driving path;

i) select as the trajectory to be followed, that specific continuous driving path exhibiting the highest efficiency.

11. A method according to any of the claims 7 - 10, wherein said method furthermore involves calculating, in respect of that specific transport vehicle being selected to transport crops from said harvester, an optimized route to be followed by said transport vehicle upon driving from said harvester to a storage area for the transported crops;

wherein said method optionally involves only allowing a transport vehicle, when located within said field, to travel along those headlands and working rows as defined in respect of the harvester, wherein said headlands comprising a number of coherent entities of straight lines; and wherein
said working rows comprising a number of coherent entities of straight lines;
wherein said method, upon calculating the possible paths needed to be followed by said transport vehicle upon returning to said storage area for the crops, on the basis of said number of coherent entities of straight lines and representing headland; and in respect of said coherent entities of straight lines approximated and representing working rows, involves defining an array of possible continuous driving paths to said storage area for the crops by connecting separate coherent entities of straight lines by arched segments, wherein said separate coherent entities of straight lines is being either headlands, or parts of a headland, and working rows, or parts of a working row; so as to define possible continuous driving paths, wherein each driving path begins at a current position of a specific transport vehicle and ends at storage area for the crops;
wherein said method, in respect of each of said more possible continuous driving paths, involves calculating an associated cost parameter, said calculated cost parameter being representative of the efficiency by following that specific continuous driving path by the specific transport vehicle; wherein said method, in respect of each of said more possible continuous driving paths, involves selecting as the trajectory to be followed by said specific transport vehicle, that continuous driving path exhibiting the highest efficiency.

**12.** A computer program product which when loaded or operating on a support system according to any of the claims 1-6, being adapted to perform the method according to any of the claims 7 - 11.

**13.** A harvester for harvesting an agricultural crop being grown in an agricultural field, wherein said harvester is comprising a support system according to any of the claims 1 - 6.

**14.** A harvesting fleet comprising a harvester according to claim 13 in combination with two or more transport vehicles.

**15.** Use of a support system according to any of the claims 1 - 6 or of a harvester according to claim 13; or a harvesting fleet according to claim 14 for supporting a harvesting operation during harvesting an agricultural crop in an agricultural field.

**Patentansprüche**

**1.** Unterstützungssystem (100) zum Bereitstellen von Unterstützung in einem Erntebetrieb in einem landwirtschaftlichen Feld, wobei der Erntebetrieb eine Erntemaschine und zwei oder mehr Transportfahrzeuge zum Transportieren von geernteten Nutzpflanzen involviert;
wobei das Unterstützungssystem Folgendes umfasst:

eine Abbildungseinheit (MU), die dazu ausgebildet ist, Informationen zu empfangen, die Koordinaten bezüglich der Geometrie des landwirtschaftlichen Felds zugehörig sind;
eine Kapazitätsparametereinheit (PU), die ausgebildet ist zum i) Empfangen eines oder mehrerer Kapazitätsparameter bezüglich der Kapazität der Erntemaschine und zum ii) Empfangen eines oder mehrerer Kapazitätsparameter bezüglich der Kapazität jedes der zwei oder mehr Transportfahrzeuge;
eine Kommunikationseinheit (COM), die dazu ausgebildet ist, Informationen bezüglich der aktuellen Position jedes der zwei oder mehr Transportfahrzeuge zu empfangen;
eine Berechnungseinheit (CU), die dazu ausgebildet ist, auf der Basis der Informationen, die von der Abbildungseinheit, der Kapazitätsparametereinheit und der Kommunikationseinheit empfangen werden, zu berechnen:

A) die Entladeposition der Erntemaschine bei einem Punkt, wo der Nutzpflanzenbehälter der Erntemaschine geleert werden muss; und
B) in Bezug auf solch eine Entladeposition und in Bezug auf die aktuelle Position jedes verfügbaren Transportfahrzeugs, eine optimierte Route, die in Bezug auf jedes der zwei oder mehr verfügbaren Transportfahrzeuge zu fahren ist, um bei einer Entladestelle anzukommen, um Nutzpflanzen von der Erntemaschine abzuladen; und
C) Bereitstellen von Anweisungen bezüglich der optimierten Route, der das bestimmte Transportfahrzeug folgen soll;

**dadurch gekennzeichnet, dass**
die Abbildungseinheit (MU) dazu ausgebildet ist, Informationen bezüglich einer geschätzten Nutzpflanzenertragsverteilung des landwirtschaftlichen Felds zu empfangen; und
die Berechnungseinheit (CU) dazu ausgebildet ist, aus der Gruppe verfügbarer Transportfahrzeuge ein bestimmtes Transportfahrzeug auszuwählen, das bei der Entladestelle in der kürzesten Zeit ankommen kann.

2. Unterstützungssystem nach Anspruch 1, wobei die Abbildungseinheit dazu ausgebildet ist, Koordinaten bezüglich eines oder mehrerer Eingangs-/Ausgangstore des Felds zu empfangen;
und/oder

wobei sich die Koordinaten bezüglich der Geometrie des landwirtschaftlichen Felds, die von der Abbildungseinheit empfangen werden, auf Koordinaten vorgegebener Vorgewende und Arbeitsreihen beziehen;
und/oder
wobei die Koordinaten bezüglich der Geometrie des landwirtschaftlichen Felds, die von der Abbildungseinheit empfangen werden, sich auf Koordinaten der Grenzen des landwirtschaftlichen Felds und optional auch Koordinaten der Grenzen beliebiger Hindernisse beziehen, die innerhalb des landwirtschaftlichen Felds vorhanden sind;
und/oder
wobei sich der eine oder die mehreren Kapazitätsparameter bezüglich der Kapazität der Erntemaschine, die von der Kapazitätsparametereinheit empfangen werden, auf eines oder mehreres des Folgenden beziehen:

- Arbeitsgeschwindigkeit der Erntemaschine;
- Nicht-Arbeitsgeschwindigkeit der Erntemaschine;
- Arbeitsbreite der Erntemaschine;
- Wenderadius der Erntemaschine;
- Nutzpflanzenbehälterkapazität der Erntemaschine;
- mögliche Position(en) des Entladeausgusses der Erntemaschine relativ zu der Erntemaschine;
- Entladerate der Erntemaschine;

und/oder
wobei der eine oder die mehreren Kapazitätsparameter bezüglich der Kapazität jedes der Transportfahrzeuge, die von der Kapazitätsparametereinheit empfangen werden, sich auf eines oder mehreres des Folgenden beziehen:

- Fahrgeschwindigkeit des Transportfahrzeugs;
- Wenderadius des Transportfahrzeugs;
- Nutzpflanzenkapazität des Transportfahrzeugs;
- benötigte Zeit, um von einem oder mehreren Eingangs-/Ausgangstoren zu dem Abladepunkt bei einem Nutzpflanzenlagerbereich zu fahren;
- benötigte Zeit, um Nutzpflanzen durch das Transportfahrzeug bei dem Abladepunkt bei einem Nutzpflanzenlagerbereich zu entladen.

3. Unterstützungssystem nach einem der vorstehenden Ansprüche, wobei die Berechnungseinheit dazu ausgebildet ist, auf der Basis einer Bahnkurve, der die Erntemaschine folgen soll, die folgenden Schritte durchzuführen:

i) Berechnen des Wegs, dem die Erntemaschine von ihrer aktuellen Position zu der Position folgen soll, bei der der Nutzpflanzenbehälter der Erntemaschine seine Maximalkapazität erreicht hat;
ii) Berechnen der Entladeposition(en) bei der/denen ein arbeitendes Fahrzeug sein müsste, um die entladenen Nutzpflanzen von der Erntemaschine aufzunehmen;
iii) Verifizieren, dass die im Schritt ii) berechnete(n) Entladeposition(en) (eine) gültige Position(en) ist/sind;
iv) in Bezug auf jedes verfügbare Transportfahrzeug, Berechnen der möglichen Wege, denen das Transportfahrzeug folgen soll, und der benötigten Zeit, um bei der/den in Schritt ii) berechneten Entladeposition(en) anzukommen;
v) Auswählen des verfügbaren Transportfahrzeugs, das im Stande ist, bei der/den in Schritt ii) berechneten Entladeposition(en) in der kürzesten Zeit anzukommen, als das bestimmte Transportfahrzeug, das verantwortlich ist, den Nutzpflanzenbehälter der Erntemaschine zu leeren;
vi) beim Laden der Nutzpflanzen und Abfahren des in Schritt v) ausgewählten, bestimmten Transportfahrzeugs, Wiederholen der Schritte i) - v).

4. Unterstützungssystem nach einem der vorstehenden Ansprüche, wobei die Informationen, die Koordinaten bezüglich der Geometrie des landwirtschaftlichen Felds zugehörig sind, sich auf eine vorgegebene Bahnkurve beziehen, der die Erntemaschine folgen soll, und wobei die Abbildungseinheit dazu ausgebildet ist, Koordinaten bezüglich der vorgegebenen Bahnkurve zu empfangen, der die Erntemaschine folgen soll;

wobei optional die vorgegebene Bahnkurve, der die Erntemaschine folgen soll, aus einer Zahl von vorgegebenen Arbeitsreihen und einer Zahl von vorgegebenen Vorgewenden, die innerhalb des landwirtschaftlichen Felds begrenzt sind, gebildet wird, und wobei die Abbildungseinheit dazu ausgebildet ist, Koordinaten bezüglich der Positionen der Vorgewende und der Positionen der Arbeitsreihen zu empfangen; wobei die Berechnungseinheit optional dazu ausgebildet ist, die folgenden Schritte durchzuführen:

a) Annähern der Koordinaten bezüglich aller vordefinierten Vorgewende mit einer Zahl von kohärenten Einheiten gerader Linien;

b) Annähern der Koordinaten bezüglich aller vordefinierten Arbeitsreihen mit einer Zahl von kohärenten Einheiten gerader Linien;

c) auf der Basis einer Zahl von kohärenten Einheiten gerader Linien, die in Schritt a) angenähert wurden und Vorgewende darstellen; und in Bezug auf kohärente Einheiten gerader Linien, die in Schritt b) angenähert wurden und Arbeitsreihen darstellen, Definieren eines Arrays möglicher fortlaufender Fahrwege, indem separate kohärente Einheiten gerader Linien durch gebogene Segmente verbunden werden, wobei die separaten kohärenten Einheiten gerader Linien entweder Vorgewende oder Teile eines Vorgewendes und Arbeitsreihen oder Teile einer Arbeitsreihe sind; um mögliche fortlaufende Fahrwege zu definieren, wobei jeder Fahrweg alle Vorgewende und alle Arbeitsreihen abdeckt;

d) in Bezug auf jeden mehrerer möglicher, in Schritt c) definierter, fortlaufender Fahrwege, Berechnen eines zugehörigen Kostenparameters, wobei der berechnete Kostenparameter die Effizienz davon darstellt, dem bestimmten fortlaufenden Fahrweg zu folgen;

e) Auswählen als die Bahnkurve, der die Erntemaschine folgen soll, des bestimmten fortlaufenden Fahrwegs, der die höchste Effizienz vorweist.

5. Unterstützungssystem nach einem der vorstehenden Ansprüche, wobei die Informationen, die einer Bahnkurve zugehörig sind, der die Erntemaschine folgen soll, keine vorgegebene Bahnkurve sind, und wobei die Abbildungseinheit dazu ausgebildet ist, Folgendes zu empfangen:

i) Koordinaten bezüglich Grenzen des zu erntenden Felds; und

ii) Koordinaten bezüglich der Grenzen eines oder mehrerer Hindernisse, die von der Erntemaschine und den zwei oder mehr Transportfahrzeugen zu vermeiden sind, falls vorhanden, wobei das eine oder die mehreren Hindernisse innerhalb des Felds liegt/liegen;

und wobei die Berechnungseinheit dazu ausgebildet ist, auf der Basis der Koordinaten bezüglich Grenzen des zu erntenden Felds und auf der Basis der Koordinaten bezüglich der Grenzen des einen oder der mehreren Hindernisse eine optimierte Bahnkurve zu berechnen, der die Erntemaschine folgen soll;

wobei optional die Berechnungseinheit dazu ausgebildet ist, die folgenden Schritte durchzuführen:

a) Annähern der Koordinaten bezüglich der Grenzen des zu erntenden Felds an ein Grenzpolygon; und wobei das Unterstützungssystem dazu ausgebildet ist, die Bahnkurve, der gefolgt werden soll, basierend auf dieser Annäherung zu ermitteln;

b) Annähern der Koordinaten bezüglich der Grenzen jedes der einen oder mehreren Hindernisse, falls vorhanden, an jeweilige Hindernispolygone; und wobei das Unterstützungssystem dazu ausgebildet ist, die Bahnkurve, der gefolgt werden soll, basierend auf dieser Annäherung zu ermitteln;

c) Definieren eines oder mehrerer Vorgewende, die unmittelbar innerhalb des Grenzpolygons liegen;

d) in Bezug auf jedes Hindernispolygon, falls vorhanden, Definieren eines oder mehrerer Vorgewende, die das Hindernispolygon umgeben;

e) Definieren eines Arbeitsbereichs, der dem Bereich innerhalb des Grenzpolygons entspricht, mit der Ausnahme des Bereichs, der beliebigen Vorgewenden entspricht und mit der Ausnahme des Bereichs, der einem beliebigen Hindernispolygon entspricht;

f) in Bezug auf die Ausrichtung einer oder mehrerer Seiten von Vorgewenden, Definieren eines Arrays paralleler Arbeitsreihen, die innerhalb des Arbeitsbereichs liegen;

g) in Bezug auf ein oder mehrere in Schritt f) definierte Arrays paralleler Arbeitsreihen, Definieren eines Arrays möglicher fortlaufender Fahrwege, indem separate Einheiten durch gebogene Segmente verbunden werden, wobei die separaten Einheiten entweder Vorgewende oder Teile eines Vorgewendes und Arbeitsreihen oder Teile einer Arbeitsreihe sind; um mögliche fortlaufende Fahrwege zu definieren, wobei jeder Fahrweg alle Vorgewende und alle Arbeitsreihen abdeckt;

h) in Bezug auf jeden mehrerer in Schritt g) definierter, möglicher fortlaufender Fahrwege, Berechnen eines zugehörigen Kostenparameters, wobei der berechnete Kostenparameter die jeweilige Effizienz davon darstellt, dem bestimmten fortlaufenden Fahrweg zu folgen;

i) Auswählen als die Bahnkurve, der zu folgen ist, dieses bestimmten fortlaufenden Fahrwegs, der die höchste Effizienz vorweist.

6. Unterstützungssystem nach einem der vorstehenden Ansprüche, wobei die Berechnungseinheit darüber hinaus dazu ausgebildet ist, in Bezug auf das bestimmte Transportfahrzeug, das ausgewählt wird, Nutzpflanzen von der Erntemaschine zu transportieren, eine optimierte Route zu berechnen, der das Transportfahrzeug beim Fahren von der Erntemaschine zu einem Lagerbereich für die transportierten Nutzpflanzen folgen soll;

wobei optional die Berechnungseinheit einem Transportfahrzeug nur dann erlaubt, wenn es innerhalb des Felds liegt, sich entlang dieser Vorgewende und Arbeitsreihen, wie sie in Bezug auf die Erntemaschine definiert sind, fortzubewegen, wobei die Vorgewende eine Zahl von kohärenten Einheiten gerader Linien umfassen; und wobei die Arbeitsreihen eine Zahl von kohärenten Einheiten gerader Linien umfassen;

wobei die Berechnungseinheit beim Berechnen der möglichen Wege, denen das Transportfahrzeug beim Zurückkehren zu dem Lagerbereich für die Nutzpflanzen folgen muss, dazu ausgebildet ist, auf der Basis der Zahl von kohärenten Einheiten gerader Linien und dargestellten Vorgewendes; und in Bezug auf die kohärenten Einheiten gerader Linien und darstellender Arbeitsreihen, ein Array möglicher fortlaufender Fahrwege zu dem Lagerbereich für die Nutzpflanzen zu definieren, indem separate kohärente Einheiten gerader Linien durch gebogene Segmente verbunden werden, wobei die separaten kohärenten Einheiten gerader Linien entweder Vorgewende oder Teile eines Vorgewendes und Arbeitsreihen oder Teile einer Arbeitsreihe sind; um mögliche fortlaufende Fahrwege zu definieren, wobei jeder Fahrweg bei einer aktuellen Position eines bestimmten Transportfahrzeugs beginnt und bei einem Lagerbereich für die Nutzpflanzen endet;

wobei die Berechnungseinheit dazu ausgebildet ist, in Bezug auf jeden der mehreren möglichen fortlaufenden Fahrwege einen zugehörigen Kostenparameter zu berechnen, wobei der berechnete Kostenparameter die Effizienz davon darstellt, dass das bestimmte Transportfahrzeug diesem bestimmten fortlaufenden Fahrweg folgt;

wobei die Berechnungseinheit dazu ausgebildet ist, in Bezug auf jeden der mehreren möglichen fortlaufenden Fahrwege als die Bahnkurve, der das bestimmte Transportfahrzeug folgen soll, den fortlaufenden Fahrweg auszuwählen, der die höchste Effizienz vorweist.

7. Verfahren zum Unterstützen eines Erntebetriebs in einem landwirtschaftlichen Feld, wobei der Erntebetrieb eine Erntemaschine und zwei oder mehr Transportfahrzeuge zum Transportieren von geernteten Nutzpflanzen involviert; wobei das Verfahren umfasst:

Bereitstellen von Informationen, die Koordinaten bezüglich der Geometrie des landwirtschaftlichen Felds zugehörig sind; und Bereitstellen von Informationen, die einer geschätzten Nutzpflanzenertragsverteilung des landwirtschaftlichen Felds zugehörig sind;

Bereitstellen von Informationen, die i) einem oder mehreren Kapazitätsparametern bezüglich der Kapazität der Erntemaschine; und ii) einem oder mehreren Kapazitätsparametern bezüglich der Kapazität jedes der zwei oder mehr Transportfahrzeuge zugehörig sind;

Bereitstellen von Informationen bezüglich der aktuellen Position jedes der zwei oder mehr Transportfahrzeuge;

Berechnen, auf der Basis der bereitgestellten Informationen:

A) der Entladeposition der Erntemaschine bei einem Punkt, wo der Nutzpflanzenbehälter der Erntemaschine geleert werden muss; und

B) in Bezug auf solch eine Entladeposition und in Bezug auf die aktuelle Position jedes verfügbaren Transportfahrzeugs, einer optimierten zu fahrenden Route, in Bezug auf jedes der zwei oder mehr verfügbaren Transportfahrzeuge, um bei einer Entladestation zum Entladen von Nutzpflanzen von der Erntemaschine anzukommen; und

C) in Bezug auf jedes des einen oder der mehreren verfügbaren Transportfahrzeuge, Auswählen des bestimmten Transportfahrzeugs, das im Stande ist, bei der Entladestelle in der kürzesten Zeit anzukommen.

8. Verfahren nach Anspruch 7, wobei das Verfahren auf der Basis einer Bahnkurve, der die Erntemaschine folgen soll, umfasst, die folgenden Schritte durchzuführen:

i) Berechnen des Wegs, dem die Erntemaschine von ihrer aktuellen Position zu der Position folgen soll, bei der der Nutzpflanzenbehälter der Erntemaschine seine Maximalkapazität erreicht hat;

ii) Berechnen der Entladeposition(en) bei der/denen ein arbeitendes Fahrzeug sein müsste, um die entladenen Nutzpflanzen von der Erntemaschine aufzunehmen;

iii) Verifizieren, dass die im Schritt ii) berechnete(n) Entladeposition(en) (eine) gültige Position(en) ist/sind;

iv) in Bezug auf jedes verfügbare Transportfahrzeug, Berechnen der möglichen Wege, denen das Transportfahrzeug folgen soll, und der benötigten Zeit, um bei der/den in Schritt ii) berechneten Entladeposition(en) anzukommen;

v) Auswählen des verfügbaren Transportfahrzeugs, das im Stande ist, bei der/den in Schritt ii) berechneten Entladeposition(en) in der kürzesten Zeit anzukommen, als das bestimmte Transportfahrzeug, das verantwortlich ist, den Nutzpflanzenbehälter der Erntemaschine zu leeren;

vi) beim Laden der Nutzpflanzen und Abfahren des in Schritt v) ausgewählten, bestimmten Transportfahrzeugs, Wiederholen der Schritte i) - v).

9. Verfahren nach einem der Ansprüche 7 oder 8, wobei sich die Informationen, die Koordinaten bezüglich der Geometrie des landwirtschaftlichen Felds zugehörig sind, auf eine vorgegebene Bahnkurve beziehen, der die Erntemaschine folgen soll, und wobei das Verfahren involviert, Koordinaten bezüglich der vorgegebenen Bahnkurve zu empfangen, der die Erntemaschine folgen soll;

wobei die vorgegebene Bahnkurve, der die Erntemaschine folgen soll, optional aus einer Zahl von vorgegebenen Arbeitsreihen und einer Zahl von vorgegebenen Vorgewenden gebildet wird, die innerhalb des landwirtschaftlichen Felds begrenzt sind, und wobei das Verfahren involviert, Folgendes bereitzustellen: Koordinaten bezüglich der Positionen der Vorgewende und der Positionen der Arbeitsreihen; wobei das Verfahren optional involviert, die folgenden Schritte durchzuführen:

a) Annähern der Koordinaten bezüglich aller vordefinierten Vorgewende mit einer Zahl von kohärenten Einheiten gerader Linien;

b) Annähern der Koordinaten bezüglich aller vordefinierten Arbeitsreihen mit einer Zahl von kohärenten Einheiten gerader Linien;

c) auf der Basis einer Zahl von kohärenten Einheiten gerader Linien, die in Schritt a) angenähert wurden und Vorgewende darstellen; und in Bezug auf kohärente Einheiten gerader Linien, die in Schritt b) angenähert wurden und Arbeitsreihen darstellen, Definieren eines Arrays möglicher fortlaufender Fahrwege, indem separate kohärente Einheiten gerader Linien durch gebogene Segmente verbunden werden, wobei die separaten kohärenten Einheiten gerader Linien entweder Vorgewende oder Teile eines Vorgewendes und Arbeitsreihen oder Teile einer Arbeitsreihe sind; um mögliche fortlaufende Fahrwege zu definieren, wobei jeder Fahrweg alle Vorgewende und alle Arbeitsreihen abdeckt;

d) in Bezug auf jeden mehrerer möglicher, in Schritt c) definierter, fortlaufender Fahrwege, Berechnen eines zugehörigen Kostenparameters, wobei der berechnete Kostenparameter die Effizienz davon darstellt, dem bestimmten fortlaufenden Fahrweg zu folgen;

e) Auswählen als die Bahnkurve, der die Erntemaschine folgen soll, des bestimmten fortlaufenden Fahrwegs, der die höchste Effizienz vorweist.

10. Verfahren nach einem der Ansprüche 7 - 9, wobei die Informationen, die einer Bahnkurve zugehörig sind, der die Erntemaschine folgen soll, keine vorgegebene Bahnkurve sind und wobei das Verfahren involviert, Folgendes bereitzustellen:

i) Koordinaten bezüglich Grenzen des zu erntenden Felds; und

ii) Koordinaten bezüglich der Grenzen eines oder mehrerer Hindernisse, die von der Erntemaschine und den zwei oder mehr Transportfahrzeugen zu vermeiden sind, falls vorhanden, wobei das eine oder die mehreren Hindernisse innerhalb des Felds liegt/liegen;

und wobei das Verfahren involviert, auf der Basis der Koordinaten bezüglich Grenzen des zu erntenden Felds und auf der Basis der Koordinaten bezüglich der Grenzen des einen oder der mehreren Hindernisse eine optimierte Bahnkurve zu berechnen, der die Erntemaschine folgen soll;

wobei das Verfahren optional involviert, die folgenden Schritte durchzuführen:

a) Annähern der Koordinaten bezüglich der Grenzen des zu erntenden Felds an ein Grenzpolygon; und wobei das Verfahren involviert, die Bahnkurve, der gefolgt werden soll, basierend auf der Annäherung zu ermitteln;

b) Annähern der Koordinaten bezüglich der Grenzen jedes des einen oder der mehreren Hindernisse, falls vorhanden, an jeweilige Hindernispolygone; und wobei das Verfahren involviert, die Bahnkurve, der gefolgt werden soll, basierend auf der Annäherung zu ermitteln;

c) Definieren eines oder mehrerer Vorgewende, die unmittelbar innerhalb des Grenzpolygons liegen;

d) in Bezug auf jedes Hindernispolygon, falls vorhanden, Definieren eines oder mehrerer Vorgewende, die das Hindernispolygon umgeben;

e) Definieren eines Arbeitsbereichs, der dem Bereich innerhalb des Grenzpolygons entspricht, mit der Ausnahme des Bereichs, der beliebigen Vorgewenden entspricht und mit der Ausnahme des Bereichs, der einem beliebigen Hindernispolygon entspricht;

f) in Bezug auf die Ausrichtung einer oder mehrerer Seiten von Vorgewenden, Definieren eines Arrays paralleler Arbeitsreihen, die innerhalb des Arbeitsbereichs liegen;

g) in Bezug auf ein oder mehrere in Schritt f) definierte Arrays paralleler Arbeitsreihen, Definieren eines Arrays möglicher fortlaufender Fahrwege, indem separate Einheiten durch gebogene Segmente verbunden werden, wobei die separaten Einheiten entweder Vorgewende oder Teile eines Vorgewendes und Arbeitsreihen oder Teile einer Arbeitsreihe sind; um mögliche fortlaufende Fahrwege zu definieren, wobei jeder Fahrweg alle Vorgewende und alle Arbeitsreihen abdeckt;

h) in Bezug auf jeden mehrerer in Schritt g) definierter, möglicher fortlaufender Fahrwege, Berechnen eines zugehörigen Kostenparameters, wobei der berechnete Kostenparameter die jeweilige Effizienz davon darstellt, dem bestimmten fortlaufenden Fahrweg zu folgen;

i) Auswählen als die Bahnkurve, der zu folgen ist, dieses bestimmten fortlaufenden Fahrwegs, der die höchste Effizienz vorweist.

11. Verfahren nach einem der Ansprüche 7 - 10, wobei das Verfahren darüber hinaus involviert, in Bezug auf das bestimmte Transportfahrzeug, das ausgewählt ist, Nutzpflanzen von der Erntemaschine zu transportieren, eine optimierte Route zu berechnen, der das Transportfahrzeug beim Fahren von der Erntemaschine zu einem Lagerbereich für die transportierten Nutzpflanzen folgen soll;

wobei das Verfahren optional involviert, einem Transportfahrzeug nur zu erlauben, wenn es innerhalb des Felds liegt, sich entlang dieser Vorgewende und Arbeitsreihen fortzubewegen, wie sie in Bezug auf die Erntemaschine definiert sind, wobei die Vorgewende eine Zahl von kohärenten Einheiten gerader Linien umfassen; und wobei die Arbeitsreihen eine Zahl von kohärenten Einheiten gerader Linien umfassen;

wobei das Verfahren beim Berechnen der möglichen Wege, denen das Transportfahrzeug beim Zurückkehren zu dem Lagerbereich für die Nutzpflanzen folgen soll, auf der Basis der Zahl von kohärenten Einheiten gerader Linien und die Vorgewende darstellen; und in Bezug auf die kohärenten Einheiten gerader Linien, die angenähert sind und Arbeitsreihen darstellen, involviert, ein Array möglicher fortlaufender Fahrwege zu dem Lagerbereich für die Nutzpflanzen zu definieren, indem separate kohärente Einheiten gerader Linien durch gebogene Segmente verbunden werden, wobei die separaten kohärenten Einheiten gerader Linien entweder Vorgewende oder Teile eines Vorgewendes und Arbeitsreihen oder Teile einer Arbeitsreihe sind; um mögliche fortlaufende Fahrwege zu definieren, wobei jeder Fahrweg bei einer aktuellen Position eines bestimmten Transportfahrzeugs beginnt und bei einem Lagerbereich für die Nutzpflanzen endet;

wobei das Verfahren in Bezug auf jeden der mehreren möglichen fortlaufenden Fahrwege involviert, einen zugehörigen Kostenparameter zu berechnen, wobei der berechnete Kostenparameter die Effizienz davon darstellt, dass das bestimmte Transportfahrzeug dem bestimmten fortlaufenden Fahrweg folgt;

wobei das Verfahren in Bezug auf jeden der mehreren möglichen fortlaufenden Fahrwege involviert, als die Bahnkurve, dem das bestimmte Transportfahrzeug folgen soll, den fortlaufenden Fahrweg auszuwählen, der die höchste Effizienz vorweist.

12. Computerprogrammprodukt, das, wenn es auf ein Unterstützungssystem nach einem der Ansprüche 1-6 geladen wird oder darauf betrieben wird, angepasst ist, das Verfahren nach einem der Ansprüche 7-11 durchzuführen.

13. Erntemaschine zum Ernten einer landwirtschaftlichen Nutzpflanze, die in einem landwirtschaftlichen Feld angebaut wird, wobei die Erntemaschine ein Unterstützungssystem nach einem der Ansprüche 1-6 umfasst.

14. Ernteflotte, die eine Erntemaschine nach Anspruch 13 in Kombination mit zwei oder mehr Transportfahrzeugen umfasst.

15. Verwendung eines Unterstützungssystems nach einem der Ansprüche 1-6 oder eine Erntemaschine nach Anspruch 13; oder eine Ernteflotte nach Anspruch 14 zum Unterstützen eines Erntebetriebs während Ernten einer landwirtschaftlichen Nutzpflanze in einem landwirtschaftlichen Feld.

**Revendications**

1. Système de support (100) pour fournir un support dans une opération de récolte dans un champ agricole, ladite opération de récolte impliquant une moissonneuse et deux véhicules de transport ou plus pour transporter des cultures récoltées ;
dans lequel ledit système de support comprend :

une unité de cartographie (MU) configurée pour recevoir des informations associées à des coordonnées relatives à la géométrie dudit champ agricole ;
une unité de paramètre de capacité (PU) configurée pour i) recevoir un ou plusieurs paramètres de capacité relatifs à la capacité de ladite moissonneuse ; et pour ii) recevoir un ou plusieurs paramètres de capacité relatifs à la capacité de chacun desdits deux véhicules de transport ou plus ;
une unité de communication (COM) configurée pour recevoir des informations relatives à la position actuelle de chacun desdits deux véhicules de transport ou plus ;
une unité de calcul (CU) configurée pour calculer, sur la bases des informations reçues par ladite unité de cartographie, ladite unité de paramètres de capacité et ladite unité de communication :

A) la position de déchargement de la moissonneuse en un point où le réservoir de cultures de ladite moissonneuse doit être vidé ; et
B) par rapport à une telle position de déchargement, et en relation avec la position actuelle de chaque véhicule de transport disponible, un itinéraire optimisé à emprunter par rapport à chacun desdits deux véhicules de transport ou plus disponibles afin d'arriver à un emplacement de déchargement pour un déchargement de cultures à partir de ladite moissonneuse ; et
C) fournir des instructions relatives audit itinéraire optimisé à suivre par ledit véhicule de transport spécifique ;

**caractérisé en ce que**
l'unité de cartographie (MU) est configurée pour recevoir des informations relatives à une distribution estimée de rendement de culture dudit champ agricole ; et
l'unité de calcul (CU) est configurée pour sélectionner dans le groupe de véhicules de transport disponibles un véhicule de transport spécifique qui sera capable d'arriver audit emplacement de déchargement dans le plus petit laps de temps.

2. Système de support selon la revendication 1, dans lequel ladite unité de cartographie est configurée pour recevoir des coordonnées relatives à une ou plusieurs portes d'entrée/sortie dudit champ ;
et/ou

dans lequel lesdites coordonnées relatives à la géométrie dudit champ agricole à recevoir par ladite unité de cartographie sont relatives à des coordonnées de tournière(s) et de rangées de travail prédéterminées ;
et/ou
dans lequel lesdites coordonnées relatives à la géométrie dudit champ agricole à recevoir par ladite unité de cartographie sont relatives à des coordonnées des limites dudit champ agricole et facultativement également des coordonnées des limites de quelconques obstacles présents dans ledit champ agricole ;
et/ou
dans lequel lesdits un ou plusieurs paramètres de capacité relatifs à la capacité de ladite moissonneuse à recevoir par ladite unité de paramètre de capacité sont relatifs à un ou plusieurs des éléments suivants :

- vitesse de travail de ladite moissonneuse ;
- vitesse de non-travail de ladite moissonneuse ;
- largeur de travail de ladite moissonneuse ;
- rayon de braquage de ladite moissonneuse ;
- capacité de réservoir de récolte de ladite moissonneuse ;
- position(s) possible(s) de la goulotte de déchargement de ladite moissonneuse, par rapport à ladite moissonneuse ;
- débit de déchargement de ladite moissonneuse ;

et/ou
dans lequel lesdits un ou plusieurs paramètres de capacité relatifs à la capacité de chacun desdits véhicules de transport à recevoir par ladite unité de paramètre de capacité sont relatifs à un ou plusieurs des éléments suivants :

- vitesse de conduite dudit véhicule de transport ;
- rayon de braquage dudit véhicule de transport ;
- capacité de réservoir de récolte dudit véhicule de transport ;
- temps nécessaire pour se rendre d'une ou plusieurs portes d'entrée/sortie jusqu'au point de déchargement dans une zone de stockage de récolte ;
- temps nécessaire à un déchargement de récoltes, par ledit véhicule de transport, au point de déchargement dans une zone de stockage de récolte.

3. Système de support selon l'une quelconque des revendications précédentes dans lequel ladite unité de calcul est configurée, sur la base d'une trajectoire à suivre par ladite moissonneuse, pour effectuer les étapes suivantes consistant à :

i) calculer le trajet à suivre par ladite moissonneuse depuis sa position actuelle jusqu'à la position à laquelle le réservoir de récolte de ladite moissonneuse a atteint sa capacité maximale ;
ii) calculer la ou les positions de déchargement au niveau de laquelle/desquelles le véhicule de travail devrait se trouver afin de recevoir les récoltes déchargées à partir de ladite moissonneuse ;
iii) vérifier que la ou les positions de déchargement calculées à l'étape ii) sont une ou des positions valides ;
iv) pour chaque véhicule de transport disponible, calculer les trajets possibles devant être suivis par ledit véhicule de transport et le temps nécessaire pour arriver à la ou aux positions de déchargement calculées à l'étape ii) ;
v) sélectionner le véhicule de transport disponible qui est capable d'arriver à la ou aux positions de déchargement calculées à l'étape ii) dans le plus petit laps de temps, ce véhicule de transport spécifique étant chargé de vider le réservoir de récolte de la moissonneuse ;
vi) lors d'un chargement des récoltes et d'un départ dudit véhicule de transport spécifique sélectionné à l'étape v), répéter les étapes i) - v).

4. Système de support selon l'une quelconque des revendications précédentes, dans lequel lesdites informations associées à des coordonnées relatives à la géométrie dudit champ agricole sont relatives à une trajectoire prédéterminée à suivre par ladite moissonneuse, et dans lequel ladite unité de cartographie est configurée pour recevoir des coordonnées relatives à ladite trajectoire prédéterminée à suivre par ladite moissonneuse ;
dans lequel facultativement ladite trajectoire prédéterminée à suivre par ladite moissonneuse est constituée d'un certain nombre de rangées de travail prédéterminées et d'un certain nombre de tournières prédéterminées confinées à l'intérieur dudit champ agricole, et dans lequel ladite unité de cartographie est configurée pour recevoir des coordonnées relatives aux positions des tournières et aux positions des rangs de travail ; ladite unité de calcul étant facultativement configurée pour effectuer les étapes suivantes consistant à :

a) approximer les coordonnées relatives à tous les tournières prédéfinies avec un certain nombre d'entités cohérentes de lignes droites ;
b) approximer les coordonnées relatives à toutes les rangées de travail prédéfinies avec un certain nombre d'entités cohérentes de lignes droites ;
c) sur la base d'un certain nombre d'entités cohérentes lignes de droites approximées à l'étape a) et représentant des tournières ; et en ce qui concerne des entités cohérentes de lignes droites approximées à l'étape b) et représentant des rangées de travail, définir un réseau de trajets de conduite continus possibles en reliant des entités cohérentes distinctes de lignes droites par des segments arqués, lesdites entités cohérentes distinctes de lignes droites étant soit des tournières, ou des parties de tournière, et des rangées de travail, ou des parties d'une rangée de travail ; de manière à définir de possibles trajets de conduite continus, dans lequel chaque trajet de conduite couvre toutes les tournières et toutes les rangées de travail ;
d) en ce qui concerne chacun de plusieurs trajets de conduite continus possibles définis à l'étape c), calculer un paramètre de coût associé, ledit paramètre de coût calculé étant représentatif de l'efficacité en suivant ce trajet de conduite continu spécifique ;
e) sélectionner comme trajectoire à suivre par ladite moissonneuse ce trajet de conduite continu spécifique présentant la plus grande efficacité.

5. Système de support selon l'une quelconque des revendications précédentes, dans lequel lesdites informations associées à une trajectoire à suivre par ladite moissonneuse ne sont pas une trajectoire prédéterminée, et dans lequel ladite unité de cartographie est configurée pour recevoir :

i) des coordonnées relatives à des limites du champ à récolter ; et

ii) des coordonnées relatives aux limites d'un ou plusieurs obstacles à éviter par ladite moissonneuse et lesdits deux véhicules de transport ou plus, s'il y en a, dans lequel lesdits un ou plusieurs obstacles sont situés à l'intérieur dudit champ ;

et dans lequel ladite unité de calcul est configurée pour calculer, sur la base desdites coordonnées relatives aux limites du champ à récolter et sur la base desdites coordonnées relatives aux limites desdits un ou plusieurs obstacles, une trajectoire optimisée à suivre par ladite moissonneuse ;

dans lequel facultativement ladite unité de calcul est configurée pour effectuer les étapes suivantes consistant à :

a) approximer les coordonnées relatives aux limites dudit champ à récolter à un polygone de limite ; et dans lequel ledit système de support est configuré pour déterminer la trajectoire à suivre, sur la base de cette approximation ;

b) approximer les coordonnées relatives aux limites de chacun desdits un ou plusieurs obstacles, s'il y en a, à des polygones d'obstacle respectifs ; et dans lequel ledit système de support est configuré pour déterminer la trajectoire à suivre, sur la base de cette approximation ;

c) définir une ou plusieurs tournière situées immédiatement à l'intérieur dudit polygone de limite ;

d) en ce qui concerne chaque polygone d'obstacle, s'il y en a, définir une ou plusieurs tournières entourant ledit polygone d'obstacle ;

e) définir une zone de travail qui correspond à la zone à l'intérieur dudit polygone de limite à l'exclusion de la zone correspondant à de quelconques tournières et à l'exclusion de la zone correspondant à un quelconque polygone d'obstacle ;

f) en ce qui concerne l'orientation d'un ou plusieurs côtés de tournières, définir un réseau de rangées de travail parallèles situées à l'intérieur de ladite zone de travail ;

g) en ce qui concerne un ou plusieurs réseaux de rangées de travail parallèles définis à l'étape f), définir un réseau de trajets de conduite continus possibles en reliant des entités séparées par des segments arqués, dans lequel lesdites entités séparées sont des tournières ou des parties d'une tournière, et des rangées de travail, ou des parties d'une rangée de travail ; de manière à définir des trajets de conduite continus possibles, dans lequel chaque trajet de conduite couvre toutes les tournières et toutes les rangées de travail ;

h) en ce qui concerne chacun des trajets de conduite continus possibles définis à l'étape g), calculer un paramètre de coût associé, ledit paramètre de coût calculé étant représentatif de l'efficacité en suivant ce trajet de conduite continu spécifique ;

i) sélectionner comme trajectoire à suivre cette trajectoire de conduite continue spécifique présentant la plus grande efficacité.

6. Système de support selon l'une quelconque des revendications précédentes, dans lequel ladite unité de calcul est en outre configurée pour calculer, en ce qui concerne ce véhicule de transport spécifique étant sélectionné pour transporter des cultures à partir de ladite moissonneuse, un itinéraire optimisé à suivre par ledit véhicule de transport lors d'une conduite depuis ladite moissonneuse jusqu'à une zone de stockage des cultures transportées ;

dans lequel facultativement ladite unité de calcul permet uniquement à un véhicule de transport, lorsqu'il est situé dans ledit champ, de se déplacer le long de ces tournières et rangées de travail telles que définies par rapport à la moissonneuse, dans lequel lesdits tournières comprennent un certain nombre d'entités cohérentes de lignes droites ; et dans lequel lesdites rangées de travail comprennent un certain nombre d'entités cohérentes de lignes droites ;

dans lequel ladite unité de calcul, lors d'un calcul des trajets possibles à suivre par ledit véhicule de transport lors d'un retour à ladite zone de stockage des cultures est configurée pour, sur la base dudit nombre d'entités cohérentes de lignes droites et représentant un tournière ; et en ce qui concerne lesdites entités cohérentes de lignes droites et représentant des rangées de travail, définir un réseau de trajets de conduite continus possibles vers ladite zone de stockage pour les cultures en reliant des entités cohérentes distinctes de lignes droites par des segments arqués, dans lequel lesdites entités cohérentes distinctes de lignes droites sont des tournières, ou des parties d'une tournière, et des rangées de travail, ou des parties d'une rangée de travail ; de manière à définir des trajets de conduite continus possibles, dans lequel chaque trajet de conduite commence au niveau d'une position actuelle d'un véhicule de transport spécifique et se termine au niveau d'une zone de stockage pour les cultures ;

dans lequel ladite unité de calcul est configurée pour, en ce qui concerne chacun desdits plusieurs trajets de conduite continus possibles, calculer un paramètre de coût associé, ledit paramètre de coût calculé étant représentatif de l'efficacité en faisant suivre ce trajet de conduite continu spécifique au véhicule de transport spécifique ;

dans lequel ladite unité de calcul est configurée pour, en ce qui concerne chacun desdits plusieurs trajets de conduite continus possibles, sélectionner comme trajectoire à suivre par ledit véhicule de transport spécifique ce trajet de conduite continu présentant l'efficacité la plus élevée.

**7.** Procédé pour supporter une opération de récolte dans un champ agricole, ladite opération de récolte impliquant une moissonneuse et deux véhicules de transport ou plus pour transporter les cultures récoltées ;

dans lequel ledit procédé comprend les étapes consistant à :

fournir des informations associées à des coordonnées relatives à la géométrie dudit champ agricole ; et fournir des informations associées à une distribution de rendement de culture estimée dudit champ agricole ;

fournir des informations associées à i) un ou plusieurs paramètres de capacité relatifs à la capacité de ladite moissonneuse ; et ii) un ou plusieurs paramètres de capacité relatifs à la capacité de chacun desdits deux véhicules de transport ou plus ;

fournir des informations relatives à la position actuelle de chacun desdits deux ou plusieurs véhicules de transport ;

calculer, sur la base des informations fournies :

A) la position de déchargement de la moissonneuse en un point où le réservoir de cultures de ladite moissonneuse doit être vidé ; et

B) par rapport à une telle position de déchargement, et par rapport à la position actuelle de chaque véhicule de transport disponible, un itinéraire optimisé à parcourir par rapport à chacun desdits deux ou plusieurs véhicules de transport disponibles afin d'arriver à un emplacement de déchargement pour le déchargement de récoltes de la moissonneuse ; et

C) en ce qui concerne chacun desdits un ou plusieurs véhicules de transport disponibles, sélectionner ce véhicule de transport spécifique qui sera capable d'arriver audit emplacement de déchargement dans le plus petit laps de temps.

**8.** Procédé selon la revendication 7, dans lequel ledit procédé sur la base d'une trajectoire à suivre par ladite moissonneuse, comprend la réalisation des étapes suivantes consistant à :

i) calculer le trajet à suivre par ladite moissonneuse depuis sa position actuelle jusqu'à la position à laquelle le réservoir de récolte de ladite moissonneuse a atteint sa capacité maximale ;

ii) calculer la ou les positions de déchargement au niveau de laquelle/desquelles le véhicule de travail devrait se trouver afin de recevoir les récoltes déchargées à partir de ladite moissonneuse ;

iii) vérifier que la ou les positions de déchargement calculées à l'étape ii) sont une ou des positions valides ;

iv) pour chaque véhicule de transport disponible, calculer les trajets possibles devant être suivis par ledit véhicule de transport et le temps nécessaire pour arriver à la ou aux positions de déchargement calculées à l'étape ii) ;

v) sélectionner le véhicule de transport disponible qui est capable d'arriver à la ou aux positions de déchargement calculées à l'étape ii) dans le plus petit laps de temps, ce véhicule de transport spécifique étant chargé de vider le réservoir de récolte de la moissonneuse ;

vi) lors d'un chargement des récoltes et d'un départ dudit véhicule de transport spécifique sélectionné à l'étape v), répéter les étapes i) - v).

**9.** Procédé selon l'une quelconque des revendications 7 ou 8, dans lequel lesdites informations associées à des coordonnées relatives à la géométrie dudit champ agricole sont relatives à une trajectoire prédéterminée à suivre par ladite moissonneuse, et dans lequel ledit procédé implique une réception de coordonnées relatives à ladite trajectoire prédéterminée à suivre par ladite moissonneuse ;

dans lequel ladite trajectoire prédéterminée à suivre par ladite moissonneuse est facultativement constituée d'un certain nombre de rangées de travail prédéterminées et d'un certain nombre de tournières prédéterminées confinées à l'intérieur dudit champ agricole, et dans lequel ledit procédé implique l'étape consistant à fournir : des coordonnées relatives aux positions des tournières et aux positions des rangées de travail ; ledit procédé implique facultativement d'effectuer les étapes suivantes consistant à :

a) approximer les coordonnées relatives à tous les tournières prédéfinies avec un certain nombre d'entités cohérentes de lignes droites ;

b) approximer les coordonnées relatives à toutes les rangées de travail prédéfinies avec un certain nombre d'entités cohérentes de lignes droites ;

c) sur la base d'un certain nombre d'entités cohérentes lignes de droites approximées à l'étape a) et représentant des tournières ; et en ce qui concerne des entités cohérentes de lignes droites approximées à l'étape b) et représentant des rangées de travail, définir un réseau de trajets de conduite continus possibles en reliant des entités cohérentes distinctes de lignes droites par des segments arqués, lesdites entités cohérentes distinctes de lignes droites étant soit des tournières, ou des parties de tournière, et des rangées de travail, ou des parties d'une rangée de travail ; de manière à définir de possibles trajets de conduite continus, dans lequel chaque trajet de conduite couvre toutes les tournières et toutes les rangées de travail ;

d) en ce qui concerne chacun de plusieurs trajets de conduite continus possibles définis à l'étape c), calculer un paramètre de coût associé, ledit paramètre de coût calculé étant représentatif de l'efficacité en suivant ce trajet de conduite continu spécifique ;

e) sélectionner comme trajectoire à suivre par ladite moissonneuse ce trajet de conduite continu spécifique présentant la plus grande efficacité.

**10.** Procédé selon l'une quelconque des revendications 7-9, dans lequel lesdites informations associées à une trajectoire à suivre par ladite moissonneuse ne sont pas une trajectoire prédéterminée, et dans lequel ledit procédé implique l'étape consistant à fournir :

i) des coordonnées relatives à des limites du champ à récolter ; et

ii) des coordonnées relatives aux limites d'un ou plusieurs obstacles à éviter par ladite moissonneuse et lesdits deux véhicules de transport ou plus, s'il y en a, dans lequel lesdits un ou plusieurs obstacles sont situés à l'intérieur dudit champ ;

et dans lequel ledit procédé implique l'étape consistant à calculer, sur la base desdites coordonnées relatives à des limites du champ à récolter et sur la base desdites coordonnées relatives aux limites desdits un ou plusieurs obstacles, une trajectoire optimisée à suivre par ladite récolteuse ;

dans lequel ledit procédé implique facultativement d'effectuer les étapes suivantes consistant à :

a) approximer les coordonnées relatives aux limites dudit champ à récolter à un polygone de limite ; et dans lequel ledit procédé implique l'étape consistant à déterminer la trajectoire à suivre sur la base de cette approximation ;

b) approximer les coordonnées relatives aux limites de chacun desdits un ou plusieurs obstacles, s'il y en a, à des polygones d'obstacle respectifs ; et dans lequel ledit procédé implique l'étape consistant à déterminer la trajectoire à suivre sur la base de cette approximation ;

c) définir une ou plusieurs tournière situées immédiatement à l'intérieur dudit polygone de limite ;

d) en ce qui concerne chaque polygone d'obstacle, s'il y en a, définir une ou plusieurs tournières entourant ledit polygone d'obstacle ;

e) définir une zone de travail qui correspond à la zone à l'intérieur dudit polygone de limite à l'exclusion de la zone correspondant à de quelconques tournières et à l'exclusion de la zone correspondant à un quelconque polygone d'obstacle ;

f) en ce qui concerne l'orientation d'un ou plusieurs côtés de tournières, définir un réseau de rangées de travail parallèles situées à l'intérieur de ladite zone de travail ;

g) en ce qui concerne un ou plusieurs réseaux de rangées de travail parallèles définis à l'étape f), définir un réseau de trajets de conduite continus possibles en reliant des entités séparées par des segments arqués, dans lequel lesdites entités séparées sont des tournières ou des parties d'une tournière, et des rangées de travail, ou des parties d'une rangée de travail ; de manière à définir des trajets de conduite continus possibles, dans lequel chaque trajet de conduite couvre toutes les tournières et toutes les rangées de travail ;

h) en ce qui concerne chacun des trajets de conduite continus possibles définis à l'étape g), calculer un paramètre de coût associé, ledit paramètre de coût calculé étant représentatif de l'efficacité en suivant ce trajet de conduite continu spécifique ;

i) sélectionner comme trajectoire à suivre cette trajectoire de conduite continue spécifique présentant la plus grande efficacité.

**11.** Procédé selon l'une quelconque des revendications 7-10, dans lequel ledit procédé implique en outre l'étape consistant à calculer, en ce qui concerne ce véhicule de transport spécifique étant sélectionné pour transporter des cultures à partir de ladite moissonneuse, un itinéraire optimisé à suivre par ledit véhicule de transport lors d'une conduite depuis ladite moissonneuse. vers une zone de stockage des cultures transportées ;

dans lequel ledit procédé implique facultativement l'étape consistant à permettre uniquement à un véhicule de transport, lorsqu'il est situé dans ledit champ, de se déplacer le long de ces tournières et rangées de travail telles que définies par rapport à la moissonneuse, dans lequel lesdits tournières comprenant un certain nombre d'entités cohérentes de lignes droites ; et dans lequel lesdites rangées de travail comprennent un certain nombre d'entités cohérentes de lignes droites ;

dans lequel ledit procédé, lors d'un calcul des trajets possibles à suivre par ledit véhicule de transport lors d'un retour à ladite zone de stockage des cultures, sur la base dudit nombre d'entités cohérentes de lignes droites et représentant un tournière ; et en ce qui concerne lesdites entités cohérentes de lignes droites approximées et représentant des rangées de travail, implique l'étape consistant à définir un réseau de trajets de conduite continus possibles vers ladite zone de stockage pour les cultures en reliant des entités cohérentes distinctes de lignes droites par des segments arqués, dans lequel lesdites entités cohérentes distinctes de lignes droites sont des tournières, ou des parties d'une tournière, et des rangées de travail, ou des parties d'une rangée de travail ; de manière à définir des trajets de conduite continus possibles, dans lequel chaque trajet de conduite commence au niveau d'une position actuelle d'un véhicule de transport spécifique et se termine au niveau d'une zone de stockage pour les cultures ;

dans lequel ledit procédé, en ce qui concerne chacun desdits plusieurs trajets de conduite continus plus possibles, implique l'étape consistant à calculer un paramètre de coût associé, ledit paramètre de coût calculé étant représentatif de l'efficacité en faisant suivre ce trajet de conduite continu spécifique au véhicule de transport spécifique ;

dans lequel ledit procédé, en ce qui concerne chacun desdits plusieurs trajets de conduite continus possibles, implique l'étape consistant à sélectionner comme trajectoire à suivre par ledit véhicule de transport spécifique ce trajet de conduite continu présentant la plus haute efficacité.

12. Produit de programme informatique qui, lorsqu'il est chargé, fonctionne sur un système de support selon l'une quelconque des revendications 1-6, étant adapté pour exécuter le procédé selon l'une quelconque des revendications 7-11.

13. Moissonneuse pour récolter une culture agricole cultivée dans un champ agricole, dans laquelle ladite moissonneuse comprend un système de support selon l'une quelconque des revendications 1-6.

14. Flotte de récolte comprenant une moissonneuse selon la revendication 13 en combinaison avec deux véhicules de transport ou plus.

15. Utilisation d'un système de support selon l'une quelconque des revendications 1-6 ou d'une moissonneuse selon la revendication 13 ; ou d'une flotte de récolte selon la revendication 14 pour une opération de récolte pendant une récolte d'une culture agricole dans un champ agricole.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

a  b  c

Fig. 17

a  b  c

Fig. 18

Fig. 19

Fig. 20

Fig. 21a

Fig. 21b

Fig. 21c

Fig. 21d

Fig. 22

Fig. 23

Fig. 24

Fig. 25a

8400 kg/ha

10200 kg/ha

7800 kg/ha

Fig. 25b

50

6    6    6

2

4

6    6    2    4

Fig. 25c

50

6    6

8800 kg/ha

8500 kg/ha

7800 kg/ha

8300 kg/ha

7900 kg/ha

7850 kg/ha

7800 kg/ha

2

6

4

6    6    4    2

Fig. 25d

**EP 3 706 544 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011213531 A1